(19) Europäisches Patentamt / European Patent Office / Office européen des brevets

(11) **EP 4 733 742 A1**

(12) **EUROPEAN PATENT APPLICATION**


(43) Date of publication:
**29.04.2026 Bulletin 2026/18**

(21) Application number: **25209872.8**

(22) Date of filing: **20.10.2025**

(51) International Patent Classification (IPC):
***G01N 15/1429*** *(2024.01)* ***G01N 15/14*** *(2024.01)*

(52) Cooperative Patent Classification (CPC):
**G01N 15/1429; G01N 15/1459;** G01N 2015/1006; G01N 2015/1488

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **25.10.2024 US 202463712319 P**



(71) Applicant: **Becton, Dickinson and Company**
**Franklin Lakes, NJ 07417-1880 (US)**

(72) Inventor: **Mage, Peter Ludington**
**Franklin Lakes, 07417-1880 (US)**

(74) Representative: **Arnold & Siedsma**
**Bezuidenhoutseweg 57**
**2594 AC The Hague (NL)**


(54) **METHODS FOR ASSESSING COLLINEARITY OF MULTI-AUTOFLUORESCENCE SPECTRA OF A SAMPLE AND SYSTEMS FOR SAME**


(57) Aspects of the present disclosure include methods for assessing collinearity between autofluorescence spectra of particles in a sample. Methods according to the present disclosure include irradiating a sample having particles in a flow stream with a light source in a flow cytometer, detecting light from the irradiated particles with a light detection system having a photodetector, measuring autofluorescence spectra generated by the particles in the sample and assessing collinearity between the autofluorescence spectra generated by two or more different particles in the sample. Systems and non-transitory computer-readable storage media configured to carry out the subject methods are also provided.


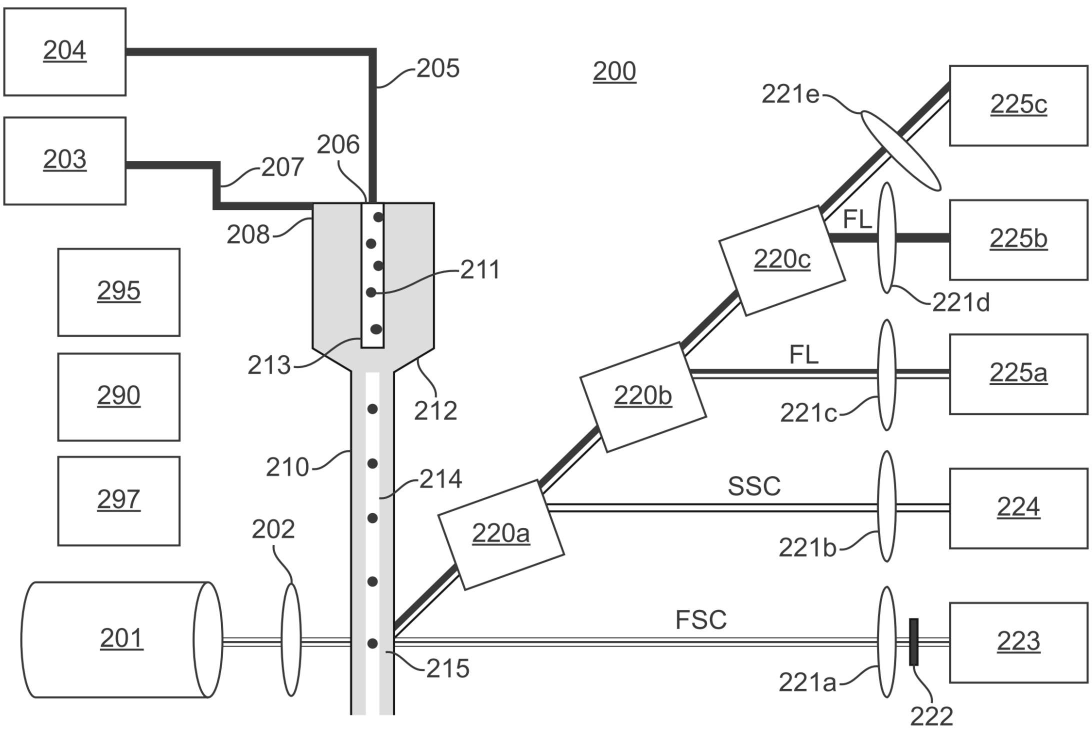


FIG. 2




Processed by Luminess, 75001 PARIS (FR)

## Description

## CROSS-REFERENCE TO RELATED APPLICATION

This application claims priority to the filing date of United States Provisional Patent Application Serial No. 63/712,319 filed October 25, 2024.

## INTRODUCTION

The characterization of analytes in biological fluids has become an important part of biological research, medical diagnoses and assessments of overall health and wellness of a patient. Detecting analytes in biological fluids, such as human blood or blood derived products, can provide results that may play a role in determining a treatment protocol of a patient having a variety of disease conditions.

Flow cytometry is a technique used to characterize and often times sort biological material, such as cells of a blood sample or particles of interest in another type of biological or chemical sample. A flow cytometer typically includes a sample reservoir for receiving a fluid sample, such as a blood sample, and a sheath reservoir containing a sheath fluid. The flow cytometer transports the particles (including cells) in the fluid sample as a cell stream to a flow cell, while also directing the sheath fluid to the flow cell. To characterize the components of the flow stream, the flow stream is irradiated with light. Variations in the materials in the flow stream, such as morphologies or the presence of fluorescent labels, may cause variations in the observed light and these variations allow for characterization and separation. To characterize the components in the flow stream, light must impinge on the flow stream and be collected. Light sources in flow cytometers can vary and may include one or more broad spectrum lamps, light emitting diodes as well as single wavelength lasers. The light source is aligned with the flow stream and an optical response from the illuminated particles is collected and quantified.

Isolation of biological particles has been achieved by adding a sorting or collection capability to flow cytometers. Particles in a segregated stream, detected as having one or more desired characteristics, are individually isolated from the sample stream by mechanical or electrical removal. A common flow sorting technique utilizes drop sorting in which a fluid stream containing linearly segregated particles is broken into drops. The drops containing particles of interest are electrically charged and deflected into a collection tube by passage through an electric field. Typically, the linearly segregated particles in the stream are characterized as they pass through an observation point situated just below the nozzle tip. Once a particle is identified as meeting one or more desired criteria, the time at which it will reach the drop break-off point and break from the stream in a drop can be predicted. Ideally, a brief charge is applied to the fluid stream just before the drop containing the selected particle breaks from the stream and then grounded immediately after the drop breaks off. The drop to be sorted maintains an electrical charge as it breaks off from the fluid stream, and all other drops are left uncharged.

Biological cells contain endogenous compounds that fluoresce, leading to autofluorescence in the absence of added fluorochromes or stains. A given cell's autofluorescence spectrum and intensity will depend on the abundances of different autofluorescent compounds (such as metabolites) within the cell. Because different cell types may have different relative abundances of these endogenous autofluorescent compounds, the overall autofluorescence of a cell has a characteristic spectrum for different cell types and may vary depending on a number of biological and experimental factors including cell treatment, cell death, cell activation, cell stimulation, etc. Therefore, heterogeneous samples containing multiple cell types, or comparing cell types under multiple treatment conditions, may therefore contain a range of autofluorescence spectra on different cells.

## SUMMARY

The inventors realized that autofluorescence from particles irradiated in a flow stream of a flow cytometer can be modeled as an additional fluorochrome or set of fluorochromes in spectral unmixing. Without the inclusion of autofluorescence in spectral unmixing of fluorescence from particles in the sample, the signal arising from autofluorescence is not directly accounted for, and results in artifacts in the unmixed data such as artificially high background signal for fluorochromes with similar spectra to the autofluorescence. The autofluorescence can be the source of error in the accuracy of particle parameter measurements when not accounted for in the fluorescence measured from particles of a sample. For example, predictive metrics such as similarity and condition number alone are not sufficient to predict the correct set of autofluorescence spectra to be used in spectral unmixing. In particular, autofluorescence can cause a spectral matrix to become ill-conditioned by excessively similar autofluorescence spectra, which negatively impacts the unmixed variance of other fluorochromes in a panel. In particular, this can cause inconsistency in unmixed data resulting in unreliable data analysis, inaccurate particle identification and sorting. In addition, when autofluorescence is not adequately accounted for in spectral unmixing of fluorescence data signals in a flow cytometry experiment, one or more data signals may be overestimated causing inaccurate and inconsistent estimations of fluorochrome abundance in a sample.

The present disclosure address the above, among other problems. By including autofluorescence spectra in the unmixing process, the contribution of autofluorescence when spectral unmixing (i.e., the contribution of autofluorescence to other fluorochrome unmixed signal) is appropriately extracted. The inclusion of autofluorescence spectra as described herein provides for accurate fluorescence measurements, parameter calculation and imaging in multi-color (i.e., a sample having a plurality of fluorochrome labels) spectral flow cytometry panels. The present disclosure also provides for accurate spectral unmixing in highly autofluorescent sample types (such as digested tissue or tumor samples) and samples with high autofluorescence heterogeneity.

The present disclosure provides for accurate characterization of autofluorescence contribution to spectral data signals and does not require repetitive, laborious iterative and empirical examination of spectral unmixing performance that requires repeated user judgment and analysis. The method described herein can provide for assessing (and removing where desired) autofluorescence spectra in fluorochrome panels having 2 fluorochromes or more, such as 3 fluorochromes or more, such as 4 fluorochromes or more, such as 5 fluorochromes or more, such as 6 fluorochromes or more, such as 7 fluorochromes or more, such as 8 fluorochromes or more, such as 9 fluorochromes or more, such as 10 fluorochromes or more, such as 15 fluorochromes or more, such as 25 fluorochromes or more, such as 50 fluorochromes or more, such as 75 fluorochromes or more and including fluorochrome panels having 100 fluorochromes or more. In addition, the present disclosure provides for accurately assessing and optimizing the applied autofluorescence contribution in fluorochrome panels which exhibit large autofluorescence heterogeneity, such as where the autofluorescence heterogeneity varies by 1% or more, such as by 5% or more, such as by 10% or more, such as by 25% or more, such as by 50% or more, such as by 75% or more, such as by 90% or more, such as by 95% or more, such as by 97% or more, such as by 99% or more and including by 99.9% or more.

An aspect of the present disclosure includes a method for assessing collinearity between autofluorescence spectra of particles in a sample. A Method according to the present disclosure include irradiating a sample having particles in a flow stream with a light source in a flow cytometer, detecting light from the irradiated particles with a light detection system having a photodetector, measuring autofluorescence spectra generated by the particles in the sample and assessing collinearity between the autofluorescence spectra generated by two or more different particles in the sample. Systems and non-transitory computer-readable storage media configured to carry out the subject methods are also provided.

The sample may include a plurality of different particles and methods include measuring the autofluorescence spectra generated by each of the different particles in the sample. The particles may include one or more added fluorochromes, such as 2 or more and including 3 or more different added fluorochromes, such as 4 fluorochromes or more, such as 5 fluorochromes or more, such as 6 fluorochromes or more, such as 7 fluorochromes or more, such as 8 fluorochromes or more, such as 9 fluorochromes or more, such as 10 fluorochromes or more, such as 15 fluorochromes or more, such as 25 fluorochromes or more, such as 50 fluorochromes or more, such as 75 fluorochromes or more and including fluorochrome panels having 100 fluorochromes or more.

The method may include measuring autofluorescence from a sample of unlabeled particles. The method may include measuring autofluorescence from a sample of single-stained control particles. The method can include measuring autofluorescence from a sample of particles having a plurality of fluorochromes. A population of autofluorescence spectra may be selected for assessing collinearity. Selecting the population of autofluorescence spectra may include generating a scatter plot of fluorescence parameters for particles of the sample and gating one or more populations on the scatter plot based on median fluorescence intensity measured for each of the particles.

Selecting the population of autofluorescence spectra may include applying an unsupervised clustering algorithm to identify the particle populations. The unsupervised clustering algorithm may include one or more of self-organizing maps clustering, K-means clustering, hierarchical clustering, density-based spatial clustering of applications with noise (DBSCAN), Gaussian mixture clustering, spectral clustering, MeanShift clustering, hierarchical and density-based clustering, apriori algorithm, fuzzy c-means clustering, centroid based clustering and Birch algorithm. The unsupervised clustering algorithm can be a self-organizing maps algorithm (e.g., FlowSOM).

Selecting the population of autofluorescence spectra may include using a statistical analysis algorithm. The statistical analysis algorithm may include one or more of principal component analysis (PCA), singular value decomposition (SVD), factor analysis (FA), partial least squares (PLS), correspondence analysis (CA), multiple correspondence analysis (MCA), hierarchical cluster analysis (HCA), linear discriminant analysis and matrix factorization. The statistical analysis algorithm may include dimensionality reduction. The autofluorescence spectra of the particles may be determined based on the median fluorescence intensity (MFI) of each particle population.

The method may include assessing the collinearity between the autofluorescence spectrum of one or more of the particles and the fluorescence spectrum of one or more fluorochromes. The collinearity between each autofluorescence spectra generated by the particles in the sample may be assessed between each of the fluorochromes. Data generated by the flow cytometer may be spectrally unmixed flow cytometer data. The flow cytometer data may be compensated flow cytometer data. The variance may include noise in the flow cytometer data.

The method may include evaluating unmixing performance of two or more autofluorescence spectra generated by the particles in the sample. Evaluating unmixing performance may include generating a spectral matrix associated with fluorescence spectra of the one or more fluorochromes and one or more autofluorescence spectra generated by the particles in the sample, applying the spectral matrix to unmix the fluorescence spectra generated by unstained controls, single-stained controls, stained sample or any combination thereof and calculating one or more of unmixing bias and unmixing variance. Calculating the unmixing bias may include measuring the presence of false-positive unmixed fluorochrome signal associated with the autofluorescence spectra. The method may include determining that false-positive unmixed fluorochrome signal associated with the autofluorescence spectra is absent in unmixed fluorochrome channels in all generated particle populations of the sample. Calculating the unmixing variance may include measuring unmixing-dependent spread in unmixed fluorochrome signals. The method may include identifying the autofluorescence spectra generated by the particles in the sample that minimizes unmixing bias.

Assessing collinearity may include generating a spectral matrix associated with the autofluorescence generated by the particles in the sample, calculating an inverse matrix from the generated spectral matrix and identifying the autofluorescence spectra that is associated with variance in data generated by the flow cytometer using the autofluorescence spectra. The method may include identifying the autofluorescence spectra that contributes to variance in the flow cytometer data. The method may include identifying the autofluorescence spectra that are affected by variance in the flow cytometer data. The inverse matrix may be a pseudoinverse matrix. The pseudoinverse matrix may be a Moore-Penrose pseudoinverse matrix. The inverse matrix may be a gramian inverse matrix. The inverse matrix may be calculated according to the following equation:

$$G = (M^T M)^{-1}$$

where:

G is the gramian inverse matrix;
M is the spectral matrix; and
$M^T$ is the transpose of the spectral matrix.

Analyzing the calculated inverse matrix may include deriving a quantitative metric from the inverse matrix. The quantitative metric may be a matrix norm. The quantitative metric may be a vector norm.

The method may include identifying the autofluorescence spectra generated by the particles in the sample that minimizes generated data variance. Identifying the autofluorescence spectra which minimize generated data variance may comprise identifying the autofluorescence spectra which exhibit the greatest spectral matrix conditioning. The method may include identifying the autofluorescence spectra generated by the particles in the sample that minimizes unmixing bias and minimizes generated data variance.

The method may include removing the autofluorescence contribution from the generated flow cytometer data. The method may include iteratively identifying the autofluorescence spectra generated by the particles in the sample that minimizes generated data variance. A visualization of the assessed collinearity of the autofluorescence spectra in the generated data is preferably produced, such as on a display. The visualization may highlight the autofluorescence spectra that would be associated with variance in the generated data. The visualization may include a panel hotspot matrix. The visualization may include a diagonal visualization of the panel hotspot matrix. The visualization may include a spread correlation matrix. The diagonal values of the spectral matrix's correlation matrix may include variance inflation factors (also referred to herein as spreading inflation factors, SIFs). The method may include measuring spreading inflation factors (SIFs) from the hotspot matrix. The measured spreading inflation factors may be assessed to determine whether they are confined to the autofluorescence spectra.

Assessing the collinearity between the autofluorescence spectra may include evaluating variance decomposition proportion (VDP).The present disclosure may include assessing by variance decomposition proportion that the measured spreading inflation factors are confined to the autofluorescence spectra based on the assessed collinearity of the autofluorescence spectra. Evaluating variance decomposition proportion may include singular value decomposition (SVD) to identify collinear sets of spectra. A condition index may be calculated for each singular value generated by the singular value decomposition. The condition index may be calculated as a ratio of the largest calculated singular value to each individually calculated singular value. The method may include identifying autofluorescence spectra that have a variance decomposition proportion for each condition index of greater than 0.3. The method may include identifying autofluorescence spectra that have a condition index of greater than 15. The method can include identifying the autofluorescence spectra that have a variance decomposition proportion for each condition index of greater than 0.3 and a condition index of greater than 15 as being collinear.

The method may include removing the autofluorescence spectra which are determined to be collinear. The method may further include removing the autofluorescence spectra that contribute to the greatest amount of variance in the flow cytometer data. The method may include determining the optimal combination of autofluorescence spectra to use when analyzing the flow cytometry data. The method may include removing the fluorescence spectra of fluorochromes which contribute to variance in the flow cytometer data based on the calculated collinearity of the fluorochrome fluorescence spectra with one or more of the autofluorescence spectra. The method may include removing the autofluorescence spectra that contributes to the greatest amount of unmixing bias in spectral unmixing of the flow cytometer data.

Light can be detected in a plurality of photodetector channels. The detected light may be scattered light, such as forward-scattered light, side-scattered light or a combination thereof. The method may include irradiating the sample with a light source. The light source may include a laser, such as a plurality of lasers.

The present disclosure also relates to a flow cytometer system for practicing the subject method, e.g., assessing collinearity of autofluorescence spectra of a sample. The system preferably includes a light source configured to irradiate a sample having particles in a flow stream, a light detection system having a photodetector for detecting light from the particles in the sample and a process having memory operably coupled to the processor wherein the memory comprises instructions stored thereon, which when executed by the processor, cause the processor to measure autofluorescence spectra generated by the particles in the sample and assess collinearity between the autofluorescence spectra generated by two or more different particles in the sample.

The sample may include a plurality of different particles and the memory includes instructions for measuring the autofluorescence spectra generated by each of the different particles in the sample. Where the particles include one or more fluorochromes, the memory may include instructions for assessing the collinearity between the autofluorescence spectrum of one or more of the particles and the fluorescence spectrum of one or more fluorochromes.

The memory may include instructions for measuring autofluorescence from a sample of unlabeled particles. The memory may include instructions for measuring autofluorescence from a sample of single-stained control particles. The memory may include instructions for measuring autofluorescence from a sample of particles having a plurality of fluorochromes. The memory may include instructions for selecting a population of autofluorescence spectra to assess collinearity. The memory may include instructions for selecting the population of autofluorescence spectra by generating a scatter plot of fluorescence parameters for particles of the sample and gating one or more populations on the scatter plot based on median fluorescence intensity measured for each of the particles. The memory may include instructions for selecting the population of autofluorescence spectra by applying an unsupervised clustering algorithm to identify the particle populations. The unsupervised clustering algorithm may include one or more of self-organizing maps clustering, K-means clustering, hierarchical clustering, density-based spatial clustering of applications with noise (DBSCAN), Gaussian mixture clustering, spectral clustering, MeanShift clustering, hierarchical and density-based clustering, apriori algorithm, fuzzy c-means clustering, centroid based clustering and Birch algorithm. The unsupervised clustering algorithm may be a self-organizing maps algorithm (e.g., FlowSOM).

The memory may include instructions for selecting the population of autofluorescence spectra using a statistical analysis algorithm. The statistical analysis algorithm may include one or more of principal component analysis (PCA), singular value decomposition (SVD), factor analysis (FA), partial least squares (PLS), correspondence analysis (CA), multiple correspondence analysis (MCA), hierarchical cluster analysis (HCA), linear discriminant analysis and matrix factorization. The statistical analysis algorithm may include dimensionality reduction. The memory may include instructions for determining the autofluorescence spectra of the particles based on the median fluorescence intensity (MFI) of each particle population.

The memory may include instructions for evaluating unmixing performance of two or more autofluorescence spectra generated by the particles in the sample. The memory may include instructions for evaluating unmixing performance by generating a spectral matrix associated with fluorescence spectra of the one or more fluorochromes and one or more autofluorescence spectra generated by the particles in the sample, applying the spectral matrix to unmix the fluorescence spectra generated by unstained controls, single-stained controls, stained sample or any combination thereof and calculating one or more of unmixing bias and unmixing variance. The memory may include instructions for calculating the unmixing bias by measuring the presence of false-positive unmixed fluorochrome signal associated with the autofluorescence spectra. The memory may include instructions for determining that false-positive unmixed fluorochrome signal associated with the autofluorescence spectra is absent in unmixed fluorochrome channels in all generated particle populations of the sample. The memory may include instructions for calculating the unmixing variance by measuring unmixing-dependent spread in unmixed fluorochrome signals. The memory may include instructions for identifying the autofluorescence spectra generated by the particles in the sample that minimizes unmixing bias.

The memory may include instructions for assessing the collinearity by: generating a spectral matrix associated with the autofluorescence generated by the particles in the sample, calculating an inverse matrix from the generated spectral matrix and identifying the autofluorescence spectra that is associated with variance in data generated by the flow cytometer using the autofluorescence spectra.

The memory may include instructions for identifying the autofluorescence spectra that contributes to variance in the flow cytometer data. The memory may include instructions for identifying the autofluorescence spectra that are affected by variance in the flow cytometer data. The inverse matrix may be a pseudoinverse matrix. The pseudoinverse matrix may be a Moore-Penrose pseudoinverse matrix. The inverse matrix may be a gramian inverse matrix. The inverse matrix may be calculated according to the following equation:

$$G = (M^T M)^{-1}$$

where:

G is the gramian inverse matrix;
M is the spectral matrix; and
$M^T$ is the transpose of the spectral matrix.

The memory may include instructions for analyzing the calculated inverse matrix by deriving a quantitative metric from the inverse matrix. The quantitative metric may be a matrix norm. The quantitative metric may be a vector norm. The memory may include instructions for identifying the autofluorescence spectra generated by the particles in the sample that minimizes generated data variance. The memory may include instructions for identifying the autofluorescence spectra which minimizes generated data variance by identifying the autofluorescence spectra which exhibit the greatest spectral matrix conditioning. The memory may include instructions for identifying the autofluorescence spectra generated by the particles in the sample that minimizes unmixing bias and minimizes generated data variance.

The memory may include instructions for removing the autofluorescence contribution from the generated flow cytometer data. The memory may include instructions for iteratively identifying the autofluorescence spectra generated by the particles in the sample that minimizes generated data variance.

The flow cytometer system preferably includes a display for visualizing the assessed collinearity of the autofluorescence spectra. The memory may comprise instructions for producing on a display a visualization of the assessed collinearity of the autofluorescence spectra in the generated data. The visualization preferably highlights the autofluorescence spectra that would be associated with variance in the generated data. The visualization may include a panel hotspot matrix. The visualization may include a diagonal visualization of the panel hotspot matrix. The visualization may include a spread correlation matrix. The diagonal values of the spectral matrix's correlation matrix may include variance inflation factors (also referred to herein as spreading inflation factors, SIFs) The memory may include instructions for measuring spreading inflation factors (SIFs) from the hotspot matrix. The memory may include instructions for assessing the measured spreading inflation factors to determine whether they are confined to the autofluorescence spectra.

The memory may include instructions which when executed by the process cause the processor to assess the collinearity between the autofluorescence spectra by evaluating variance decomposition proportion (VDP). The present disclosure includes instructions for assessing by variance decomposition proportion that the measured spreading inflation factors are confine to the autofluorescence spectra based on the assessed collinearity of the autofluorescence spectra. The memory preferably includes instructions for evaluating variance decomposition proportion by singular value decomposition (SVD) to identify collinear sets of spectra. The memory may include instructions for calculating a condition index for each singular value generated by the singular value decomposition. The memory may include instructions for calculating the condition index as a ratio of the largest calculated singular value to each individually calculated singular value. The memory may include instructions for identifying autofluorescence spectra that have a variance decomposition proportion for each condition index of greater than 0.3. The memory may include instructions for identifying autofluorescence spectra that have a condition index of greater than 15. The memory may include instructions for identifying the autofluorescence spectra that have a variance decomposition proportion for each condition index of greater than 0.3 and a condition index of greater than 15 as being collinear.

The memory preferably includes instructions for removing the autofluorescence spectra which are determined to be collinear. The memory may include instructions for removing the autofluorescence spectra that contribute to the greatest amount of variance in the flow cytometer data. The memory may include instructions for determining the optimal combination of autofluorescence spectra to use when analyzing the flow cytometry data. The memory may include instructions for removing the fluorescence spectra of fluorochromes which contribute to variance in the flow cytometer data based on the calculated collinearity of the fluorochrome fluorescence spectra with one or more of the autofluorescence spectra. The memory may include instructions for removing the autofluorescence spectra that contributes to the greatest amount of unmixing bias in spectral unmixing of the flow cytometer data.

The present disclosure also includes non-transitory computer readable storage medium, such as to practice the computer implemented method described herein. The non-transitory computer readable storage medium includes algorithm for irradiating a sample comprising particles in a flow stream with a light source in a flow cytometer, algorithm for detecting light from the irradiated particles with a light detection system comprising a photodetector, algorithm for measuring autofluorescence spectra generated by the particles in the sample and algorithm for assessing collinearity between the autofluorescence spectra generated by two or more different particles in the sample.

The sample can have a plurality of different particles and the non-transitory computer readable storage medium includes algorithm for measuring the autofluorescence spectra generated by each of the different particles in the sample. The particles of the sample may have one or more fluorochromes and the non-transitory computer readable storage medium includes algorithm for assessing the collinearity between the autofluorescence spectrum of one or more of the particles and the fluorescence spectrum of one or more fluorochromes.

The non-transitory computer readable storage medium includes algorithm for measuring autofluorescence from a sample of unlabeled particles. The non-transitory computer readable storage medium may include algorithm for measuring autofluorescence from a sample of single-stained control particles. The non-transitory computer readable storage medium may include algorithm for measuring autofluorescence from a sample of particles having a plurality of fluorochromes. The non-transitory computer readable storage medium may include algorithm for selecting a population of autofluorescence spectra to assess collinearity. The non-transitory computer readable storage medium may include algorithm for selecting the population of autofluorescence spectra by generating a scatter plot of fluorescence parameters for particles of the sample and gating one or more populations on the scatter plot based on median fluorescence intensity measured for each of the particles. The non-transitory computer readable storage medium may include algorithm for selecting the population of autofluorescence spectra by applying an unsupervised clustering algorithm to identify the particle populations. The unsupervised clustering algorithm may include one or more of self-organizing maps clustering, K-means clustering, hierarchical clustering, density-based spatial clustering of applications with noise (DBSCAN), Gaussian mixture clustering, spectral clustering, MeanShift clustering, hierarchical and density-based clustering, apriori algorithm, fuzzy c-means clustering, centroid based clustering and Birch algorithm. The unsupervised clustering algorithm may be a self-organizing maps algorithm (e.g., FlowSOM).

The non-transitory computer readable storage medium may include algorithm for selecting the population of autofluorescence spectra using a statistical analysis algorithm. The statistical analysis algorithm may include one or more of principal component analysis (PCA), singular value decomposition (SVD), factor analysis (FA), partial least squares (PLS), correspondence analysis (CA), multiple correspondence analysis (MCA), hierarchical cluster analysis (HCA), linear discriminant analysis and matrix factorization. The statistical analysis algorithm includes dimensionality reduction. The non-transitory computer readable storage medium may include algorithm for determining the autofluorescence spectra of the particles based on the median fluorescence intensity (MFI) of each particle population.

The non-transitory computer readable storage medium may include algorithm for evaluating unmixing performance of two or more autofluorescence spectra generated by the particles in the sample. The non-transitory computer readable storage medium may include algorithm for evaluating unmixing performance by generating a spectral matrix associated with fluorescence spectra of the one or more fluorochromes and one or more autofluorescence spectra generated by the particles in the sample, applying the spectral matrix to unmix the fluorescence spectra generated by unstained controls, single-stained controls, stained sample or any combination thereof and calculating one or more of unmixing bias and unmixing variance. The non-transitory computer readable storage medium may include algorithm for calculating the unmixing bias by measuring the presence of false-positive unmixed fluorochrome signal associated with the autofluorescence spectra. The non-transitory computer readable storage medium may include algorithm for determining that false-positive unmixed fluorochrome signal associated with the autofluorescence spectra is absent in unmixed fluorochrome channels in all generated particle populations of the sample. The non-transitory computer readable storage medium may include algorithm for calculating the unmixing variance by measuring unmixing-dependent spread in unmixed fluorochrome signals. The non-transitory computer readable storage medium may include algorithm for identifying the autofluorescence spectra generated by the particles in the sample that minimizes unmixing bias.

The non-transitory computer readable storage medium may include algorithm for assessing collinearity, such as having algorithm for generating a spectral matrix associated with the autofluorescence generated by the particles in the sample, algorithm for calculating an inverse matrix from the generated spectral matrix and algorithm for identifying the autofluorescence spectra that is associated with variance in data generated by the flow cytometer using the autofluorescence spectra. The non-transitory computer readable storage medium may include algorithm for identifying the autofluorescence spectra that contributes to variance in the flow cytometer data.

The non-transitory computer readable storage medium may include algorithm for identifying the autofluorescence spectra that are affected by variance in the flow cytometer data. The non-transitory computer readable storage medium may include algorithm for identifying the autofluorescence spectra that contributes to variance in the flow cytometer data. The non-transitory computer readable storage medium may include algorithm for identifying the autofluorescence spectra that are affected by variance in the flow cytometer data. The inverse matrix may be a pseudoinverse matrix. The pseudoinverse matrix may be a Moore-Penrose pseudoinverse matrix. The inverse matrix may be a gramian inverse matrix. The inverse matrix may be calculated according to the following equation:

$$G = (M^T M)^{-1}$$

where:

G is the gramian inverse matrix;
M is the spectral matrix; and
$M^T$ is the transpose of the spectral matrix.

The non-transitory computer readable storage medium may include algorithm for analyzing the calculated inverse matrix by deriving a quantitative metric from the inverse matrix. The quantitative metric may be a matrix norm. The quantitative metric may be a vector norm. The non-transitory computer readable storage medium may include algorithm for identifying the autofluorescence spectra generated by the particles in the sample that minimizes generated data variance. The non-transitory computer readable storage medium may include algorithm for identifying the autofluorescence spectra which minimizes generated data variance by identifying the autofluorescence spectra which exhibit the greatest spectral matrix conditioning. The non-transitory computer readable storage medium may include algorithm for identifying the autofluorescence spectra generated by the particles in the sample that minimizes unmixing bias and minimizes generated data variance.

The non-transitory computer readable storage medium may include algorithm for removing the autofluorescence contribution from the generated flow cytometer data. The non-transitory computer readable storage medium may include algorithm for iteratively identifying the autofluorescence spectra generated by the particles in the sample that minimizes generated data variance.

The flow cytometer system may include a display for visualizing the assessed collinearity of the autofluorescence spectra. The non-transitory computer readable storage medium may include algorithm for producing on a display a visualization of the assessed collinearity of the autofluorescence spectra in the generated data. The visualization preferably highlights the autofluorescence spectra that would be associated with variance in the generated data. The visualization may include a panel hotspot matrix. The visualization may include a diagonal visualization of the panel hotspot matrix. The visualization may include a spread correlation matrix. The diagonal values of the spectral matrix's correlation matrix may include variance inflation factors (also referred to herein as spreading inflation factors, SIFs) The non-transitory computer readable storage medium may include algorithm for measuring spreading inflation factors (SIFs) from the hotspot matrix. The non-transitory computer readable storage medium may include algorithm for assessing the measured spreading inflation factors to determine whether they are confined to the autofluorescence spectra.

The non-transitory computer readable storage medium may include algorithm for assessing the collinearity between the autofluorescence spectra by evaluating variance decomposition proportion (VDP). The non-transitory computer readable storage medium may include algorithm for assessing by variance decomposition proportion that the measured spreading inflation factors are confined to the autofluorescence spectra based on the assessed collinearity of the autofluorescence spectra. The non-transitory computer readable storage medium may include algorithm for evaluating variance decomposition proportion by singular value decomposition (SVD) to identify collinear sets of spectra. The non-transitory computer readable storage medium may include algorithm for calculating a condition index for each singular value generated by the singular value decomposition. The non-transitory computer readable storage medium may include algorithm for calculating the condition index as a ratio of the largest calculated singular value to each individually calculated singular value. The non-transitory computer readable storage medium may include algorithm for identifying autofluorescence spectra that have a variance decomposition proportion for each condition index of greater than 0.3. The non-transitory computer readable storage medium may include algorithm for identifying autofluorescence spectra that have a condition index of greater than 15. The non-transitory computer readable storage medium may include algorithm for identifying the autofluorescence spectra that have a variance decomposition proportion for each condition index of greater than 0.3 and a condition index of greater than 15 as being collinear.

The non-transitory computer readable storage medium may include algorithm for removing the autofluorescence spectra which are determined to be collinear. The non-transitory computer readable storage medium may include algorithm for removing the autofluorescence spectra that contribute to the greatest amount of variance in the flow cytometer data. The non-transitory computer readable storage medium may include algorithm for determining the optimal combination of autofluorescence spectra to use when analyzing the flow cytometry data. The non-transitory computer readable storage medium may include algorithm for removing the fluorescence spectra of fluorochromes which contribute to variance in the flow cytometer data based on the calculated collinearity of the fluorochrome fluorescence spectra with one or more of the autofluorescence spectra. The non-transitory computer readable storage medium may include algorithm for removing the autofluorescence spectra that contributes to the greatest amount of unmixing bias in spectral unmixing of the flow cytometer data.

## BRIEF DESCRIPTION OF THE FIGURES

The disclosure may be best understood from the following detailed description when read in conjunction with the accompanying drawings. Included in the drawings are the following figures:

**FIG.** 1A depicts a flow chart for assessing collinearity of autofluorescence spectra from particles in a sample in a flow stream according to the present disclosure.
**FIG. 1B** depicts a flow chart for a workflow for determining an optimized combination of autofluorescence spectra for using in a spectral unmixing matrix according to the present disclosure. **FIGS. 1C-1K** depict an experiment for assessing autofluorescence collinearity according to the present disclosure. **FIG. 1C** depicts acquiring two unstained samples that include unstained unstimulated PBMCs and unstained stimulated PBMCs. **FIG. 1D** depicts comparing different autofluorescence (AF) populations. **FIG. 1E** depicts evaluating unmixing performance of different spectral unmixing matrix with no autofluorescence spectra. **FIG. 1F** depicts evaluating unmixing performance of different autofluorescence matrix options with single autofluorescence spectrum but two different versions. **FIG. 1G** depicts evaluating unmixing performance of two autofluorescence spectra selection. **FIG. 1H** depicts evaluating unmixing performance of a three autofluorescence spectra selection. **FIG. 1I** depicts evaluating unmixing performance of a four autofluorescence spectra selection. **FIG. 1J** depicts the evaluation of unmixing performance using a hotspot matrix.
**FIG. 1K** depicts the evaluation of unmixing performance using a variance decomposition proportion (VDP) analysis.
**FIG. 2** presents a flow cytometric system according to the present disclosure.
**FIG. 3** depicts an image-enabled particle sorter according to the present disclosure.
**FIG. 4** depicts a functional block diagram of a particle analysis system according to the present disclosure.
**FIG. 5** depicts a depicts a functional block diagram for one example of a control system according to the present disclosure.
**FIGS. 6A-6B** depict schematic drawings of a particle sorter system according to the present disclosure.
**FIG. 7** depicts aspects of a computer-controlled system according to the present disclosure.

## DETAILED DESCRIPTION

Aspects of the present disclosure include methods for assessing collinearity between autofluorescence spectra of particles in a sample. Methods according to the present disclosure include irradiating a sample having particles in a flow stream with a light source in a flow cytometer, detecting light from the irradiated particles with a light detection system having a photodetector, measuring autofluorescence spectra generated by the particles in the sample and assessing collinearity between the autofluorescence spectra generated by two or more different particles in the sample. Systems and non-transitory computer-readable storage media configured to carry out the subject methods are also provided.

Where a range of values is provided, it is understood that each intervening value, to the tenth of the unit of the lower limit unless the context clearly dictates otherwise, between the upper and lower limit of that range and any other stated or intervening value in that stated range, is encompassed within the disclosure. The upper and lower limits of these smaller ranges may independently be included in the smaller ranges and are also encompassed within the disclosure, subject to any specifically excluded limit in the stated range. Where the stated range includes one or both of the limits, ranges excluding either or both of those included limits are also included in the disclosure.

Certain ranges are presented herein with numerical values being preceded by the term "about." The term "about" is used herein to provide literal support for the exact number that it precedes, as well as a number that is near to or approximately the number that the term precedes. In determining whether a number is near to or approximately a specifically recited number, the near or approximating unrecited number may be a number which, in the context in which it is presented, provides the substantial equivalent of the specifically recited number.

Unless defined otherwise, all technical and scientific terms used herein have the same meaning as commonly understood by one of ordinary skill in the art to which this disclosure belongs. Although any methods and materials similar or equivalent to those described herein can also be used in the practice or testing of the present disclosure, representative illustrative methods and materials are now described.

All publications and patents cited in this specification are herein incorporated by reference as if each individual publication or patent were specifically and individually indicated to be incorporated by reference and are incorporated herein by reference to disclose and describe the methods and/or materials in connection with which the publications are cited. The citation of any publication is for its disclosure prior to the filing date and should not be construed as an admission that the present disclosure is not entitled to antedate such publication by virtue of prior disclosure. Further, the dates of publication provided may be different from the actual publication dates which may need to be independently confirmed.

It is noted that, as used herein and in the appended claims, the singular forms "a", "an", and "the" include plural referents unless the context clearly dictates otherwise. It is further noted that the claims may be drafted to exclude any optional element. As such, this statement is intended to serve as antecedent basis for use of such exclusive terminology as "solely," "only" and the like in connection with the recitation of claim elements, or use of a "negative" limitation. While the system and method has or will be described for the sake of grammatical fluidity with functional explanations, it is to be expressly understood that the claims, are not to be construed as necessarily limited in any way by the construction of "means" or "steps" limitations, but are to be accorded the full scope of the meaning and equivalents of the definition provided by the claims under the judicial doctrine of equivalents

## METHODS FOR ASSESSING COLLINEARITY BETWEEN AUTOFLUORESCENCE SPECTRA OF PARTICLES IN A SAMPLE

An aspect of the present disclosure includes a method for assessing collinearity between autofluorescence spectra of particles in a sample. Assessing the collinearity of the autofluorescence spectra of particles in the sample can provide for increases in the sensitivity and accuracy of flow cytometer data. The assessed collinearity can provide for more accurate spectral unmixing to separate contributions between spectra of different components of the detected light, such as where spectral unmixing effectiveness is increased by 5% or more, such as by 10% or more, such as by 25% or more, such as by 50% or more, such as by 75% or more, such as by 90% or more and including by 95% or more. Autofluorescence can be modeled as an additional fluorochrome or set of fluorochromes in spectral unmixing such that autofluorescence from particles in the sample can be directly accounted for. Accounting for autofluorescence can result in the reduction or elimination of artifacts in spectrally unmixed data. Accounting for contribution by autofluorescence may provide for reducing or eliminating artificially high background signal for fluorochromes with similar spectra to autofluorescence. By including autofluorescence spectra in the unmixing process, the contribution of autofluorescence to other fluorochromes' unmixed signal is properly extracted. Correct inclusion of autofluorescence spectra may provide for accurate results in multicolor spectral flow cytometry panels, especially in highly autofluorescent sample types (such as digested tissue or tumor samples) and samples with high autofluorescence heterogeneity.

The method may include minimizing collinearity of the autofluorescence spectra used in spectral unmixing of the generated flow cytometer data. This minimization of autofluorescence spectra collinearity can provide for reducing generated data variance in the spectrally unmixed data, such as by 5% or more, such as by 10% or more, such as by 25% or more, such as by 50% or more, such as by 75% or more, such as by 90% or more and including by 95% or more.

The autofluorescence spectra collinearity of the particles in the sample may be assessed. The collinearity can describe the effect where combinations of spectra (between two different autofluorescence spectra or between autofluorescence spectra and fluorescence spectra from a fluorochrome) in a matrix become nearly linearly dependent on each other, leading to poor matrix conditioning and subsequent amplification of unmixed data variance. The method described herein can provide for an approach to evaluate and select optimal sets of autofluorescence spectra for unmixing based on quantitative analysis of spectra collinearity.

The method may include the use of hotspot analysis (the evaluation of a hotspot matrix that is calculated as the inverse of the spectral matrix's correlation matrix, as described in greater detail below). The diagonal values of the spectral matrix's correlation matrix may include variance inflation factors (also referred to herein as spreading inflation factors) which describe the extent to which a fluorescence spectrum's unmixed variance would be amplified in the context of a specific unmixing matrix as a result of collinearity. Large off-diagonal entries in the hotspot matrix indicate which combinations of spectra are involved in collinear relationships. The off-diagonal entries can be used to predict the degree of covariance between pairs of unmixed fluorescence. The expected impact of a given selection of autofluorescence spectra on the variances of other fluorochromes. The method may include identifying collinear sets of autofluorescence spectra. The method may include evaluating the quantitative impact on variance in the unmixed data in response to the collinear sets of autofluorescence spectra. The method may include identifying a set of autofluorescence spectra for use in spectral unmixing of flow cytometer data.

As described in greater detail below, the method may include the use of variance decomposition proportion (VDP) analysis and condition indexes (CI) to identify collinear sets of autofluorescence spectra. The VDP analysis and condition indexes may use a singular value decomposition.

The method for assessing collinearity of autofluorescence spectra (and emission spectra of fluorochromes described below) may include one or more of the hotspot analysis (evaluation of a hotspot matrix that is calculated as the inverse of the spectral matrix's correlation matrix) and variance decomposition proportion (VDP) analysis and condition indexes (CI). The collinearity of autofluorescence spectra may be assessed by a combination of hotspot analysis (evaluation of a hotspot matrix that is calculated as the inverse of the spectral matrix's correlation matrix) and variance decomposition proportion (VDP) analysis and condition indexes (CI).

In practicing the subject method, a sample having particles (e.g., in a flow stream of a flow cytometer) can be irradiated with light from a light source. The light source may be a broadband light source, emitting light having a broad range of wavelengths, such as for example, spanning 50 nm or more, such as 100 nm or more, such as 150 nm or more, such as 200 nm or more, such as 250 nm or more, such as 300 nm or more, such as 350 nm or more, such as 400 nm or more and including spanning 500 nm or more. For example, one suitable broadband light source emits light having wavelengths from 200 nm to 1500 nm. Another example of a suitable broadband light source includes a light source that emits light having wavelengths from 400 nm to 1000 nm. Where the method include irradiating with a broadband light source, broadband light source protocols of interest may include, but are not limited to, a halogen lamp, deuterium arc lamp, xenon arc lamp, stabilized fiber-coupled broadband light source, a broadband LED with continuous spectrum, superluminescent emitting diode, semiconductor light emitting diode, wide spectrum LED white light source, an multi-LED integrated white light source, among other broadband light sources or any combination thereof.

The method may include irradiating with a narrow band light source emitting a particular wavelength or a narrow range of wavelengths, such as for example with a light source which emits light in a narrow range of wavelengths like a range of 50 nm or less, such as 40 nm or less, such as 30 nm or less, such as 25 nm or less, such as 20 nm or less, such as 15 nm or less, such as 10 nm or less, such as 5 nm or less, such as 2 nm or less and including light sources which emit a specific wavelength of light (i.e., monochromatic light). Where the method includes irradiating with a narrow band light source, narrow band light source protocols of interest may include, but are not limited to, a narrow wavelength LED, laser diode or a broadband light source coupled to one or more optical bandpass filters, diffraction gratings, monochromators or any combination thereof.

In the present disclosure, the method may include irradiating the sample with one or more lasers. As discussed above, the type and number of lasers will vary depending on the sample as well as desired light collected and may be a gas laser, such as a helium-neon laser, argon laser, krypton laser, xenon laser, nitrogen laser, $CO_2$ laser, CO laser, argon-fluorine (ArF) excimer laser, krypton-fluorine (KrF) excimer laser, xenon chlorine (XeCl) excimer laser or xenon-fluorine (XeF) excimer laser or a combination thereof. The method may include irradiating the flow stream with a dye laser, such as a stilbene, coumarin or rhodamine laser. The method may include irradiating the flow stream with a metal-vapor laser, such as a helium-cadmium (HeCd) laser, helium-mercury (HeHg) laser, helium-selenium (HeSe) laser, helium-silver (HeAg) laser, strontium laser, neon-copper (NeCu) laser, copper laser or gold laser and combinations thereof. The method may include irradiating the flow stream with a solid-state laser, such as a ruby laser, an Nd:YAG laser, NdCrYAG laser, Er:YAG laser, Nd:YLF laser, Nd:$YVO_4$ laser, Nd:$yCa_4O(BO_3)_3$ laser, Nd:YCOB laser, titanium sapphire laser, thulim YAG laser, ytterbium YAG laser, ytterbium$_2O_3$ laser or cerium doped lasers and combinations thereof.

The sample may be irradiated with one or more of the above-mentioned light sources, such as 2 or more light sources, such as 3 or more light sources, such as 4 or more light sources, such as 5 or more light sources and including 10 or more light sources. The light source may include any combination of types of light sources. For example, the method may include irradiating the sample in the flow stream with an array of lasers, such as an array having one or more gas lasers, one or more dye lasers and one or more solid-state lasers.

The sample may be irradiated with wavelengths ranging from 200 nm to 1500 nm, such as from 250 nm to 1250 nm, such as from 300 nm to 1000 nm, such as from 350 nm to 900 nm and including from 400 nm to 800 nm. For example, where the light source is a broadband light source, the sample may be irradiated with wavelengths from 200 nm to 900 nm. Where the light source includes a plurality of narrow band light sources, the sample may be irradiated with specific wavelengths in the range from 200 nm to 900 nm. For example, the light source may be plurality of narrow band LEDs (1 nm - 25 nm) each independently emitting light having a range of wavelengths between 200 nm to 900 nm. The narrow band light source may include one or more lasers (such as a laser array) and the sample is irradiated with specific wavelengths ranging from 200 nm to 700 nm, such as with a laser array having gas lasers, excimer lasers, dye lasers, metal vapor lasers and solid-state laser as described above.

Where more than one light source is employed, the sample may be irradiated with the light sources simultaneously or sequentially, or a combination thereof. For example, the sample may be simultaneously irradiated with each of the light sources. The flow stream may be sequentially irradiated with each of the light sources. Where more than one light source is employed to irradiate the sample sequentially, the time each light source irradiates the sample may independently be 0.001 microseconds or more, such as 0.01 microseconds or more, such as 0.1 microseconds or more, such as 1 microsecond or more, such as 5 microseconds or more, such as 10 microseconds or more, such as 30 microseconds or more and including 60 microseconds or more. For example, methods may include irradiating the sample with the light source (e.g. laser) for a duration which ranges from 0.001 microseconds to 100 microseconds, such as from 0.01 microseconds to 75 microseconds, such as from 0.1 microseconds to 50 microseconds, such as from 1 microsecond to 25 microseconds and including from 5 microseconds to 10 microseconds. Where sample is sequentially irradiated with two or more light sources, the duration sample may be irradiated by each light source may be the same or different.

The time period between irradiation by each light source may also vary, as desired, being separated independently by a delay of 0.001 microseconds or more, such as 0.01 microseconds or more, such as 0.1 microseconds or more, such as 1 microsecond or more, such as 5 microseconds or more, such as by 10 microseconds or more, such as by 15 microseconds or more, such as by 30 microseconds or more and including by 60 microseconds or more. For example, the time period between irradiation by each light source may range from 0.001 microseconds to 60 microseconds, such as from 0.01 microseconds to 50 microseconds, such as from 0.1 microseconds to 35 microseconds, such as from 1 microsecond to 25 microseconds and including from 5 microseconds to 10 microseconds. In the present disclosure, the time period between irradiation by each light source can be 10 microseconds. Where sample is sequentially irradiated by more than two (i.e., 3 or more) light sources, the delay between irradiation by each light source may be the same or different.

The sample may be irradiated continuously or in discrete intervals. The method may include irradiating the sample in the sample with the light source continuously. The sample in may be irradiated with the light source in discrete intervals, such as irradiating every 0.001 millisecond, every 0.01 millisecond, every 0.1 millisecond, every 1 millisecond, every 10 milliseconds, every 100 milliseconds and including every 1000 milliseconds, or some other interval.

Depending on the light source, the sample may be irradiated from a distance which varies such as 0.01 mm or more, such as 0.05 mm or more, such as 0.1 mm or more, such as 0.5 mm or more, such as 1 mm or more, such as 2.5 mm or more, such as 5 mm or more, such as 10 mm or more, such as 15 mm or more, such as 25 mm or more and including 50 mm or more. Also, the angle or irradiation may also vary, ranging from 10° to 90°, such as from 15° to 85°, such as from 20° to 80°, such as from 25° to 75° and including from 30° to 60°, for example at a 90° angle.

In the present disclosure, the method preferably includes irradiating the sample with two or more beams of frequency shifted light. As described above, a light beam generator component may be employed having a laser and an acousto-optic device for frequency shifting the laser light. The method may include irradiating the acousto-optic device with the laser. Depending on the desired wavelengths of light produced in the output laser beam (e.g., for use in irradiating a sample in a flow stream), the laser may have a specific wavelength that varies from 200 nm to 1500 nm, such as from 250 nm to 1250 nm, such as from 300 nm to 1000 nm, such as from 350 nm to 900 nm and including from 400 nm to 800 nm. The acousto-optic device may be irradiated with one or more lasers, such as 2 or more lasers, such as 3 or more lasers, such as 4 or more lasers, such as 5 or more lasers and including 10 or more lasers. The lasers may include any combination of types of lasers. For example, the method may include irradiating the acousto-optic device with an array of lasers, such as an array having one or more gas lasers, one or more dye lasers and one or more solid-state lasers.

Where more than one laser is employed, the acousto-optic device may be irradiated with the lasers simultaneously or sequentially, or a combination thereof. For example, the acousto-optic device may be simultaneously irradiated with each of the lasers. The acousto-optic device may be sequentially irradiated with each of the lasers. Where more than one laser is employed to irradiate the acousto-optic device sequentially, the time each laser irradiates the acousto-optic device may independently be 0.001 microseconds or more, such as 0.01 microseconds or more, such as 0.1 microseconds or more, such as 1 microsecond or more, such as 5 microseconds or more, such as 10 microseconds or more, such as 30 microseconds or more and including 60 microseconds or more. For example, the method may include irradiating the acousto-optic device with the laser for a duration which ranges from 0.001 microseconds to 100 microseconds, such as from 0.01 microseconds to 75 microseconds, such as from 0.1 microseconds to 50 microseconds, such as from 1 microsecond to 25 microseconds and including from 5 microseconds to 10 microseconds. Where the acousto-optic device is sequentially irradiated with two or more lasers, the duration the acousto-optic device may be irradiated by each laser may be the same or different.

The time period between irradiation by each laser may also vary, as desired, being separated independently by a delay of 0.001 microseconds or more, such as 0.01 microseconds or more, such as 0.1 microseconds or more, such as 1 microsecond or more, such as 5 microseconds or more, such as by 10 microseconds or more, such as by 15 microseconds or more, such as by 30 microseconds or more and including by 60 microseconds or more. For example, the time period between irradiation by each light source may range from 0.001 microseconds to 60 microseconds, such as from 0.01 microseconds to 50 microseconds, such as from 0.1 microseconds to 35 microseconds, such as from 1 microsecond to 25 microseconds and including from 5 microseconds to 10 microseconds. In the present disclosure, the time period between irradiation by each laser can be 10 microseconds. Where the acousto-optic device is sequentially irradiated by more than two (i.e., 3 or more) lasers, the delay between irradiation by each laser may be the same or different.

The acousto-optic device may be irradiated continuously or in discrete intervals. The method may include irradiating the acousto-optic device with the laser continuously. The acousto-optic device can be irradiated with the laser in discrete intervals, such as irradiating every 0.001 millisecond, every 0.01 millisecond, every 0.1 millisecond, every 1 millisecond, every 10 milliseconds, every 100 milliseconds and including every 1000 milliseconds, or some other interval.

Depending on the laser, the acousto-optic device may be irradiated from a distance which varies such as 0.01 mm or more, such as 0.05 mm or more, such as 0.1 mm or more, such as 0.5 mm or more, such as 1 mm or more, such as 2.5 mm or more, such as 5 mm or more, such as 10 mm or more, such as 15 mm or more, such as 25 mm or more and including 50 mm or more. Also, the angle or irradiation may also vary, ranging from 10° to 90°, such as from 15° to 85°, such as from 20° to 80°, such as from 25° to 75° and including from 30° to 60°, for example at a 90° angle.

The method may include applying radiofrequency drive signals to the acousto-optic device to generate angularly deflected laser beams. Two or more radiofrequency drive signals may be applied to the acousto-optic device to generate an output laser beam with the desired number of angularly deflected laser beams, such as 3 or more radiofrequency drive signals, such as 4 or more radiofrequency drive signals, such as 5 or more radiofrequency drive signals, such as 6 or more radiofrequency drive signals, such as 7 or more radiofrequency drive signals, such as 8 or more radiofrequency drive signals, such as 9 or more radiofrequency drive signals, such as 10 or more radiofrequency drive signals, such as 15 or more radiofrequency drive signals, such as 25 or more radiofrequency drive signals, such as 50 or more radiofrequency drive signals and including 100 or more radiofrequency drive signals.

The angularly deflected laser beams produced by the radiofrequency drive signals each have an intensity based on the amplitude of the applied radiofrequency drive signal. The method may include applying radiofrequency drive signals having amplitudes sufficient to produce angularly deflected laser beams with a desired intensity. Each applied radiofrequency drive signal independently may have an amplitude from about 0.001 V to about 500 V, such as from about 0.005 V to about 400 V, such as from about 0.01 V to about 300 V, such as from about 0.05 V to about 200 V, such as from about 0.1 V to about 100 V, such as from about 0.5 V to about 75 V, such as from about 1 V to 50 V, such as from about 2 V to 40 V, such as from 3 V to about 30 V and including from about 5 V to about 25 V. Each applied radiofrequency drive signal independently may have an amplitude from about 0.001 V to 100 V, such as from about 0.001 V to 200 V, such as from 0.001 V to 300 V, such as from 0.001 V to 400 V and including from 0.001 V to 500 V. Each applied radiofrequency drive signal may have, a frequency of from about 0.001 MHz to about 500 MHz, such as from about 0.005 MHz to about 400 MHz, such as from about 0.01 MHz to about 300 MHz, such as from about 0.05 MHz to about 200 MHz, such as from about 0.1 MHz to about 100 MHz, such as from about 0.5 MHz to about 90 MHz, such as from about 1 MHz to about 75 MHz, such as from about 2 MHz to about 70 MHz, such as from about 3 MHz to about 65 MHz, such as from about 4 MHz to about 60 MHz and including from about 5 MHz to about 50 MHz. Each applied radiofrequency drive signalmay have , a frequency of from about 0.001 MHz to about 100 MHz, such as from 0.001 MHz to 200 MHz, such as from 0.001 MHz to 300 MHz, such as from 0.001 MHz to 400 MHz, such as from 0.001 MHz to 500 MHz.

The angularly deflected laser beams in the output laser beam may be spatially separated. Depending on the applied radiofrequency drive signals and desired irradiation profile of the output laser beam, the angularly deflected laser beams may be separated by 0.001 μm or more, such as by 0.005 μm or more, such as by 0.01 μm or more, such as by 0.05 μm or more, such as by 0.1 μm or more, such as by 0.5 μm or more, such as by 1 μm or more, such as by 5 μm or more, such as by 10 μm or more, such as by 100 μm or more, such as by 500 μm or more, such as by 1000 μm or more and including by 5000 μm or more. The angularly deflected laser beams can overlap, such as with an adjacent angularly deflected laser beam along a horizontal axis of the output laser beam. The overlap between adjacent angularly deflected laser beams (such as overlap of beam spots) may be an overlap of 0.001 μm or more, such as an overlap of 0.005 μm or more, such as an overlap of 0.01 μm or more, such as an overlap of 0.05 μm or more, such as an overlap of 0.1 μm or more, such as an overlap of 0.5 μm or more, such as an overlap of 1 μm or more, such as an overlap of 5 μm or more, such as an overlap of 10 μm or more and including an overlap of 100 μm or more.

The flow stream may be irradiated with a plurality of beams of frequency-shifted light and particles in the flow stream are imaged such as described in Diebold, et al. Nature Photonics Vol. 7(10); 806-810 (2013), as well as described in U.S. Patent Nos. 9,423,353; 9,784,661; 9,983,132; 10,006,852; 10,036,699; 10,078,045; 10,222,316; 10,288,546; 10,324,019; 10,408,758; 10,451,538; 10,620,111; 10,684,211; 10,845,295; 10,935,482; 10,935,485; 11,105,728; 11,280,718; 11,327,016; 11,366,052; 11,371,937; 11,692,926; 11,630,053; 11,774,343; 11,940,369; and 11,946,851.

In practicing the subject method, light from each particle is detected by a light detection system. The light detection system preferably include one or more photodetectors, such as 2 or more, such as 3 or more, such as 4 or more, such as 5 or more, such as 6 or more, such as 7 or more, such as 8 or more, such as 9 or more and including 10 or more photodetectors. Photodetectors for practicing the subject methods may be any convenient light detecting protocol, including but not limited to photosensors or photodetectors, such as avalanche photodiodes (APDs), active-pixel sensors (APSs), quadrant photodiodes, image sensors, charge-coupled devices (CCDs), intensified charge-coupled devices (ICCDs), light emitting diodes, photon counters, bolometers, pyroelectric detectors, photoresistors, photovoltaic cells, photodiodes, photomultiplier tubes, phototransistors, quantum dot photoconductors or photodiodes and combinations thereof, among other photodetectors. In the present disclosure, the photodetector can be a photomultiplier tube, such as a photomultiplier tube having an active detecting surface area of each region that ranges from 0.01 $cm^2$ to 10 $cm^2$, such as from 0.05 $cm^2$ to 9 $cm^2$, such as from, such as from 0.1 $cm^2$ to 8 $cm^2$, such as from 0.5 $cm^2$ to 7 $cm^2$ and including from 1 $cm^2$ to 5 $cm^2$. Light from the irradiated sample is detected in two or more photodetector channels, such as 3 or more, such as 4 or more, such as 5 or more, such as 6 or more, such as 7 or more, such as 8 or more, such as 9 or more, such as 10 or more, such as 12 or more, such as 16 or more, such as 24 or more, such as 24 or more, such as 32 or more, such as 64 or more, such as 128 or more, such as 256 or more and including 512 or more photodetector channels.

Light may be measured by the photodetector at one or more wavelengths, such as at 2 or more wavelengths, such as at 5 or more different wavelengths, such as at 10 or more different wavelengths, such as at 25 or more different wavelengths, such as at 50 or more different wavelengths, such as at 100 or more different wavelengths, such as at 200 or more different wavelengths, such as at 300 or more different wavelengths and including measuring light from particles in the flow stream at 400 or more different wavelengths. Light may be measured continuously or in discrete intervals. Detectors of interest may be configured to take measurements of the light continuously. Detectors of interest may be configured to take measurements in discrete intervals, such as measuring light every 0.001 millisecond, every 0.01 millisecond, every 0.1 millisecond, every 1 millisecond, every 10 milliseconds, every 100 milliseconds and including every 1000 milliseconds, or some other interval.

In the present disclosure, light detected from the sample may be scattered light. The term "scattered light" is used herein in its conventional sense to refer to the propagation of light energy from particles in the sample (e.g., flowing in a flow stream) that are deflected from the incident beam path, such as by reflection, refraction or deflection of the beam of light. Scattered light detected from the particles in the flow stream may be forward scattered light (FSC). Scattered light detected from the particles in the flow stream may be side scattered light (SSC). Scattered light detected from the particles in the flow stream may be back-scattered light (BSC).

Light detected from each particle in the sample may be transmitted light, such as light detected with a brightfield light detector. In other embodiments, light detected from each particle in the sample is emitted light, such as particle luminescence (i.e., fluorescence or phosphorescence), as described in greater detail below.

Autofluorescence that is generated by the irradiated particles can be measured. The term "autofluorescence" is used herein in its conventional sense to refer to the emission of light from structures or components of the particle (e.g., cellular components within a cell) when irradiated by a light source. The autofluorescence does not come from and is distinct from added fluorescent markers. The particles can be cells and autofluorescence from the cells include light emission from autofluorescencing molecules such as **NADPH,** flavins, proteins and amino acids such as tryptophan, tyrosine and phenyalanine. Autofluorescence from cells include light emission from intrinsic properties of collagen or elastin. The autofluorescence of the particle may differ, depending on the state of the cell, such as where the cell is unstimulated, stimulated, activated or some other biological or physical state. As described herein, the method includes assessing the collinearity of the autofluorescence spectra from particles such as cellular autofluorescence. The contribution of autofluorescence spectra to spectral unmixing of the fluorescence flow cytometer data may be accounted for and reduced and eliminated as desired.

The sample may include 2 or more different types of particles, such as 3 or more, such as 4 or more, such as 5 or more, such as 10 or more, such as 15 or more, such as 25 or more, such as 50 or more, such as 75 or more and including 100 or more different types of particles. The particles may be cells. The cells may be in two or more different states, such as where one or more of the cells are stimulated, unstimulated, activated and un-activated.

The method may include measuring autofluorescence from a sample of unlabeled particles. The method may include measuring autofluorescence from a sample of single-stained control particles. The method may include measuring autofluorescence from a sample of particles having a plurality of fluorochromes. Particles in the sample may include one or more fluorochromes which emit fluorescence in response to irradiation by the light source. The method may include assessing the collinearity between the autofluorescence spectrum of one or more of the particles and the fluorescence spectrum of one or more of the fluorochromes. The fluorescence spectra for the fluorochromes may be used in the data analysis in combination with the autofluorescence spectra.

For example, each particle may include 2 or more fluorochromes, such as 3 or more, such as 4 or more, such as 5 or more, such as 6 or more, such as 7 or more, such as 8 or more, such as 9 or more, such as 10 or more fluorochromes, such as 15 fluorochromes or more, such as 25 fluorochromes or more, such as 50 fluorochromes or more, such as 75 fluorochromes or more and including fluorochrome panels having 100 fluorochromes or more. The subject fluorochrome panels may include any suitable set of fluorochromes. Fluorochromes of interest according to the present disclosure have excitation maxima that range from 100 nm to 800 nm, such as from 150 nm to 750 nm, such as from 200 nm to 700 nm, such as from 250 nm to 650 nm, such as from 300 nm to 600 nm and including from 400 nm to 500 nm. Fluorochromes of interest according to the present disclosure have emission maxima that range from 400 nm to 1000 nm, such as from 450 nm to 950 nm, such as from 500 nm to 900 nm, such as from 550 nm to 850 nm and including from 600 nm to 800 nm. The fluorochrome may be a light emitting dye such as a fluorescent dye having a peak emission wavelength of 200 nm or more, such as 250 nm or more, such as 300 nm or more, such as 350 nm or more, such as 400 nm or more, such as 450 nm or more, such as 500 nm or more, such as 550 nm or more, such as 600 nm or more, such as 650 nm or more, such as 700 nm or more, such as 750 nm or more, such as 800 nm or more, such as 850 nm or more, such as 900 nm or more, such as 950 nm or more, such as 1000 nm or more and including 1050 nm or more. For example, the fluorochrome may be a fluorescent dye having a peak emission wavelength that ranges from 200 nm to 1200 nm, such as from 300 nm to 1100 nm, such as from 400 nm to 1000 nm, such as from 500 nm to 900 nm and including a fluorescent dye having a peak emission wavelength of from 600 nm to 800 nm. Fluorochromes of interest may include but are not limited to dyes suitable for use in analytical applications (e.g., flow cytometry, imaging, etc.) , such as an acridine dye, anthraquinone dyes, arylmethane dyes, diarylmethane dyes (e.g., diphenyl methane dyes), chlorophyll containing dyes, triarylmethane dyes (e.g., triphenylmethane dyes), azo dyes, diazonium dyes, nitro dyes, nitroso dyes, phthalocyanine dyes, cyanine dyes, asymmetric cyanine dyes, quinon-imine dyes, azine dyes, eurhodin dyes, safranin dyes, indamins, indophenol dyes, fluorine dyes, oxazine dye, oxazone dyes, thiazine dyes, thiazole dyes, xanthene dyes, fluorene dyes, pyronin dyes, fluorine dyes, rhodamine dyes, phenanthridine dyes, as well as dyes combining two or more of the aforementioned dyes (e.g., in tandem), polymeric dyes having one or more monomeric dye units and mixtures of two or more of the aforementioned dyes thereof. A large number of dyes are commercially available from a variety of sources, such as, for example, Molecular Probes (Eugene, OR), Dyomics GmbH (Jena, Germany), Sigma-Aldrich (St. Louis, MO), Sirigen, Inc. (Santa Barbara, CA) and Exciton (Dayton, OH). For example, the fluorophore may include 4-acetamido-4'-isothiocyanatostilbene-2,2'disulfonic acid; acridine and derivatives such as acridine, acridine orange, acridine yellow, acridine red, and acridine isothiocyanate; allophycocyanin, phycoerythrin, peridinin-chlorophyll protein, 5-(2'-aminoethyl) aminonaphthalene-1-sulfonic acid (EDANS); 4-amino-N-[3-vinylsulfonyl)phenyl]naphthalimide-3,5 disulfonate (Lucifer Yellow VS); N-(4-anilino-1-naphthyl)maleimide; anthranilamide; Brilliant Yellow; coumarin and derivatives such as coumarin, 7-amino-4-methylcoumarin (AMC, Coumarin 120), 7-amino-4-trifluoromethylcouluarin (Coumaran 151); cyanine and derivatives such as cyanosine, Cy3, Cy3.5, Cy5, Cy5.5, and Cy7; 4',6-diaminidino-2-phenylindole (DAPI); 5', 5"-dibromopyrogallol-sulfonephthalein (Bromopyrogallol Red); 7-diethylamino-3-(4'-isothiocyanatophenyl)-4-methylcoumarin; diethylaminocoumarin; diethylenetriamine pentaacetate; 4,4'-diisothiocyanatodihydro-stilbene-2,2'-disulfonic acid; 4,4'-diisothiocyanatostilbene-2,2'-disulfonic acid; 5-[dimethylamino]naphthalene-1-sulfonyl chloride (DNS, dansyl chloride); 4-(4'-dimethylaminophenylazo)benzoic acid (DABCYL); 4-dimethylaminophenylazophenyl-4'-isothiocyanate (DABITC); eosin and derivatives such as eosin and eosin isothiocyanate; erythrosin and derivatives such as erythrosin B and erythrosin isothiocyanate; ethidium; fluorescein and derivatives such as 5-carboxyfluorescein (FAM), 5-(4,6-dichlorotriazin-2-yl)aminofluorescein (DTAF), 2'7'-dimethoxy-4'5'-dichloro-6-carboxyfluorescein (JOE), fluorescein isothiocyanate (FITC), fluorescein chlorotriazinyl, naphthofluorescein, and QFITC (XRITC); fluorescamine; IR144; IR1446; Green Fluorescent Protein (GFP); Reef Coral Fluorescent Protein (RCFP); Lissamine™; Lissamine rhodamine, Lucifer yellow; Malachite Green isothiocyanate; 4-methylumbelliferone; ortho cresolphthalein; nitrotyrosine; pararosaniline; Nile Red; Oregon Green; Phenol Red; B-phycoerythrin; o-phthaldialdehyde; pyrene and derivatives such as pyrene, pyrene butyrate and succinimidyl 1-pyrene butyrate; Reactive Red 4 (Cibacron™ Brilliant Red 3B-A); rhodamine and derivatives such as 6-carboxy-X-rhodamine (ROX), 6-carboxyrhodamine (R6G), 4,7-dichlororhodamine lissamine, rhodamine B sulfonyl chloride, rhodamine (Rhod), rhodamine B, rhodamine 123, rhodamine X isothiocyanate, sulforhodamine B, sulforhodamine 101, sulfonyl chloride derivative of sulforhodamine 101 (Texas Red), N,N,N',N'-tetramethyl-6-carboxyrhodamine (TAMRA), tetramethyl rhodamine, and tetramethyl rhodamine isothiocyanate (TRITC); riboflavin; rosolic acid and terbium chelate derivatives; xanthene; dye-conjugated polymers (i.e., polymer-attached dyes) such as fluorescein isothiocyanate-dextran as well as dyes combining two or more dyes (e.g., in tandem), polymeric dyes having one or more monomeric dye units and mixtures of two or more of the aforementioned dyes or combinations thereof.

The fluorophore (i.e., dye) may be a fluorescent polymeric dye. Fluorescent polymeric dyes that find use in the subject method and system are varied. The polymeric dye may include a conjugated polymer. Conjugated polymers (CPs) are characterized by a delocalized electronic structure which includes a backbone of alternating unsaturated bonds (e.g., double and/or triple bonds) and saturated (e.g., single bonds) bonds, where $\pi$-electrons can move from one bond to the other. As such, the conjugated backbone may impart an extended linear structure on the polymeric dye, with limited bond angles between repeat units of the polymer. For example, proteins and nucleic acids, although also polymeric, in some cases do not form extended-rod structures but rather fold into higher-order three-dimensional shapes. In addition, CPs may form "rigid-rod" polymer backbones and experience a limited twist (e.g., torsion) angle between monomer repeat units along the polymer backbone chain. The polymeric dye may include a CP that has a rigid rod structure. As summarized above, the structural characteristics of the polymeric dyes can have an effect on the fluorescence properties of the molecules.

Any convenient polymeric dye may be utilized in the subject method and system. A polymeric dye may be a multichromophore that has a structure capable of harvesting light to amplify the fluorescent output of a fluorophore. The polymeric dye may be capable of harvesting light and efficiently converting it to emitted light at a longer wavelength. The polymeric dye can have a light-harvesting multichromophore system that can efficiently transfer energy to nearby luminescent species (e.g., a "signaling chromophore"). Mechanisms for energy transfer include, for example, resonant energy transfer (e.g., Forster (or fluorescence) resonance energy transfer, FRET), quantum charge exchange (Dexter energy transfer) and the like. These energy transfer mechanisms may be relatively short range; that is, close proximity of the light harvesting multichromophore system to the signaling chromophore provides for efficient energy transfer. Under conditions for efficient energy transfer, amplification of the emission from the signaling chromophore occurs when the number of individual chromophores in the light harvesting multichromophore system is large; that is, the emission from the signaling chromophore is more intense when the incident light (the "excitation light") is at a wavelength which is absorbed by the light harvesting multichromophore system than when the signaling chromophore is directly excited by the pump light.

The multichromophore may be a conjugated polymer. Conjugated polymers (CPs) are characterized by a delocalized electronic structure and can be used as highly responsive optical reporters for chemical and biological targets. Because the effective conjugation length is substantially shorter than the length of the polymer chain, the backbone contains a large number of conjugated segments in close proximity. Thus, conjugated polymers are efficient for light harvesting and enable optical amplification via energy transfer.

The polymer may be used as a direct fluorescent reporter, for example fluorescent polymers having high extinction coefficients, high brightness, etc. The polymer may be used as a strong chromophore where the color or optical density is used as an indicator.

Polymeric dyes of interest include, but are not limited to, those dyes described by Gaylord et al. in US Publication Nos. 20040142344, 20080293164, 20080064042, 20100136702, 20110256549, 20120028828, 20120252986, 20130190193 and 20160025735 ; and Gaylord et al., J. Am. Chem. Soc., 2001, 123 (26), pp 6417-6418; Feng et al., Chem. Soc. Rev., 2010,39, 2411-2419; and Traina et al., J. Am. Chem. Soc., 2011, 133 (32), pp 12600-12607.

A population of autofluorescence spectra may be selected for assessing collinearity. Selecting the population of autofluorescence spectra may include generating a scatter plot of fluorescence parameters for particles of the sample and gating one or more populations on the scatter plot based on median fluorescence intensity measured for each of the particles.

Selecting the population of autofluorescence spectra can include applying an unsupervised clustering algorithm to identify the particle populations. The unsupervised clustering algorithm may include one or more of self-organizing maps clustering, K-means clustering, hierarchical clustering, density-based spatial clustering of applications with noise (DBSCAN), Gaussian mixture clustering, spectral clustering, MeanShift clustering, hierarchical and density-based clustering, apriori algorithm, fuzzy c-means clustering, centroid based clustering and Birch algorithm. The unsupervised clustering algorithm may be a self-organizing maps algorithm (e.g., FlowSOM).

Selecting the population of autofluorescence spectra may include using a statistical analysis algorithm. The statistical analysis algorithm may include one or more of principal component analysis (PCA), singular value decomposition (SVD), factor analysis (FA), partial least squares (PLS), correspondence analysis (CA), multiple correspondence analysis (MCA), hierarchical cluster analysis (HCA), linear discriminant analysis and matrix factorization. The statistical analysis algorithm includes dimensionality reduction. The autofluorescence spectra of the particles may be determined based on the median fluorescence intensity (MFI) of each particle population.

Assessing the collinearity between the autofluorescence spectra generated by two or more different particles in the sample may include generating a spectral matrix associated with the autofluorescence generated by the particles in the sample, calculating an inverse matrix from the generated spectral matrix and identifying the autofluorescence spectra that is associated with variance in data generated by the flow cytometer using the autofluorescence spectra.

The autofluorescence spectral signatures can be received from experimental data (i.e., the results of an experiment carried out on a particular instrument). In other cases, the autofluorescence spectral signatures may be received from simulated data. The input spectral matrix may be associated with any suitable number of autofluorescence identifiers. The number of autofluorescence identifiers in the input spectral matrix may range from 2 to 150, such as 2 to 140, such as 2 to 130, such as 2 to 120, such as 2 to 110, such as 2 to 100, such as 2 to 90, such as 2 to 80, such as 2 to 70, such as 2 to 60, and including 2 to 50. The collection of autofluorescence spectra identifiers employed may be referred to as an autofluorescence palette, which collectively refers to the autofluorescence spectra identifiers.

The autofluorescence spectral signatures may include one or more spillover values. By "spillover value", it is meant a relative amount of signal that a given autofluorescence spectra emits into each detector band. In certain cases, spillover values are normalized to the detector with maximum signal (i.e., the "peak" detector) for that autofluorescence. In some cases, particle-modulated light indicative of a particular autofluorescence is received by one or more detectors in a particle analyzer (e.g., flow cytometer) that are not the peak detector(s) for that autofluorescence spectrum. As such, light may "spill-over" and be detected by off-peak detectors. In other words, the particular autofluorescence spectra used for an experiment and their associated autofluorescence emission bands may be selected to generally coincide with certain detectors. However, as more detectors are provided, and more labels are utilized, perfect correspondence between certain detectors and autofluorescence emission spectra may not be possible. It is generally true that although the peak of the emission spectra of a particular fluorescent molecule may lie within the window of one particular detector, some of the emission spectra of that label will also overlap the windows of one or more other detectors. This may be referred to as spillover.

The spectral matrix described herein may include one or more autofluorescence spectral signatures. Autofluorescence is the intrinsic fluorescent signal generated by particles such as cells when measured in a flow cytometer. It arises from fluorescently active endogenous molecules such as metabolites in cells. Different cells of the same type (e.g., lymphocytes) may have the same autofluorescence spectrum but at different intensities, e.g., larger cells typically tend to have a larger autofluorescence signal. Particles of different types may be associated with different autofluorescence spectra. For example, cells of different types (e.g., lymphocytes vs. monocytes) may not only have varying levels of autofluorescence, but may also have different autofluorescence spectra (e.g., the spectral signature of lymphocyte autofluorescence may be distinct from the spectral signature of monocyte autofluorescence). In spectral cytometry, the spectral signature of autofluorescence can be measured by looking at unstained cells, and it is included in the spectral unmixing process as an additional "fluorochrome" parameter or parameters, if multiple autofluorescence spectra are included.

The obtained spectral matrix can be a submatrix of the input spectral matrix (i.e., the spectral matrix associated with the instrument identifier) that includes spectral signatures for only the autofluorescence spectra signatures and the fluorochromes when present. A "submatrix" is discussed herein in its conventional sense to describe a matrix that is obtained by deleting some combination of rows and/or columns of another matrix.

The method may include calculating an inverse matrix from the obtained spectral matrix. As discussed herein, the term "inverse matrix" may be used to describe the inverse of a matrix in its conventional sense, i.e., the inverse of matrix A

being $A^{-1}$ when $AA^{-1} = A^{-1}A = I$, where $I$ is the matrix identity. However, for the purposes of the present disclosure, the term "inverse matrix" may also include other types of inverses, such as the inverses of non-square matrices. For example, the inverse matrix may be a pseudoinverse matrix. Broadly speaking, a "pseudoinverse matrix" is a matrix that generalizes the inverse of a square, invertible matrix for a non-square matrix. In some cases, the pseudoinverse matrix is a Moore-Penrose pseudoinverse matrix. In these cases, the pseudoinverse matrix may be calculated, as follows:

$$A^{+} = (A^{T}A)^{-1}A^{T}$$

where $A$ is an $m$ x $n$ matrix, $A^T$ is the transpose of $A$, and $A^+$ is the pseudoinverse. General discussions of pseudoinverses (e.g., Moore-Penrose pseudoinverses) may be found in, for example, U.S. Patent Nos. 7,065,286 and 9,575,162.

Pseudoinverses are suitable for assessing sets of autofluorescence spectra because a spectral matrix pseudoinverse determines the mapping of raw variance to unmixed variance. For example, spectral and conventional flow cytometry can both be described as a linear mixture model:

$$y = Mf$$

where y is the [m-by-1] vector of detector signals, M is the [m-by-n] matrix of spectral signatures, and $f$ is the [n x 1] vector of fluorophore abundances. Spectral unmixing involves solving this linear system of equations for "f" via a least squares method. For ordinary least squares, the solution can be described as:

$$f = M^{\dagger}y$$

where $M^{\dagger}$ is the Moore-Penrose pseudoinverse of M (or the inverse, in the case of compensation where M is square).

The inverse matrix may be a gramian inverse matrix (also referred to as an "inverse moment matrix" of the spectral matrix). Gramian matrices are described in, for example, Horn, R. A., & Johnson, C. R. (2012). Matrix analysis, the disclosure of which is incorporated by reference herein. A gramian inverse matrix may be calculated according to the following equation.

$$G = (M^{T}M)^{-1}$$

where G is the gramian inverse matrix, M is the spectral matrix, $M^T$ is the transpose of the spectral matrix.

Linear estimator theory can be used to also calculate the variance-covariance matrix $V_f$ of the unmixed solution, given the variance-covariance matrix $V_y$ of the detector measurements:

$$V_f = M^{\dagger}V_y(M^{\dagger})^{T}$$

where $^T$ denotes the transpose operator. The diagonal elements of $Vy$ are the per-detector variances or noise terms, and the diagonal elements of $V_f$ are the per-fluorochrome unmixed variances.

From this relation, it is clear that the spectral matrix pseudoinverse $M^{\dagger}$ determines the mapping of raw variance $V_y$ to unmixed variance $V_f$. This is demonstrated in the following proof: Let M denote the $[n \times$ m] spectral matrix and $M^{\dagger}$ the $[n \times$ m] the spectral matrix pseudoinverse where m is the number of detectors and $n$ is the number of autofluorescence spectra. Let $V_y$ be the $[n \times$ m] detector covariance matrix with $\sigma_{yj}^{2}$ denoting the measured variance of detector $i$. The unmixed autofluorescence covariance matrix $V_f$ of size $[n \times m]$ has diagonal entries $\sigma_{fj}^{2}$ denoting the unmixed variance of autofluorescence $j$, and off-diagonal entries $\sigma_{fjk}^{2}$ denoting the unmixed covariance of autofluorescence spectra $j$ and $k$. Then $V_f$ is defined as follows:

$$V_f = M^{\dagger}V_y(M^{\dagger})^{T}$$
$$= (M^{T}M)^{-1}M^{T}V_yM(M^{T}M)^{-1}$$

$$M^{\dagger} = \begin{bmatrix} - & M_0^{\dagger} & - \\ - & M_j^{\dagger} & - \\ - & M_n^{\dagger} & - \end{bmatrix}$$

$$V_f = \begin{bmatrix} - & M_0^{\dagger} & - \\ - & M_j^{\dagger} & - \\ - & M_n^{\dagger} & - \end{bmatrix} V_y \begin{bmatrix} | & | & | \\ M_0^{\dagger} & M_j^{\dagger} & M_n^{\dagger} \\ | & | & | \end{bmatrix}$$

$$\sigma_{fj}^2 = \begin{bmatrix} - & M_j^{\dagger} & - \end{bmatrix} V_y \begin{bmatrix} | \\ M_j^{\dagger} \\ | \end{bmatrix}$$

$$\sigma_{fjk}^2 = \begin{bmatrix} - & M_j^{\dagger} & - \end{bmatrix} V_y \begin{bmatrix} | \\ M_k^{\dagger} \\ | \end{bmatrix}$$

As shown above, regardless of the structure of $V_y$, autofluorescence $j$'s unmixed variance depends on the properties of its inverse spectrum $M_j^{\dagger}$. The unmixed covariance of autofluorescence spectra $j$ and $k$ depends on both inverse spectra $M_j^{\dagger}$ and $M_k^{\dagger}$. If $V_y$ is diagonal (no covariance):

$$V_y = \begin{bmatrix} \sigma_{y0}^2 & & \\ & \sigma_{yi}^2 & \\ & & \sigma_{ym}^2 \end{bmatrix}$$

$$\sigma_{fj}^2 = \sum_i \left(m_{ij}^{\dagger}\right)^2 \sigma_{yi}^2$$

If one makes the simplifying assumption that detector noise is uncorrelated, then unmixed variance depends only on the magnitudes of the inverse spectrum, which can be summarized with the inverse spectrum's vector norms. If $V_y$ is homoscedastic such that $V_y = \sigma_y^2 I$ :

$$\sigma_{fj}^2 = \sigma_y^2 \left\| M_j^{\dagger} \right\|_2^2$$

$$V_f = \sigma_y^2 (M^T M)^{-1}$$

If one also supposes that detector variance is equal in all channels, then $V_f$ is directly proportional the gramian inverse matrix $(M^T M)^{-1}$. Thus, it is shown that the gramian inverse matrix approximately predicts the true covariance matrix of unmixed data.

Following the calculation of the inverse matrix, the method can include deriving a quantitative metric from the inverse matrix.The quantitative metric may be a matrix norm. The quantitative metric may be a vector norm. The quantitative metric may be derived from some combination of matrix norms and vector norms, e.g., the sum of vector norms of some subset of columns or rows in the inverse matrix. Suitable norms include, but are not limited to, $L^2$ norms, 1-norms, 2-norms, infinity norms, and Frobenius norms. In some cases, the norm is a $L^2$ norm. In some cases, the norm is a 1-norm. The norm may be a 2-norm. The norm may be an infinity norm. The norm may be a Frobenius norm. Frobenius norms are described in, for example, Golub, G. H. and Van Loan, C. F. (1996) Matrix Computations, 3rd ed. Baltimore, MD: Johns Hopkins. In certain cases, a Frobenius norm is calculated as follows (adapted from Golub and Van Loan):

$$\|A\|_F = \sqrt{\sum_{i=1}^{m}\sum_{j=1}^{n}|a_{ij}|^2}$$

where $A$ is an $m$ x $n$ matrix.

The method may include evaluating unmixing performance of two or more autofluorescence spectra generated by the particles in the sample. Evaluating unmixing performance may include generating a spectral matrix associated with fluorescence spectra of the one or more fluorochromes and one or more autofluorescence spectra generated by the particles in the sample, applying the spectral matrix to unmix the fluorescence spectra generated by unstained controls, single-stained controls, stained sample or any combination thereof and calculating one or more of unmixing bias and unmixing variance. Calculating the unmixing bias may include measuring the presence of false-positive unmixed fluorochrome signal associated with the autofluorescence spectra. The method may include determining that false-positive unmixed fluorochrome signal associated with the autofluorescence spectra is absent in unmixed fluorochrome channels in all generated particle populations of the sample. Calculating the unmixing variance may include measuring unmixing-dependent spread in unmixed fluorochrome signals. The method may include identifying the autofluorescence spectra generated by the particles in the sample that minimizes unmixing bias.

The method may also include producing a visualization of the visualization of the assessed collinearity of the autofluorescence spectra in the generated data. Any suitable visualization may be employed. The visualization may include a plot of flow cytometer data that is simulated based on a set of autofluorescence spectra. Put another way, the visualization would include exemplary flow cytometer data that would be produced if a sample were run on a particular instrument with a particular set of particles that have the autofluorescence spectra. The visualization may emphasize (e.g., by highlighting, color-coding, grouping together, pointing out with arrows, etc.) flow cytometer data that would be associated with variance if certain fluorochromes and autofluorescence were used to produce said data. The visualization can emphasize flow cytometer data produced using particle autofluorescence and fluorochromes that contribute to variance in the data. The visualization can emphasize flow cytometer data produced using autofluorescence that are affected by variance in the data. The visualization may include a table or a matrix quantifying the extent to which autofluorescence (and/or fluorochromes) are associated with (e.g., contribute to and/or affected by) variance. For example, the table or matrix may be populated by the quantitative metrics discussed above. Cells of the table or matrix may be color-coded based on the extent to which autofluorescence (and/or fluorochromes) are associated with (e.g., contribute to and/or are affected by) variance. A cell may be color-coded with a color having a lighter intensity if the associated autofluorescence (and/or fluorochromes) is less associated with variance, and color-coded with a color having a heavier intensity if the associated autofluorescence (and/or fluorochromes) is more associated with variance.

The method may include generating a panel hotspot matrix. As described herein, the "panel hotspot matrix" is a mechanism for mathematically describing and/or visualizing the impact of spread on autofluorescence (and/or fluorochromes). The panel hotspot matrix can serve as the above-described visualization. The panel hotspot matrix may be a diagonal matrix. The panel hotspot matrix maybe calculated by obtaining a square root of the absolute value of the inverse matrix (e.g., gramian inverse). In certain cases, the panel hotspot matrix may be calculated, as follows:

$$\boldsymbol{P} = \sqrt{abs((\boldsymbol{M}^T\boldsymbol{M})^{-1})}$$

$$P_{jk} = \sqrt{abs\left(\sum_{i}^{n_d}\left(M_{ji}^{\dagger}\right)\left(M_{ki}^{\dagger}\right)\right)}$$

$$= \sqrt{abs\left(M_j^{\dagger} \cdot M_k^{\dagger}\right)}$$

Calculation of a panel hotspot matrix may result in two different metrics: pseudoinverse matrix row norms and off-diagonal entries. Pseudoinverse matrix row norms (i.e., diagonals of the panel hotspot matrix) indicate which autofluorescence (and/or fluorochromes) are most impacted by unmixing-dependent spread. In some cases, diagonal entries are the 2-norm of each autofluorescence (and/or fluorochrome) pseudoinverse row. In some versions, the pseudoinverse matrix row norms may be represented on a scale corresponding to the factor by which the standard deviation of unmixed data in that autofluorescence (and/or fluorochrome) would be amplified as a result of unmixing in this panel. For example, 1 corresponds to no impact, while 2 corresponds to 2x the spread, and so on. Inspection of off-diagonal entries in the full panel hotspot matrix reveals problematic combinations of autofluorescence (and/or fluorochromes) in the panel. Off-diagonal entries are the dot product of the corresponding row and column autofluorescence (and/or fluorochromes) spectra pseudoinverse rows. Off-diagonal values indicate the magnitude of covariance between two autofluorescence (and/or fluorochromes) spectra pseudoinverse matrix entries. For example, an off-diagonal value of 0 can denote no covariance, while higher values denote correspondingly higher levels of covariance.

The method may include performing a separate analysis of the pseudoinverse matrix row norms (i.e., diagonals) of the panel hotspot matrix. The method may include producing a diagonal visualization. The diagonal visualization may be any representation (e.g., graphical representation) of categorical data configured for the assessment and/or comparison of factors by which the standard deviation of unmixed data in autofluorescence spectra (and/or fluorochromes) would be amplified as a result of unmixing in a particular panel. The diagonal visualization can be a bar graph, where each bar represents the factor by which the standard deviation of unmixed data in each autofluorescence spectrum (and/or fluorochrome) would be amplified as a result of unmixing in the panel.

The method may include producing a visualization of exemplary flow cytometer data that would be generated using particular autofluorescence spectra (and/or fluorochromes) based on the panel hotspot matrix. The exemplary flow cytometer data may be actual flow cytometer data, i.e., produced from a flow cytometry experiment. Alternatively, the data may be simulated. The subject visualizations of exemplary flow cytometer data demonstrate the effects of using certain autofluorescence spectra (and/or fluorochromes) in an experiment. The visualization can show exemplary flow cytometer data produced using a particular pair of autofluorescence spectra (and/or fluorochromes), e.g., to show how covariance associated with those autofluorescence spectra (and/or fluorochromes) affects data quality. Alternatively or in addition, exemplary flow cytometer data can be simulated using the each of autofluorescence spectra (and/or fluorochromes) in the sample rather than just a pair of autofluorescence spectra (and/or fluorochromes). Inspection of such exemplary flow cytometer data can reveal problematic combinations of autofluorescence spectra (and/or fluorochromes) in the panel.

The method may include producing a spread correlation matrix. As described herein, the "spread correlation matrix" is a mechanism for mathematically describing and/or visualizing the impact of particular autofluorescence spectra (and/or fluorochromes) on certain populations of data, such as double-negative populations. The spread correlation matrix may be used to predict tilt in double negative populations. "Tilt" is referred to herein as a measure describing the extent to which populations (e.g., double negative populations) are shifted in a particular direction (e.g., corresponding to a positive or negative correlation) due to the manner in which the data was collected and/or prepared. Preparing the spread correlation matrix may include treating the gramian inverse as a covariance matrix and normalizing each row and column to the square root of its diagonal element to calculate a correlation matrix. The spread correlation matrix can be calculated as follows:

$$diag\left(\sqrt{diag((\boldsymbol{M}^T\boldsymbol{M})^{-1})}\right) \times (\boldsymbol{M}^T\boldsymbol{M})^{-1} \times diag\left(\sqrt{diag((\boldsymbol{M}^T\boldsymbol{M})^{-1})}\right)$$

where *diag* indicates taking the diagonal of a 2D matrix, or forming a diagonal matrix from a 1D vector. This operation is equivalent to dividing each row by the square root of its diagonal entry and each column by the square root of its diagonal entry. Entry [*i,j*] of the spread correlation matrix corresponds to the correlation between the pseudoinverse matrix rows corresponding to autofluorescence spectra (and/or fluorochromes) *i* and *j*. The method may include producing a visualization of exemplary flow cytometer data that would be generated using particular autofluorescence spectra (and/or fluorochromes) based on the spread correlation matrix. As with the visualizations related to the panel hotspot matrix, visualizations of exemplary flow cytometer data created with respect to the spread correlation matrix may be actual or simulated. The diagonal values of the spectral matrix's correlation matrix may include variance inflation factors (also referred to herein as spreading inflation factors, SIFs) The method may include measuring spreading inflation factors (SIFs) from the hotspot matrix. The measured spreading inflation factors can be assessed to determine whether they are confined to the autofluorescence spectra.

The method may include optimizing the autofluorescence spectra that will be used in generating the flow cytometer data based on the assessment of the collinearity of the autofluorescence. A set of autofluorescence spectra (and/or fluorochromes) may be described as "suitable for use" in a flow cytometric protocol when the set of autofluorescence spectra produces intelligible flow cytometer data that reliably provides insight on the characteristics of interest in the sample under investigation. A set of autofluorescence spectra may be suitable for use in a flow cytometric protocol when the panel provides increased biological resolution. "Biological resolution" refers to the ability to distinguish between different entities (e.g., cells, molecules, antigens, moieties, epitopes, or the like) of interest in a biological specimen. In some cases, autofluorescence spectra identified herein produce maximum biological resolution in spite of measurement variance as well as variance in flow cytometer data space (e.g., flow cytometer data that has undergone fluorescence compensation or spectral unmixing). The "maximum" biological resolution can be assessed relative to the biological resolution that would be achieved using one or more other sets of autofluorescence (and/or fluorochromes) that are different from (i.e., contain one or more different relative to) the autofluorescence spectra (and/or fluorochromes) assessed and/or identified as described herein.

Optimizing the set of autofluorescence spectra to be used in the analysis of the flow cytometer data may include the use of an optimization algorithm. The optimization algorithm may be a constrained optimization algorithm. "Constrained optimization" is referred to herein in its conventional sense to describe a process of optimizing variables in the presence of constraints on those variables. Any suitable constrained optimization method may be employed. In certain cases, the constrained optimization method is a minimization algorithm. By "minimization algorithm" it is meant a type of constrained optimization method in which the method seeks to minimize a particular variable. Examples of constrained optimization techniques that may be employed include, but are not limited to, local search, local repair, backtracking, and constraint propagation. These may, in certain cases, be combined with minimization techniques such as simulated annealing and genetic (evolutionary) algorithms. The set of autofluorescence spectra to be used in the analysis of the flow cytometer data described herein may be optimized in conjunction with the optimization protocols described in U.S. Patent Publication No. 2023/0243735 published on December 19, 2022.

Optimizing the set of autofluorescence spectra to be used in the analysis of the flow cytometer data may include adjusting one or more of the autofluorescence spectra in the set of autofluorescence spectra and assessing the suitability of the adjusted set of autofluorescence for use in generating flow cytometer data. By "adjusting" the autofluorescence spectra in the set of autofluorescence spectra, it is meant switching out an autofluorescence spectra (or fluorochrome) for a different autofluorescence spectra in a spectral matrix. One or more autofluorescence spectra in the set of autofluorescence spectra may be adjusted at any given time. The method may include switching out a single autofluorescence spectrum in the set of autofluorescence spectra at a given time. In certain cases, optimizing the set of autofluorescence spectra includes maintaining a set of autofluorescence spectra having a constant size. In other words, the number of autofluorescence spectra in the obtained set of autofluorescence spectra does not change even as one or more autofluorescence spectra are adjusted. For example, an assessed set of autofluorescence spectra having N autofluorescence spectra will continue to have N autofluorescence spectra following adjustment. An autofluorescence spectrum in the set of autofluorescence spectra may not swapped out for an autofluorescence spectrum that is already within the set of autofluorescence spectra. After the adjusted set of autofluorescence spectra is generated, methods of interest additionally include assessing the adjusted set of autofluorescence spectra, i.e., by calculating an inverse matrix from the obtained spectral matrix and identifying autofluorescence spectra in the set of autofluorescence spectra that would be associated with variance in flow cytometer data generated using the set of autofluorescence spectra by analyzing the calculated inverse matrix to assess the suitability of the set of autofluorescence spectra for use in generating the flow cytometer data, etc.

The method may further include comparing the assessment of the initial set of autofluorescence spectra with the assessment of the adjusted fluorescence spectra. For example, the method may include determining which of the first and adjusted sets of autofluorescence spectra is associated with a less variance in flow cytometer data. If either the first or adjusted set of autofluorescence spectra includes fewer autofluorescence spectra that would be associated with variance in flow cytometer data than the other set of autofluorescence spectra, and/or has autofluorescence spectra that are less associated with variance (e.g., as determined by the quantitative metrics), that set of autofluorescence spectra may be identified as being more suitable for analyzing the flow cytometer data. In some cases, methods include discarding the set of autofluorescence spectra having autofluorescence spectra that are more associated with variance.

The method may include iteratively adjusting the autofluorescence spectra and assessing the suitability of each iteratively adjusted set of autofluorescence spectra. Whichever of the first and adjusted set of autofluorescence spectra that has been assessed to be less associated with variance in the flow cytometer data may serve as the seed for the next part of the iterative process. By "seed" it is meant a set of autofluorescence spectra that has been determined in one iteration of the method to be associated with a less variance in flow cytometer data in comparison to one or more slightly modified set of autofluorescence spectra. The iterative process can repeat itself until a condition has been met. Any suitable condition may be used to terminate the iterative process. The iterative process may be terminated when a certain run-time has elapsed. The iterative process may be terminated when the assessments produced for each iteratively adjusted set of autofluorescence spectra converges. Put another way, the iterative process is terminated when only minor variance differences are observed between subsequent sets of autofluorescence spectra.

As described above, the method may include the use of variance decomposition proportion (VDP) analysis and condition indexes (CI) to identify collinear sets of autofluorescence spectra. The VDP analysis and condition indexes may use a singular value decomposition. In the present disclosure, the method may include assessing by variance decomposition proportion that the measured spreading inflation factors (as described above) are confined to the autofluorescence spectra based on the assessed collinearity of the autofluorescence spectra.

Evaluating variance decomposition proportion may include singular value decomposition (SVD) to identify collinear sets of spectra. The method may include identifying problematic combinations of autofluorescence spectra (and/or fluorochromes) that cause high variance in spectrally unmixed data. These problematic combinations of autofluorescence spectra (and/or fluorochromes) can be identified based on their collinearity (nearly linear dependent) in the context of th entire set of particles and fluorochromes. This collinearity causes the spectral matrix to be ill-conditioned and leads to high unmixed variance. Determining the collinear combinations of autofluorescence spectra (and/or fluorochromes) may include computing the singular value decomposition (SVD) of the spectral matrix for the autofluorescence spectra (and/or fluorochromes) of interest. This expresses the spectral matrix X as the product of three matrices X=UDV^T. The diagonal matrix D contains singular values and V is a matrix that contains the right singular vectors of the matrix decomposition. The method may include variance decomposition proportion for 3 or more different autofluorescence spectra measured from the irradiated sample, such as 4 or more, such as 5 or more, such as 6 or more, such as 7 or more, such as 8 or more, such as 9 or more and including 10 or more different autofluorescence spectra.

A condition index can be calculated for each singular value generated by the singular value decomposition. The condition index can be calculated as a ratio of the largest calculated singular value to each individually calculated singular value. For example, the condition index of the k-th singular value is the ratio of the largest singular value to the k-th singular value.

The matrix of variance decomposition proportions (VDPs) of each autofluorescence spectra (and/or fluorochromes) with respect to each singular value can be calculated. This matrix describes the proportion of each autofluorescence spectra (and/or fluorochromes) unmixed variance that can be attributed to each component in the singular value decomposition. The method may include analyzing the calculated condition indexes and the matrices of corresponding variance decomposition proportions to identify collinear (e.g., nearly dependent) combinations of autofluorescence spectra (and/or fluorochromes).

The method may include identifying the variance decomposition proportions that correspond to a condition index of 10 or more, such as 11 or more, such as 12 or more, such as 13 or more, such as 14 or more, such as 15 or more, such as 16 or more, such as 17 or more, such as 18 or more, such as 19 or more, such as 20 or more, such as 21 or more, such as 22 or more, such as 23 or more, such as 24 or more, such as 25 or more, such as 26 or more, such as 27 or more, such as 28 or more, such as 29 or more, such as 30 or more and including identifying the variance decomposition proportions that correspond to a condition index of 35 or more.

The method may include identifying the autofluorescence spectra (and/or fluorochromes) whose variance decomposition proportions for that condition index exceeds a large fraction, such as 0.3 or more, such as 0.4 or more, such as 0.5 or more, such as 0.6 or more and including 0.7 or more. The method may include identifying the autofluorescence spectra (and/or fluorochromes) that have a variance decomposition proportion of greater than 0.3 and a condition index of greater than 15 as being collinear.

The method may include comparing the identification of collinear autofluorescence spectra (and/or fluorochromes) as determined by the calculated variance decomposition proportions and condition indexes with the hotspot matrix analysis described above. This can be done on the sample or a reference sample. The method may include confirming that two or more autofluorescence spectra (and/or fluorochromes) are collinear and are problematic combinations for spectral unmixing.

In the present disclosure, the method may include removing the autofluorescence spectra which are determined to be collinear. The method may further include removing the autofluorescence spectra that contribute to the greatest amount of variance in the flow cytometer data. The method may include determining the optimal combination of autofluorescence spectra to use when analyzing the flow cytometry data. The method may include removing the fluorescence spectra of fluorochromes which contribute to variance in the flow cytometer data based on the calculated collinearity of the fluorochrome fluorescence spectra with one or more of the autofluorescence spectra. The method may include removing the autofluorescence spectra that contributes to the greatest amount of unmixing bias in spectral unmixing of the flow cytometer data.

The method may include selecting the autofluorescence spectra that will provide for the best spectral unmixing of the flow cytometer data. In the present disclosure, the method may include spectrally unmixing flow cytometer data using the selected autofluorescence spectra. The method may include selecting the appropriate subsets of autofluorescence spectra to extract autofluorescence signals from a heterogeneous sample by unmixing without negatively affecting the other unmixed parameters. The identified collinear combinations of autofluorescence spectra may assist in flow cytometry experiment design as well as in data analysis to ensure that collinear autofluorescence (and/or fluorochromes) are used on particles (e.g., biological analytes) with sufficiently high signal-to-noise to overcome large unmixed variance or to adjust data visualization or data scaling schemes in order to account for large unmixed variance in the identified collinear autofluorescence (and/or fluorochromes).

**FIG. 1A** depicts a flow chart for assessing collinearity of autofluorescence spectra from particles in a sample in a flow stream according to the present disclosure. At step 101, a sample having particles are irradiated in a flow stream with a light source. Light from the irradiated particles is detected with a photodetector of a light detection system at step 102. At step 103, autofluorescence spectra are generated from the measured light from the different particles in the sample. Where the particles also include a fluorochrome, one or more fluorescence spectra may be generated from the measured light. The collinearity of the autofluorescence spectra is assessed between two or more of the different particles in the sample at step 104. This collinearity can be assessed by using one or both of a hotspot matrix analysis and a variance decomposition proportion (VDP) analysis, depicted as steps 104a and 104b. For hotspot matrix analysis (step 104a), methods include generating a spectral matrix associated with autofluorescence spectra, calculating an inverse matrix from the generated spectral matrix and identifying the autofluorescence spectra that is associated with variance in data generated by the flow cytometer using the autofluorescence spectra. For variance decomposition proportion analysis (step 104b), singular value decompositions are calculated for the autofluorescence spectra, a condition index is calculated for each autofluorescence spectrum and the fraction of variance decomposition proportion for each condition index is calculated. Any autofluorescence spectra or fluorochromes whose VDP for that condition index exceeds some large fraction such as 0.3 or 0.5 (the specific threshold for large VDP fraction is empirically determined and may vary) are identified. Any set of 2 or more autofluorescence spectra or fluorochromes that have large VDP for the same large condition index are identified as being collinear. At step 105, autofluorescence spectra which are collinear or would cause variance in spectra unmixing the flow cytometer data is identified. The set of autofluorescence spectra that provide for the lowest collinearity can be selected for use in spectral unmixing of the flow cytometer data.

The method may include determining an optimized combination of autofluorescence spectra for using in a spectral unmixing matrix to unmix spectral data signals generated from an irradiated sample in a flow stream of a flow cytometer. An example workflow for determining an optimized combination of autofluorescence spectra according to the present disclosure is outlined in **FIG. 1B.** At step 111, flow cytometer data is acquired (in real-time or recorded data) for an unstained sample containing cell types of interest. Data for single-stained controls and a fully stained sample can also be acquired. A population of autofluorescence spectra is defined based on the analysis of the unstained sample at step 112. The candidate set of autofluorescence spectra can be defined by manual gating (e.g., on a scatter plot). The candidate set of autofluorescence spectra can be defined by an applied unsupervised clustering algorithm (e.g., FlowSOM). The candidate set of autofluorescence spectra can be defined by an applied statistical analysis (e.g., by principal component analysis, PCA). At step 113, the unmixing performance of spectral matrices generated based on different combinations of autofluorescence spectra are evaluated. To do so, a spectral unmixing matrix containing a panel of fluorochrome spectra and a subset of autofluorescence spectra is generated (step 114). Each generated unmixing matrix is evaluated at step 115 by using the unmixing matrix to unmix unstained controls, single stain controls and fully stained samples. At step 116, metrics associated with unmixing bias and metrics associated with unmixing-dependent spread (variance) are assessed. Combinations of autofluorescence spectra that balances unmixing bias and unmixing-dependent spread are identified at step 117. Based on the optimized autofluorescence spectra identified, a panel of autofluorescence spectra is selected for inclusion in the spectral unmixing matrix used to unmix flow cytometer data (step 118).

**FIGS. 1C-1K** depict an experiment for assessing autofluorescence collinearity according to the present disclosure. In this experiment, T-cell activation is being studied. The experiments involve looking at PBMCs that have been treated with a special stimulation cocktail that triggers T-cell activation. The same 13-color panel is to be compared on both stimulated and unstimulated samples, in order to understand which markers in the panel change expression when stimulation has occurred. In setting up single-stain controls, the stimulated PBMCs look different from unstimulated PBMCs in terms of scatter profiles. The unstained stimulated cells appear to have a very wide range of autofluorescence and are much brighter than unstained unstimulated cells. The stimulated and unstimulated PBMCs may have different autofluorescence spectra since their biology is so different. To ensure that the 13-color panel has clear resolution of positive and negative expression for each marker and to ensure minimal background signal arising from autofluorescence in his unmixed data. This will allow for more accurate comparison of expression profiles between the stimulated and unstimulated samples. **FIG. 1C** depicts acquiring two unstained samples that include unstained unstimulated PBMCs and unstained stimulated PBMCs. For each unstained recording, the scatter plot is observed. Gates are drawn around different visible populations. There are three discrete populations in each sample (total of six populations). **FIG. 1D** depicts comparing different autofluorescence (AF) populations. All six unstained populations are added as candidate autofluorescence spectra. The autofluorescence spectra are visualized of the identified unstained populations. Similarity scores are analyzed and a subset of spectra are selected. **FIG. 1E** depicts evaluating unmixing performance of different spectral unmixing matrix with no autofluorescence spectra. In this option, no autofluorescence is selected. An all-x-n for one of single-stain controls on unstimulated cells are analyzed. Unmixing using a matrix with no AF selection first is checked. A number of unmixing errors are found due to AF in the sample being unaccounted for. **FIG. 1F** depicts evaluating unmixing performance of different autofluorescence matrix options with single autofluorescence spectrum but two different versions. A new matrix with a single AF selection is made. Where problem areas are still found, a different single autofluorescence selection is made. **FIG. 1G** depicts evaluating unmixing performance of two autofluorescence spectra selection. Since there are several different AF populations in his sample, two unstimulated AF spectra at the same time are selected. This resolves the CD3 false-positive and doesn't cause too many new issues. This does make the complexity score much higher, but examination of the hotspot matrix reveals that the unmixing hotspot is focused on the AF spectra themselves and does not affect other fluorochromes. This is confirmed by looking at other parameters in all-x-n that the fluorophores are not badly affected, but keep an eye on BUV395 which has a slightly higher hotspot value. **FIG. 1H** depicts evaluating unmixing performance of a three autofluorescence spectra selection. A stimulated recording is looked at to see how the unmixing looks. The unstained sample should show a population centered at zero for all markers if unmixed correctly. Significant false-positive expression is seen due to AF in the unstained simulated sample. A third AF spectrum is added. This improves the results, but now BV421-A looks less desirable. **FIG. 1I** depicts evaluating unmixing performance of a four autofluorescence spectra selection. A fourth autofluorescence spectra is added to the matrix. The populations are all centered at zero, although there is a lot of spread in BV421 now. To check, all-x-n is switched back to the unstimulated BV421 single-stain control. Positive expression is seen and the unmixing looks good. The final 13-color and 4 autofluorescence matrix is determined and acquired. **FIG. 1J** depicts the evaluation of unmixing performance using a hotspot matrix for matrices which include only the fluorochromes of the particles in the sample, as well as matrices which apply one autofluorescence spectra, two autofluorescence spectra, three autofluorescence spectra and four autofluorescence spectra. Hotspot analysis reveals where additional spread due to unmixing is expected to occur. Like complexity score, the values in the hotspot matrix will change depending on which fluorochromes and autofluorescence spectra are selected for the spectral matrix. Unlike complexity score, the hotspot matrix predicts which fluorochrome in a panel will have unmixing problems, and how bad those problems will be. **FIG. 1K** depicts the evaluation of unmixing performance using a variance decomposition proportion (VDP) analysis. The VDP matrix includes the singular value decomposition calculations for each of the fluorochromes as well as for autofluorescence spectra for the cells of the sample. In addition, the condition index is calculated for each. Using either the hotspot matrix analysis, the VDP analysis or both, the collinearity of the autofluorescence (and fluorochromes) can be assessed. Using the assessed collinearity, the autofluorescence spectra and fluorochromes can be identified and selected for use in evaluating spectral unmixing, where the optimal spectral unmixing performance can be determined to be the autofluorescence spectra and fluorochromes which minimize collinearity.

The sample analyzed in the instant methods can be a biological sample. The term "biological sample" is used in its conventional sense to refer to a whole organism, plant, fungi or a subset of animal tissues, cells or component parts which may be found in blood, mucus, lymphatic fluid, synovial fluid, cerebrospinal fluid, saliva, bronchoalveolar lavage, amniotic fluid, amniotic cord blood, urine, vaginal fluid and semen. As such, a "biological sample" refers to both the native organism or a subset of its tissues as well as to a homogenate, lysate or extract prepared from the organism or a subset of its tissues, including but not limited to, for example, plasma, serum, spinal fluid, lymph fluid, sections of the skin, respiratory, gastrointestinal, cardiovascular, and genitourinary tracts, tears, saliva, milk, blood cells, tumors, organs. Biological samples may be any type of organismic tissue, including both healthy and diseased tissue (e.g., cancerous, malignant, necrotic, etc.). In the present disclosure, the biological sample may be a liquid sample, such as blood or derivative thereof, e.g., plasma, tears, urine, semen, etc., where ithe sample is a blood sample, including whole blood, such as blood obtained from venipuncture or fingerstick (where the blood may or may not be combined with any reagents prior to assay, such as preservatives, anticoagulants, etc.).

In the present disclosure the source of the sample can be a "mammal" or "mammalian", where these terms are used broadly to describe organisms which are within the class Mammalia, including the orders carnivore (e.g., dogs and cats), Rodentia (e.g., mice, guinea pigs, and rats), and primates (e.g., humans, chimpanzees, and monkeys). The subjects can be humans. The methods may be applied to samples obtained from human subjects of both genders and at any stage of development (i.e., neonates, infant, juvenile, adolescent, adult), where in the present disclosure the human subject is a juvenile, adolescent or adult. While the present disclosure may be applied to samples from a human subject, it is to be understood that the method may also be carried-out on samples from other animal subjects (that is, in "non-human subjects") such as, but not limited to, birds, mice, rats, dogs, cats, livestock and horses.

Cells of interest may be targeted for characterized according to a variety of parameters, such as a phenotypic characteristic identified via the attachment of a particular fluorescent label to cells of interest. The system can be configured to deflect analyzed droplets that are determined to include a target cell. A variety of cells may be characterized using the subject methods. Target cells of interest include, but are not limited to, stem cells, T cells, dendritic cells, B Cells, granulocytes, leukemia cells, lymphoma cells, virus cells (e.g., HIV cells), NK cells, macrophages, monocytes, fibroblasts, epithelial cells, endothelial cells, and erythroid cells. Target cells of interest include cells that have a convenient cell surface marker or antigen that may be captured or labelled by a convenient affinity agent or conjugate thereof. For example, the target cell may include a cell surface antigen such as CD11b, CD123, CD14, CD15, CD16, CD19, CD193, CD2, CD25, CD27, CD3, CD335, CD36, CD4, CD43, CD45RO, CD56, CD61, CD7, CD8, CD34, CD1c, CD23, CD304, CD235a, T cell receptor alpha/beta, T cell receptor gamma/delta, CD253, CD95, CD20, CD105, CD117, CD120b, Notch4, Lgr5 (N-Terminal), SSEA-3, TRA-1-60 Antigen, Disialoganglioside GD2 and CD71. The target cell can be selected from HIV containing cell, a Treg cell, an antigen-specific T - cell populations, tumor cells or hematopoietic progenitor cells (CD34+) from whole blood, bone marrow or cord blood.

In practicing the subject method according to the present disclosure, an amount of an initial fluidic sample may be injected into the flow cytometer. The amount of sample injected into the particle sorting module may vary, for example, ranging from 0.001 mL to 1000 mL, such as from 0.005 mL to 900 mL, such as from 0.01 mL to 800 mL, such as from 0.05 mL to 700 mL, such as from 0.1 mL to 600 mL, such as from 0.5 mL to 500 mL, such as from 1 mL to 400 mL, such as from 2 mL to 300 mL and including from 5 mL to 100 mL of sample.

The method may include counting and optionally sorting labeled particles (e.g., target cells) in a sample. In practicing the subject method the fluidic sample including the particles can be first introduced into a flow nozzle of the system. Upon exit from the flow nozzle, the particles are passed substantially one at a time through the sample interrogation region where each of the particles is irradiated to a source of light and measurements of light scatter parameters and, fluorescent emissions as desired (e.g., two or more light scatter parameters and measurements of one or more fluorescent emissions) are separately recorded for each particle. Depending on the properties of the flow stream being interrogated, 0.001 mm or more of the flow stream may be irradiated with light, such as 0.005 mm or more, such as 0.01 mm or more, such as 0.05 mm or more, such as 0.1 mm or more, such as 0.5 mm or more and including 1 mm or more of the flow stream may be irradiated with light. In the present disclosure, the method may include irradiating a planar cross-section of the flow stream in the sample interrogation region, such as with a laser (as described above). In other embodiments, methods include irradiating a predetermined length of the flow stream in the sample interrogation region, such as corresponding to the irradiation profile of a diffuse laser beam or lamp.

In the present disclosure, the method may include irradiating the flow stream at or near the flow cell nozzle orifice. For example, the method may include irradiating the flow stream at a position about 0.001 mm or more from the nozzle orifice, such as 0.005 mm or more, such as 0.01 mm or more, such as 0.05 mm or more, such as 0.1 mm or more, such as 0.5 mm or more and including 1 mm or more from the nozzle orifice. In the present disclosure, the method may include irradiating the flow stream immediately adjacent to the flow cell nozzle orifice.

Detectors, such as photomultiplier tubes (PMT), may be used to record light that passes through each particle (in certain cases referred to as forward light scatter), light that is reflected orthogonal to the direction of the flow of the particles through the sensing region (in some cases referred to as orthogonal or side light scatter) and fluorescent light emitted from the particles, if it is labeled with fluorescent marker(s), as the particle passes through the sensing region and is illuminated by the energy source. Each of forward light scatter (FSC), side-scatter (SSC), and fluorescence emissions include a separate parameter for each particle (or each "event"). Thus, for example, two, three or four parameters can be collected (and recorded) from a particle labeled with two different fluorescence markers. The data recorded for each particle is analyzed in real time or stored in a data storage and analysis means, such as a computer, as desired.

In the present disclosure, the particles can be detected and uniquely identified by exposing the particles to excitation light and measuring the fluorescence of each particle in one or more detection channels, as desired. Fluorescence emitted in detection channels used to identify the particles and binding complexes associated therewith may be measured following excitation with a single light source, or may be measured separately following excitation with distinct light sources. If separate excitation light sources are used to excite the particle labels, the labels may be selected such that all the labels are excitable by each of the excitation light sources used.

The methods can also include data acquisition, analysis and recording, such as with a computer, wherein multiple data channels record data from each detector for the light scatter and fluorescence emitted by each particle as it passes through the sample interrogation region of the particle sorting module. Analysis can include classifying and counting particles such that each particle is present as a set of digitized parameter values. The subject system may be set to trigger on a selected parameter in order to distinguish the particles of interest from background and noise. "Trigger" refers to a preset threshold for detection of a parameter and may be used as a means for detecting passage of a particle through the light source. Detection of an event that exceeds the threshold for the selected parameter triggers acquisition of light scatter and fluorescence data for the particle. Data is not acquired for particles or other components in the medium being assayed which cause a response below the threshold. The trigger parameter may be the detection of forward-scattered light caused by passage of a particle through the light beam. The flow cytometer then detects and collects the light scatter and fluorescence data for the particle.

A particular subpopulation of interest is then further analyzed by "gating" based on the data collected for the entire population. To select an appropriate gate, the data is plotted so as to obtain the best separation of subpopulations possible. This procedure may be performed by plotting forward light scatter (FSC) vs. side (i.e., orthogonal) light scatter (SSC) on a two-dimensional dot plot. A subpopulation of particles is then selected (i.e., those cells within the gate) and particles that are not within the gate are excluded. Where desired, the gate may be selected by drawing a line around the desired subpopulation using a cursor on a computer screen. Only those particles within the gate are then further analyzed by plotting the other parameters for these particles, such as fluorescence. Where desired, the above analysis may be configured to yield counts of the particles of interest in the sample.

The method may further include employing particles in research, laboratory testing, or therapy. The subject method may include obtaining individual cells prepared from a target fluidic or tissue biological sample. For example, the subject method may include obtaining cells from fluidic or tissue samples to be used as a research or diagnostic specimen for diseases such as cancer. Likewise, the subject method may include obtaining cells from fluidic or tissue samples to be used in therapy. A cell therapy protocol is a protocol in which viable cellular material including, e.g., cells and tissues, may be prepared and introduced into a subject as a therapeutic treatment. Conditions that may be treated by the administration of the flow cytometrically sorted sample include, but are not limited to, blood disorders, immune system disorders, organ damage, etc.

A typical cell therapy protocol may include the following steps: sample collection, cell isolation, genetic modification, culture, and expansion in vitro, cell harvesting, sample volume reduction and washing, bio-preservation, storage, and introduction of cells into a subject. The protocol may begin with the collection of viable cells and tissues from source tissues of a subject to produce a sample of cells and/or tissues. The sample may be collected via any suitable procedure that includes, e.g., administering a cell mobilizing agent to a subject, drawing blood from a subject, removing bone marrow from a subject, etc. After collecting the sample, cell enrichment may occur via several methods including, e.g., centrifugation based methods, filter based methods, elutriation, magnetic separation methods, fluorescence-activated cell sorting (FACS), and the like. In some cases, the enriched cells may be genetically modified by any convenient method, e.g., nuclease mediated gene editing. The genetically modified cells can be cultured, activated, and expanded in vitro. In some cases, the cells are preserved, e.g., cryopreserved, and stored for future use where the cells are thawed and then administered to a patient, e.g., the cells may be infused in the patient.

**SYSTEMS**

The present disclosure also includes a flow cytometer system for practicing the subject method, e.g., assessing collinearity of autofluorescence spectra of a sample. The system may be configured for identifying and selecting an optimal combination of autofluorescence spectra for characterizing a sample by flow cytometry. The systems according to the present disclosure preferably includes a light source configured to irradiate a sample having particles in a flow stream, a light detection system having a photodetector for detecting light from the particles in the sample and a process having memory operably coupled to the processor wherein the memory comprises instructions stored thereon, which when executed by the processor, cause the processor to measure autofluorescence spectra generated by the particles in the sample and assess collinearity between the autofluorescence spectra generated by two or more different particles in the sample.

The subject programmable logic may be implemented in any of a variety of devices such as specifically programmed event processing computers, wireless communication devices, integrated circuit devices, or the like. The programable logic may be executed by a specifically programmed processor, which may include one or more processors, such as one or more digital signal processors (DSPs), configurable microprocessors, application specific integrated circuits (ASICs), field programmable gate arrays (FPGAs), or other equivalent integrated or discrete logic circuitry. A combination of computing devices, e.g., a combination of a DSP and a microprocessor, a plurality of microprocessors, one or more microprocessors in conjunction with a DSP core, or any other such configuration in at least partial data connectivity may implement one or more of the features described herein.

The system may be or may include a particle analyzer. Particle analyzers of interest may include a flow cell for transporting particles in a flow stream, a light source for irradiating the particles in the flow stream at an interrogation point, and a particle-modulated light detector for detecting particle-modulated light. In the present disclosure, the particle analyzer may be a flow cytometer. In some cases where the particle analyzer is a flow cytometer, said flow cytometer is a full spectrum flow cytometer.

As discussed herein, a "flow cell" is described in its conventional sense to refer to a component, such as a cuvette, containing a flow channel having a liquid flow stream for transporting particles in a sheath fluid. Cuvettes of interest include containers having a passage running therethrough. The flow stream may include a liquid sample injected from a sample tube. Flow cells of interest include a light-accessible flow channel. The flow cell may include transparent material (e.g., quartz) that permits the passage of light therethrough. The flow cell can be a stream-in-air flow cell in which light interrogation of the particles occurs outside of the flow cell (i.e., in free space).

The flow stream may be configured for irradiation with light from a light source at an interrogation point. The flow stream for which the flow channel is configured may include a liquid sample injected from a sample tube. In the present disclosure, the flow stream may include a narrow, rapidly flowing stream of liquid that is arranged such that linearly segregated particles transported therein are separated from each other in a single-file manner. The "interrogation point" discussed herein refers to a region within the flow cell in which the particle is irradiated by light from the light source, e.g., for analysis. The size of the interrogation point may vary as desired. For example, where 0 $\mu$m represents the axis of light emitted by the light source, the interrogation point may range from -100 $\mu$m to 100 $\mu$m, such as -50 $\mu$m to 50 $\mu$m, such as -25 $\mu$m to 40 $\mu$m, and including -15 $\mu$m to 30 $\mu$m.

After particles are irradiated in the flow cell, particle-modulated light may be observed. By "particle-modulated light" it is meant light that is received from the particles in the flow stream following the irradiation of the particles with light from the light source. In some cases, the particle-modulated light is side-scattered light. As discussed herein, side-scattered light refers to light refracted and reflected from the surfaces and internal structures of the particle. The particle-modulated light may include forward-scattered light (i.e., light that travels through or around the particle in mostly a forward direction). The particle-modulated light may include fluorescent light (i.e., light emitted from a fluorochrome following irradiation with excitation wavelength light).

The systems according to the present disclosure preferably includes a light source configured to irradiate particles of a sample. The light source may be any suitable broadband or narrow band source of light. Depending on the components in the sample (e.g., cells, beads, non-cellular particles, etc.), the light source may be configured to emit wavelengths of light that vary, ranging from 200 nm to 1500 nm, such as from 250 nm to 1250 nm, such as from 300 nm to 1000 nm, such as from 350 nm to 900 nm and including from 400 nm to 800 nm. For example, the light source may include a broadband light source emitting light having wavelengths from 200 nm to 900 nm. The light source may include a narrow band light source emitting a wavelength ranging from 200 nm to 900 nm. For example, the light source may be a narrow band LED (1 nm - 25 nm) emitting light having a wavelength ranging between 200 nm to 900 nm. In the present disclosure, the light source may be a laser. The subject system may include a gas laser, such as a helium-neon laser, argon laser, krypton laser, xenon laser, nitrogen laser, $CO_2$ laser, CO laser, argon-fluorine (ArF) excimer laser, krypton-fluorine (KrF) excimer laser, xenon chlorine (XeCl) excimer laser or xenon-fluorine (XeF) excimer laser or a combination thereof. The subject system may include a dye laser, such as a stilbene, coumarin or rhodamine laser. Lasers of interest may include a metal-vapor laser, such as a helium-cadmium (HeCd) laser, helium-mercury (HeHg) laser, helium-selenium (HeSe) laser, helium-silver (HeAg) laser, strontium laser, neon-copper (NeCu) laser, copper laser or gold laser and combinations thereof. The subject system may include a solid-state laser, such as a ruby laser, an Nd:YAG laser, NdCrYAG laser, Er:YAG laser, Nd:YLF laser, Nd:$YVO_4$ laser, Nd:$yCa_4O(BO_3)_3$ laser, Nd:YCOB laser, titanium sapphire laser, thulim YAG laser, ytterbium YAG laser, ytterbium$_2O_3$ laser or cerium doped lasers and combinations thereof.

The light source may be a non-laser light source, such as a lamp, including but not limited to a halogen lamp, deuterium arc lamp, xenon arc lamp, a light-emitting diode, such as a broadband LED with continuous spectrum, superluminescent emitting diode, semiconductor light emitting diode, wide spectrum LED white light source, an multi-LED integrated. The non-laser light source may be a stabilized fiber-coupled broadband light source, white light source, among other light sources or any combination thereof.

The light source may be positioned any suitable distance from the sample (e.g., the flow stream in a flow cytometer), such as at a distance of 0.001 mm or more from the flow stream, such as 0.005 mm or more, such as 0.01 mm or more, such as 0.05 mm or more, such as 0.1 mm or more, such as 0.5 mm or more, such as 1 mm or more, such as 5 mm or more, such as 10 mm or more, such as 25 mm or more and including at a distance of 100 mm or more. In addition, the light source irradiate the sample at any suitable angle (e.g., relative the vertical axis of the flow stream), such as at an angle ranging from 10° to 90°, such as from 15° to 85°, such as from 20° to 80°, such as from 25° to 75° and including from 30° to 60°, for example at a 90° angle.

The light source may be configured to irradiate the sample continuously or in discrete intervals. The system may include a light source that is configured to irradiate the sample continuously, such as with a continuous wave laser that continuously irradiates the flow stream at the interrogation point in a flow cytometer. The system may include a light source that is configured to irradiate the sample at discrete intervals, such as every 0.001 milliseconds, every 0.01 milliseconds, every 0.1 milliseconds, every 1 millisecond, every 10 milliseconds, every 100 milliseconds and including every 1000 milliseconds, or some other interval. Where the light source is configured to irradiate the sample at discrete intervals, systems may include one or more additional components to provide for intermittent irradiation of the sample with the light source. For example, the subject system may include one or more laser beam choppers, manually or computer controlled beam stops for blocking and exposing the sample to the light source.

The light source may be a laser. Lasers of interest may include pulsed lasers or continuous wave lasers. For example, the laser may be a gas laser, such as a helium-neon laser, argon laser, krypton laser, xenon laser, nitrogen laser, $CO_2$ laser, CO laser, argon-fluorine (ArF) excimer laser, krypton-fluorine (KrF) excimer laser, xenon chlorine (XeCl) excimer laser or xenon-fluorine (XeF) excimer laser or a combination thereof; a dye laser, such as a stilbene, coumarin or rhodamine laser; a metal-vapor laser, such as a helium-cadmium (HeCd) laser, helium-mercury (HeHg) laser, helium-selenium (HeSe) laser, helium-silver (HeAg) laser, strontium laser, neon-copper (NeCu) laser, copper laser or gold laser and combinations thereof; a solid-state laser, such as a ruby laser, an Nd:YAG laser, NdCrYAG laser, Er:YAG laser, Nd:YLF laser, Nd:$YVO_4$ laser, Nd:$yCa_4O(BO_3)_3$ laser, Nd:YCOB laser, titanium sapphire laser, thulim YAG laser, ytterbium YAG laser, ytterbium$_2O_3$ laser or cerium doped lasers and combinations thereof; a semiconductor diode laser, optically pumped semiconductor laser (OPSL), or a frequency doubled- or frequency tripled implementation of any of the above mentioned lasers.

In the present disclosure, the light source may be a light beam generator that is configured to generate two or more beams of frequency shifted light. The light beam generator may include a laser, a radiofrequency generator configured to apply radiofrequency drive signals to an acousto-optic device to generate two or more angularly deflected laser beams. The laser may be a pulsed lasers or continuous wave laser. For example lasers in light beam generators of interest may be a gas laser, such as a helium-neon laser, argon laser, krypton laser, xenon laser, nitrogen laser, CO2 laser, CO laser, argon-fluorine (ArF) excimer laser, krypton-fluorine (KrF) excimer laser, xenon chlorine (XeCl) excimer laser or xenon-fluorine (XeF) excimer laser or a combination thereof; a dye laser, such as a stilbene, coumarin or rhodamine laser;

a metal-vapor laser, such as a helium-cadmium (HeCd) laser, helium-mercury (HeHg) laser, helium-selenium (HeSe) laser, helium-silver (HeAg) laser, strontium laser, neon-copper (NeCu) laser, copper laser or gold laser and combinations thereof; a solid-state laser, such as a ruby laser, an Nd:YAG laser, NdCrYAG laser, Er:YAG laser, Nd:YLF laser, Nd:YVO4 laser, Nd:yCa4O(BO3)3 laser, Nd:YCOB laser, titanium sapphire laser, thulim YAG laser, ytterbium YAG laser, ytterbium2O3 laser or cerium doped lasers and combinations thereof.

The acousto-optic device may be any convenient acousto-optic protocol configured to frequency shift laser light using applied acoustic waves. In the present disclosure, the acousto-optic device may be an acousto-optic deflector. The acousto-optic device in the subject system may be configured to generate angularly deflected laser beams from the light from the laser and the applied radiofrequency drive signals. The radiofrequency drive signals may be applied to the acousto-optic device with any suitable radiofrequency drive signal source, such as a direct digital synthesizer (DDS), arbitrary waveform generator (AWG), or electrical pulse generator.

A controller may be configured to apply radiofrequency drive signals to the acousto-optic device to produce the desired number of angularly deflected laser beams in the output laser beam, such as being configured to apply 3 or more radiofrequency drive signals, such as 4 or more radiofrequency drive signals, such as 5 or more radiofrequency drive signals, such as 6 or more radiofrequency drive signals, such as 7 or more radiofrequency drive signals, such as 8 or more radiofrequency drive signals, such as 9 or more radiofrequency drive signals, such as 10 or more radiofrequency drive signals, such as 15 or more radiofrequency drive signals, such as 25 or more radiofrequency drive signals, such as 50 or more radiofrequency drive signals and including being configured to apply 100 or more radiofrequency drive signals.

To produce an intensity profile of the angularly deflected laser beams in the output laser beam, the controller can be configured to apply radiofrequency drive signals having an amplitude that varies such as from about 0.001 V to about 500 V, such as from about 0.005 V to about 400 V, such as from about 0.01 V to about 300 V, such as from about 0.05 V to about 200 V, such as from about 0.1 V to about 100 V, such as from about 0.5 V to about 75 V, such as from about 1 V to 50 V, such as from about 2 V to 40 V, such as from 3 V to about 30 V and including from about 5 V to about 25 V. Each applied radiofrequency drive signal may have a frequency of from about 0.001 MHz to about 500 MHz, such as from about 0.005 MHz to about 400 MHz, such as from about 0.01 MHz to about 300 MHz, such as from about 0.05 MHz to about 200 MHz, such as from about 0.1 MHz to about 100 MHz, such as from about 0.5 MHz to about 90 MHz, such as from about 1 MHz to about 75 MHz, such as from about 2 MHz to about 70 MHz, such as from about 3 MHz to about 65 MHz, such as from about 4 MHz to about 60 MHz and including from about 5 MHz to about 50 MHz.

In the present disclosure, the controller can have a processor having memory operably coupled to the processor such that the memory includes instructions stored thereon, which when executed by the processor, cause the processor to produce an output laser beam with angularly deflected laser beams having a desired intensity profile. For example, the memory may include instructions to produce two or more angularly deflected laser beams with the same intensities, such as 3 or more, such as 4 or more, such as 5 or more, such as 10 or more, such as 25 or more, such as 50 or more and including memory may include instructions to produce 100 or more angularly deflected laser beams with the same intensities. They may include instructions to produce two or more angularly deflected laser beams with different intensities, such as 3 or more, such as 4 or more, such as 5 or more, such as 10 or more, such as 25 or more, such as 50 or more and including memory may include instructions to produce 100 or more angularly deflected laser beams with different intensities.

In the present disclosure, the controller may have a processor having memory operably coupled to the processor such that the memory includes instructions stored thereon, which when executed by the processor, cause the processor to produce an output laser beam having increasing intensity from the edges to the center of the output laser beam along the horizontal axis. The intensity of the angularly deflected laser beam at the center of the output beam may range from 0.1% to about 99% of the intensity of the angularly deflected laser beams at the edge of the output laser beam along the horizontal axis, such as from 0.5% to about 95%, such as from 1% to about 90%, such as from about 2% to about 85%, such as from about 3% to about 80%, such as from about 4% to about 75%, such as from about 5% to about 70%, such as from about 6% to about 65%, such as from about 7% to about 60%, such as from about 8% to about 55% and including from about 10% to about 50% of the intensity of the angularly deflected laser beams at the edge of the output laser beam along the horizontal axis. The controller may have a processor having memory operably coupled to the processor such that the memory includes instructions stored thereon, which when executed by the processor, cause the processor to produce an output laser beam having an increasing intensity from the edges to the center of the output laser beam along the horizontal axis. The intensity of the angularly deflected laser beam at the edges of the output beam may range from 0.1% to about 99% of the intensity of the angularly deflected laser beams at the center of the output laser beam along the horizontal axis, such as from 0.5% to about 95%, such as from 1% to about 90%, such as from about 2% to about 85%, such as from about 3% to about 80%, such as from about 4% to about 75%, such as from about 5% to about 70%, such as from about 6% to about 65%, such as from about 7% to about 60%, such as from about 8% to about 55% and including from about 10% to about 50% of the intensity of the angularly deflected laser beams at the center of the output laser beam along the horizontal axis. The controller can have a processor having memory operably coupled to the processor such that the memory includes instructions stored thereon, which when executed by the processor, cause the processor to produce an output laser beam having an intensity profile with a Gaussian distribution along the horizontal axis. The controller may have a processor having memory operably coupled to the processor such that the memory includes instructions stored thereon, which when executed by the processor, cause the processor to produce an output laser beam having a top hat intensity profile along the horizontal axis.

Light beam generators of interest may be configured to produce angularly deflected laser beams in the output laser beam that are spatially separated. Depending on the applied radiofrequency drive signals and desired irradiation profile of the output laser beam, the angularly deflected laser beams may be separated by 0.001 μm or more, such as by 0.005 μm or more, such as by 0.01 μm or more, such as by 0.05 μm or more, such as by 0.1 μm or more, such as by 0.5 μm or more, such as by 1 μm or more, such as by 5 μm or more, such as by 10 μm or more, such as by 100 μm or more, such as by 500 μm or more, such as by 1000 μm or more and including by 5000 μm or more. The system can be configured to produce angularly deflected laser beams in the output laser beam that overlap, such as with an adjacent angularly deflected laser beam along a horizontal axis of the output laser beam. The overlap between adjacent angularly deflected laser beams (such as overlap of beam spots) may be an overlap of 0.001 μm or more, such as an overlap of 0.005 μm or more, such as an overlap of 0.01 μm or more, such as an overlap of 0.05 μm or more, such as an overlap of 0.1 μm or more, such as an overlap of 0.5 μm or more, such as an overlap of 1 μm or more, such as an overlap of 5 μm or more, such as an overlap of 10 μm or more and including an overlap of 100 μm or more.

Light beam generators configured to generate two or more beams of frequency shifted light include laser excitation modules as described in Diebold, et al. Nature Photonics Vol. 7(10); 806-810 (2013) as well as described in U.S. Patent Nos. 9,423,353; 9,784,661; 9,983,132; 10,006,852; 10,036,699; 10,078,045; 10,222,316; 10,288,546; 10,324,019; 10,408,758; 10,451,538; 10,620,111; 10,684,211; 10,845,295; 10,935,482; 10,935,485; 11,105,728; 11,280,718; 11,327,016; 11,366,052; 11,371,937; 11,692,926; 11,630,053; 11,774,343; 11,940,369; and 11,946,851.

The system may include a light detection system having a photodetector configured to detect light emitted by the irradiated particles. The light detection system may be configured to detect scattered light. The light detection system may include a side-scattered light detector. The light detection system may include a forward-scattered light detector. The light detection system may include multiple scattered light detectors, such as 2 or more, such as 3 or more, such as 4 or more, and including 5 or more. The subject light detection system may also include a fluorescent light detector configured to detect one or more fluorescent wavelengths of light. The light detection system may include multiple fluorescent light detectors such as 2 or more, such as 3 or more, such as 4 or more, 5 or more, 10 or more, 15 or more, and including 20 or more.

Detectors of interest may include, but are not limited to, optical sensors or detectors, such as active-pixel sensors (APSs), avalanche photodiodes, image sensors, charge-coupled devices (CCDs), intensified charge-coupled devices (ICCDs), light emitting diodes, photon counters, bolometers, pyroelectric detectors, photoresistors, photovoltaic cells, photodiodes, photomultiplier tubes (PMTs), phototransistors, quantum dot photoconductors or photodiodes and combinations thereof, among other detectors. In the present disclosure, the collected light may be measured with a charge-coupled device (CCD), semiconductor charge-coupled devices (CCD), active pixel sensors (APS), complementary metal-oxide semiconductor (CMOS) image sensors or N-type metal-oxide semiconductor (NMOS) image sensors. In the present disclosure, the detector may be a photomultiplier tube, such as a photomultiplier tube having an active detecting surface area of each region that ranges from 0.01 $cm^2$ to 10 $cm^2$, such as from 0.05 $cm^2$ to 9 $cm^2$, such as from 0.1 $cm^2$ to 8 $cm^2$, such as from 0.5 $cm^2$ to 7 $cm^2$ and including from 1 $cm^2$ to 5 $cm^2$.

Where the subject systems include multiple fluorescent light detectors, each fluorescent light detector may be the same, or the collection of fluorescent light detectors may be a combination of different types of detectors. For example, where the subject systems include two fluorescent light detectors, the first fluorescent light detector can be a CCD-type device and the second fluorescent light detector (or imaging sensor) can be a CMOS-type device. Both the first and second fluorescent light detectors may be CCD-type devices. Both the first and second fluorescent light detectors may be CMOS-type devices. The first fluorescent light detector may be a CCD-type device and the second fluorescent light detector may be a photomultiplier tube (PMT). The first fluorescent light detector may be a CMOS-type device and the second fluorescent light detector may be a photomultiplier tube. Both the first and second fluorescent light detectors may photomultiplier tubes.

Fluorescent light detectors of interest can be configured to measure collected light at one or more wavelengths, such as at 2 or more wavelengths, such as at 5 or more different wavelengths, such as at 10 or more different wavelengths, such as at 25 or more different wavelengths, such as at 50 or more different wavelengths, such as at 100 or more different wavelengths, such as at 200 or more different wavelengths, such as at 300 or more different wavelengths and including measuring light emitted by a sample in the flow stream at 400 or more different wavelengths.2 or more detectors in the modules as described herein may be configured to measure the same or overlapping wavelengths of collected light.

Fluorescent light detectors of interest may be configured to measure collected light over a range of wavelengths (e.g., 200 nm - 1000 nm). In the present disclosure, detectors of interest may be configured to collect spectra of light over a range of wavelengths. For example, flow cytometers may include one or more detectors configured to collect spectra of light over one or more of the wavelength ranges of 200 nm - 1000 nm. Detectors of interest can be configured to measure light emitted by a sample in the flow stream at one or more specific wavelengths. For example, modules may include one or more detectors configured to measure light at one or more of 450 nm, 518 nm, 519 nm, 561 nm, 578 nm, 605 nm, 607 nm, 625 nm, 650 nm, 660 nm, 667 nm, 670 nm, 668 nm, 695 nm, 710 nm, 723 nm, 780 nm, 785 nm, 647 nm, 617 nm and any combinations thereof. In the present disclosure, one or more detectors may be configured to be paired with specific fluorophores, such as those used with the sample in a fluorescence assay.

In the present disclosure, the light detection system described herein may be part of a flow cytometer. Flow cytometers may include any suitable mechanism(s) for providing sheath fluid and sample fluid to the sample fluid input coupler and sheath fluid input coupler. For example, the sample fluid input coupler may be fluidically connected to a sample fluid line (e.g., tubing) fluidically connected to a sample fluid reservoir. Similarly, the sheath fluid input coupler may be fluidically connected to a sheath fluid line fluidically connected to a sheath fluid reservoir. Similarly, flow cytometers may include any suitable mechanism(s) for managing waste from the flow stream. The fluidic output coupler may be fluidically connected to a waste line fluidically connected to a waste reservoir. Fluid management systems that may be adapted for use in the subject flow cytometers are provided in U.S. Patent Application Publication No. 2022/0341838.

The flow cytometer may include a flow cell. Flow cells of interest include a cuvette configured to transport particles in a flow stream. As discussed herein, a "flow cell" is described in its conventional sense to refer to a component containing a flow channel for a liquid flow stream for transporting particles in a sheath fluid. Cuvettes of interest have a passage (i.e., flow channel) running therethrough. The flow stream for which the flow channel is configured may include a liquid sample injected from a sample tube. The flow cell may include a light-accessible flow channel. The cuvette may be comprised of, e.g., quartz, glass, clear plastic, and the like. Cuvettes can be formed from silica, such as fused silica. In some cases, the flow cell is configured for irradiation with light from a light source at one or more interrogation points. The "interrogation point" discussed herein refers to a region within the flow cell in which the particle is irradiated by light from the light source, e.g., for analysis. The size of the interrogation point may vary as desired. For example, where 0 μm represents the optical axis of light emitted by the light source, the interrogation point may range from -50 μm to 50 μm, such as -25 μm to 40 μm, and including -15 μm to 30 μm. Depending on certain considerations (e.g., the number and arrangement of lasers), multiple irradiation points may exist within the flow cells.

The flow cell may include, or is configured for use with, a sample injection port configured to provide a sample to the flow cell. The sample injection system may be configured to provide suitable flow of sample to the flow cell inner chamber (i.e., flow channel). Depending on the desired characteristics of the flow stream, the rate of sample conveyed to the flow cell chamber by the sample injection port may be1 μL/min or more, such as 2 μL/min or more, such as 3 μL/min or more, such as 5 μL/min or more, such as 10 μL/min or more, such as 15 μL/min or more, such as 25 μL/min or more, such as 50 μL/min or more and including 100 μL/min or more, where the rate of sample conveyed to the flow cell chamber by the sample injection port may be 1μL/sec or more, such as 2 μL/sec or more, such as 3 μL/sec or more, such as 5 μL/sec or more, such as 10 μL/sec or more, such as 15 μL/sec or more, such as 25 μL/sec or more, such as 50 μL/sec or more and including 100 μL/sec or more.

The sample injection port may be an orifice positioned in a wall of the inner chamber or may be a conduit positioned at the proximal end of the inner chamber. Where the sample injection port is an orifice positioned in a wall of the inner chamber, the sample injection port orifice may be any suitable shape where cross-sectional shapes of interest include, but are not limited to: rectilinear cross-sectional shapes, e.g., squares, rectangles, trapezoids, triangles, hexagons, etc., curvilinear cross-sectional shapes, e.g., circles, ovals, etc., as well as irregular shapes, e.g., a parabolic bottom portion coupled to a planar top portion. In the present disclosure, the sample injection port can have a circular orifice. The size of the sample injection port orifice may vary depending on shape,, having an opening ranging from 0.1 mm to 5.0 mm, e.g., 0.2 to 3.0 mm, e.g., 0.5 mm to 2.5 mm, such as from 0.75 mm to 2.25 mm, such as from 1 mm to 2 mm and including from 1.25 mm to 1.75 mm, for example 1.5 mm.

The sample injection port may be a conduit positioned at a proximal end of the flow cell inner chamber. For example, the sample injection port may be a conduit positioned to have the orifice of the sample injection port in line with the flow cell orifice. Where the sample injection port is a conduit positioned in line with the flow cell orifice, the cross-sectional shape of the sample injection tube may be any suitable shape where cross-sectional shapes of interest include, but are not limited to: rectilinear cross-sectional shapes, e.g., squares, rectangles, trapezoids, triangles, hexagons, etc., curvilinear cross-sectional shapes, e.g., circles, ovals, as well as irregular shapes, e.g., a parabolic bottom portion coupled to a planar top portion. The orifice of the conduit may vary depending on shapehaving an opening ranging from 0.1 mm to 5.0 mm, e.g., 0.2 to 3.0 mm, e.g., 0.5 mm to 2.5 mm, such as from 0.75 mm to 2.25 mm, such as from 1 mm to 2 mm and including from 1.25 mm to 1.75 mm, for example 1.5 mm. The shape of the tip of the sample injection port may be the same or different from the cross-section shape of the sample injection tube. For example, the orifice of the sample injection port may include a beveled tip having a bevel angle ranging from 1° to 10°, such as from 2° to 9°, such as from 3° to 8°, such as from 4° to 7° and including a bevel angle of 5°.

The flow cell may also include a sheath fluid injection port configured to provide a sheath fluid to the flow cell. The sheath fluid injection system may be configured to provide a flow of sheath fluid to the flow cell inner chamber, for example in conjunction with the sample to produce a laminated flow stream of sheath fluid surrounding the sample flow stream.

Depending on the desired characteristics of the flow stream, the rate of sheath fluid conveyed to the flow cell chamber by the may be 25 μL/sec or more, such as 50 μL/sec or more, such as 75 μL/sec or more, such as 100 μL/sec or more, such as 250 μL/sec or more, such as 500 μL/sec or more, such as 750 μL/sec or more, such as 1000 μL/sec or more and including 2500 μL/sec or more.

The sheath fluid injection port may be an orifice positioned in a wall of the inner chamber. The sheath fluid injection port orifice may be any suitable shape where cross-sectional shapes of interest include, but are not limited to: rectilinear cross-sectional shapes, e.g., squares, rectangles, trapezoids, triangles, hexagons, etc., curvilinear cross-sectional shapes, e.g., circles, ovals, as well as irregular shapes, e.g., a parabolic bottom portion coupled to a planar top portion. The size of the sheath fluid injection port orifice may vary depending on shape, having an opening ranging from 0.1 mm to 5.0 mm, e.g., 0.2 mm to 3.0 mm, e.g., 0.5 mm to 2.5 mm, such as from 0.75 mm to 2.25 mm, such as from 1 mm to 2 mm and including from 1.25 mm to 1.75 mm, for example 1.5 mm.

The system may include or are operationally coupled to a flow cytometer. Suitable flow cytometry systems may include, but are not limited to those described in Ormerod (ed.), Flow Cytometry: A Practical Approach, Oxford Univ. Press (1997); Jaroszeski et al. (eds.), Flow Cytometry Protocols, Methods in Molecular Biology No. 91, Humana Press (1997); Practical Flow Cytometry, 3rd ed., Wiley-Liss (1995); Virgo, et al. (2012) Ann Clin Biochem. Jan;49(pt 1):17-28; Linden, et. al., Semin Throm Hemost. 2004 Oct;30(5):502-11; Alison, et al. J Pathol, 2010 Dec; 222(4):335-344; and Herbig, et al. (2007) Crit Rev Ther Drug Carrier Syst. 24(3):203-255..Flow cytometry systems of interest include BD Biosciences FACSCanto™ flow cytometer, BD Biosciences FACSCanto™ II flow cytometer, BD Accuri™ flow cytometer, BD Accuri™ C6 Plus flow cytometer, BD Biosciences FACSCelesta™ flow cytometer, BD Biosciences FACSLyric™ flow cytometer, BD Biosciences FACSVerse™ flow cytometer, BD Biosciences FACSymphony™ flow cytometer, BD Biosciences LSRFortessa™ flow cytometer, BD Biosciences LSRFortessa™ X-20 flow cytometer, BD Biosciences FACSPresto™ flow cytometer, BD Biosciences FACSVia™ flow cytometer and BD Biosciences FACSCalibur™ cell sorter, a BD Biosciences FACSCount™ cell sorter, BD Biosciences FACSLyric™ cell sorter, BD Biosciences Via™ cell sorter, BD Biosciences Influx™ cell sorter, BD Biosciences Jazz™ cell sorter, BD Biosciences Aria™ cell sorter, BD Biosciences FACSAria™ II cell sorter, BD Biosciences FACSAria™ III cell sorter, BD Biosciences FACSAria™ Fusion cell sorter and BD Biosciences FACSMelody™ cell sorter, BD Biosciences FACSymphony™ S6 cell sorter, BD Biosciences FACSDiscover™ cell sorter, or the like.

The subject system can be flow cytometric systems, such those described in U.S. Patent Nos. 10,663,476; 10,620,111; 10,613,017; 10,605,713; 10,585,031; 10,578,542; 10,578,469; 10,481,074; 10,302,545; 10,145,793; 10,113,967; 10,006,852; 9,952,076; 9,933,341; 9,726,527; 9,453,789; 9,200,334; 9,097,640; 9,095,494; 9,092,034; 8,975,595; 8,753,573; 8,233,146; 8,140,300; 7,544,326; 7,201,875; 7,129,505; 6,821,740; 6,813,017; 6,809,804; 6,372,506; 5,700,692; 5,643,796; 5,627,040; 5,620,842; 5,602,039; 4,987,086; 4,498,766.

The flow cytometer may be configured as an imaging flow cytometer. For example, the subject system can be a flow cytometry system configured for imaging particles in a flow stream by fluorescence imaging using radiofrequency tagged emission (FIRE), such as described in Diebold, et al. Nature Photonics Vol. 7(10); 806-810 (2013) as well as described in U.S. Patent Nos. 9,423,353; 9,784,661; 9,983,132; 10,006,852; 10,036,699; 10,078,045; 10,222,316; 10,288,546; 10,324,019; 10,408,758; 10,451,538; 10,620,111; 10,684,211; 10,845,295; 10,935,482; 10,935,485; 11,105,728; 11,280,718; 11,327,016; 11,366,052; 11,371,937; 11,692,926; 11,630,053; 11,774,343; 11,940,369; and 11,946,851.

**FIG. 2** shows a system 200 for flow cytometry in accordance with the present disclosure. System 200 includes a laser 201 configured to irradiate particles 211 in flow stream 214 at interrogation point 215 within flow cell 210. While the example of **FIG. 2** shows a single laser, it is understood that multiple lasers could also be used. The laser beam from laser 201 is directed to focusing lens 202 which focuses the beam onto the portion of a fluid stream where particles 211 of a sample are located, within the flow cell 210. The flow cell 210 is part of a fluidics system which directs particles, typically one at a time, in a stream to the focused laser beam for interrogation. Alternatively, where the flow cytometer is a stream-in-air cytometer, a nozzle top may be employed.

As shown in **FIG. 2,** flow cell 210 is fluidically connected to sheath fluid reservoir 203 comprising a sheath fluid and sample fluid reservoir 204 comprising a sample fluid. Sheath fluid from sheath fluid reservoir 203 is provided to at least one sheath fluid injection port 208 via conduit (i.e., sheath fluid line) 207. In addition, sample fluid containing particles 211 from sample fluid reservoir 204 is provided to sample injection port 206 via conduit (i.e., sample fluid line) 205. Sample injection port 206 is fluidically connected to sample injector 213 (e.g., sample injection needle) which is configured to introduce particles 211 into the interior of flow cell 210. Particles 211 are hydrodynamically focused via sheath fluid entering from sheath fluid injection port 208 such that flow stream 214 forms downstream of tapered portion 212 of flow cell 210. Particles emitting at the distal end of flow cell 210 may be disposed of and/or collected via any suitable protocol. For example, depending on the type of flow cytometry being performed, particles may be collected at the distal end of flow cell 210, e.g., via a waste line. Alternatively, particles may be sorted.

The light from the laser beam(s) interacts with the particles 211 in the sample by diffraction, refraction, reflection, scattering, and absorption with re-emission at various different wavelengths depending on the characteristics of the particle such as its size, internal structure, and the presence of one or more fluorescent molecules attached to or naturally present on or in the particle. The fluorescence emissions as well as the diffracted light, refracted light, reflected light, and scattered light may be routed to one or more detectors. In particular, forward scattered light (FSC) is routed to forward-scattered light detector 223. The forward-scattered light detector 223 is positioned slightly off axis from the direct beam through the flow cell 210 and is configured to detect diffracted light, the excitation light that travels through or around the particle in mostly a forward direction. The intensity of the light detected by the forward-scattered light detector 223 is dependent on the overall size of the particle. The forward-scatter detector can include, e.g., a photodiode. Positioned between forward-scattered light detector 223 are optical filter 221a and scatter bar 222. Optical filter 221a may be configured to filter out at least one wavelength of non-FSC light, while scatter bar 222 may be configured to prevent the incident beam from laser 201 (i.e., non-scattered light) from being detected by forward-scattered light detector 223.

In addition, side-scattered light (SSC) is detected by side-scattered light detector 224. In other words, side-scattered light detector 224 is configured to detect refracted and reflected light from the surfaces and internal structures of the particles 211 that tend to increase with increasing particle complexity of structure. In the example of **FIG. 2,** flow cytometer 200 includes dichroic mirror 220a configured to reflect SSC light to side-scattered light detector 224 while passing non-SSC (e.g., fluorescent) light. Optical filter 221b is configured to prevent at least one wavelength of non-SSC light from being detected by side-scattered light detector 224. Also shown are fluorescent light detectors 225a-225c which are each configured to detect different wavelengths of fluorescent light. For example, dichroic mirror 220b may be configured to reflect fluorescent light (FL) corresponding to a first wavelength (or range of wavelengths) to fluorescent light detector 225a while passing other wavelengths of light. Optical filter 221c may be configured to prevent at least one wavelength of light that does not correspond to the first wavelength (or range of wavelengths) from being detected by fluorescent light detector 225a. Similarly, dichroic mirror 220c is configured to reflect FL light corresponding to a second wavelength (or range of wavelengths) to fluorescent light detector 225b while passing a third wavelength of light (or range of wavelengths) for detection by fluorescent light detector 225c. Optical filter 221d is configured to prevent at least one wavelength of light that does not correspond to the second wavelength (or range of wavelengths) from being detected by fluorescent light detector 225b. In addition, Optical filter 221e is configured to prevent at least one wavelength of light that does not correspond to the third wavelength (or range of wavelengths) from being detected by fluorescent light detector 225c.

One of skill in the art will recognize that a flow cytometer in accordance the present disclosure is not limited to the flow cytometer depicted in **FIG. 2,** but can include any flow cytometer known in the art. For example, a flow cytometer may have any number of lasers, beam splitters, filters, and detectors at various wavelengths and in various different configurations. For example, while **FIG. 2** shows 3 fluorescent light detectors for illustrative purposes, it is understood that any suitable number of fluorescent light detectors may be employed.

In operation, cytometer operation is controlled by a controller/processor 290, and the measurement data from the detectors can be stored in the memory 295 and processed by the controller/processor 290. Although not shown explicitly, the controller/processor 290 is coupled to the detectors to receive the output signals therefrom, and may also be coupled to electrical and electromechanical components of the flow cytometer to control the laser 201, fluid flow parameters, and the like. Input/output (I/O) capabilities 297 may be provided also in the system. The memory 295, controller/processor 290, and I/O 297 may be entirely provided as an integral part of the flow cytometer. A display may also form part of the I/O capabilities 297 for presenting experimental data to users of the cytometer 200. Alternatively, some or all of the memory 295 and controller/processor 290 and I/O capabilities may be part of one or more external devices such as a general purpose computer. Some or all of the memory 295 and controller/processor 290 can be in wireless or wired communication with the cytometer 210. The controller/processor 290 in conjunction with the memory 295 and the I/O 297 can be configured to perform various functions related to the preparation and analysis of a flow cytometer experiment.

Different fluorescent molecules in a fluorochrome panel used for a flow cytometer experiment will emit light in their own characteristic wavelength bands. The particular fluorescent labels used for an experiment and their associated fluorescent emission bands may be selected to generally coincide with the filter windows of the detectors. The I/O 297 can be configured to receive data regarding a flow cytometer experiment having a panel of fluorescent labels and a plurality of cell populations having a plurality of markers, each cell population having a subset of the plurality of markers. The I/O 297 can also be configured to receive biological data assigning one or more markers to one or more cell populations, marker density data, emission spectrum data, data assigning labels to one or more markers, and cytometer configuration data. Flow cytometer experiment data, such as label spectral characteristics and flow cytometer configuration data can also be stored in the memory 295. The controller/processor 290 can be configured to evaluate one or more assignments of labels to markers.

The subject system may be a are particle sorting system configured to sort particles with an enclosed particle sorting module, such as described in U.S. Patent Publication No. 2017/0299493, filed on March 28, 2017. In the present disclosure, particles (e.g., cells) of the sample are sorted using a sort decision module having a plurality of sort decision units, such as those described in U.S. Patent Publication No. 2020/0256781, filed on December 23, 2019. A system for sorting components of a sample include a particle sorting module having deflection plates, such as described in U.S.

Patent Publication No. 2017/0299493, filed on March 28, 2017.

In the present disclosure, the system may be a fluorescence imaging using radiofrequency tagged emission image-enabled particle sorter, such as depicted in **FIG. 3.** Particle sorter 300 includes a light irradiation component 300a which includes light source 301 (e.g., 488 nm laser) which generates output beam of light 301a that is split with beamsplitter 302 into beams 302a and 302b. Light beam 302a is propagated through acousto-optic device (e.g., an acousto-optic deflector, AOD) 303 to generate an output beam 303a having one or more angularly deflected beams of light. Output beam 303a generated from acousto-optic device 303 may include a local oscillator beam and a plurality of radiofrequency comb beams. Light beam 302b is propagated through acousto-optic device (e.g., an acousto-optic deflector, AOD) 304 to generate an output beam 304a having one or more angularly deflected beams of light. Output beam 304a generated from acousto-optic device 304 may include a local oscillator beam and a plurality of radiofrequency comb beams. Output beams 303a and 304a generated from acousto-optic devices 303 and 304, respectively are combined with beamsplitter 305 to generate output beam 305a which is conveyed through an optical component 306 (e.g., an objective lens) to irradiate particles in flow cell 307. In the present disclosure, acousto-optic device 303 (AOD) can split a single laser beam into an array of beamlets, each having different optical frequency and angle. Second AOD 304 tunes the optical frequency of a reference beam, which is then overlapped with the array of beamlets at beam combiner 305. In the present disclosure, the light irradiation system having a light source and acousto-optic device can also include those described in Schraivogel, et al. ("High-speed fluorescence image-enabled cell sorting" Science (2022), 375 (6578): 315-320) and United States Patent Publication No. 2021/0404943.

Output beam 305a irradiates sample particles 308 propagating through flow cell 307 (e.g., with sheath fluid 309) at irradiation region 310. As shown in irradiation region 310, a plurality of beams (e.g., angularly deflected radiofrequency shifted beams of light depicted as dots across irradiation region 310) overlaps with a reference local oscillator beam (depicted as the shaded line across irradiation region 310). Due to their differing optical frequencies, the overlapping beams exhibit a beating behavior, which causes each beamlet to carry a sinusoidal modulation at a distinct frequency $f_{1-n}$.

Light from the irradiated sample is conveyed to light detection system 300b that includes a plurality of photodetectors. Light detection system 300b includes forward scattered light photodetector 311 for generating forward scatter images 311a and a side scattered light photodetector 312 for generating side scatter images 312a. Light detection system 300b also includes brightfield photodetector 313 for generating light loss images 313a. Forward scatter detector 311 and side scatter detector 312 may be photodiodes (e.g., avalanche photodiodes, APDs). Brightfield photodetector 313 may be a photomultiplier tube (PMT). Fluorescence from the irradiated sample is also detected with fluorescence photodetectors 314-317. Photodetectors 314-317 may be photomultiplier tubes. Light from the irradiated sample is directed to the side scatter detection channel 312 and fluorescence detection channels 314-317 through beamsplitter 320. Light detection system 300b includes bandpass optical components 321, 322, 323 and 324 (e.g., dichroic mirrors) for propagating predetermined wavelength of light to photodetectors 314-317. Optical component 321 may be a 534 nm/40 nm bandpass. Optical component 322 may be a 586 nm/42 nm bandpass. Optical component 323 may be a 700 nm/54 nm bandpass. Optical component 324 may be a 783 nm/56 nm bandpass. The first number represents the center of a spectral band. The second number provides a range of the spectral band. Thus, a 510/20 filter extends 10 nm on each side of the center of the spectral band, or from 500 nm to 520 nm.

Data signals generated in response to light detected in scattered light detection channels 311 and 312, brightfield light detection channel 313 and fluorescence detection channels 314-317 are processed by real-time digital processing with processors 350 and 351. Images 311a-317a can be generated in each light detection channel based on the data signals generated in processors 350 and 351. Image-enabled sorting is performed in response to a sort signal generated in sort trigger 352. Sorting component 300c includes deflection plates 331 for deflecting particles into sample containers 332 or to waste stream 333. Sort component 300c may be configured to sort particles with an enclosed particle sorting module, such as those described in U.S. Patent Publication No. 2017/0299493, filed on March 28, 2017. In the present disclosure, sorting component 300c may include a sort decision module having a plurality of sort decision units, such as those described in U.S. Patent Publication No. 2020/0256781.

The system may be a particle analyzer where the particle analysis system 401 (**FIG. 4**) can be used to analyze and characterize particles, with or without physically sorting the particles into collection vessels. **FIG. 4** shows a functional block diagram of a particle analysis system for computational based sample analysis and particle characterization. The particle analysis system 401 can be a flow system. The particle analysis system 401 includes a fluidics system 402. The fluidics system 402 can include or be coupled with a sample tube 405 and a moving fluid column within the sample tube in which particles 403 (e.g. cells) of a sample move along a common sample path 409.

The particle analysis system 401 includes a detection system 404 configured to collect a signal from each particle as it passes one or more detection stations along the common sample path. A detection station 408 generally refers to a monitored area 407 of the common sample path. Detection can, in some implementations, include detecting light or one or more other properties of the particles 403 as they pass through a monitored area 407. In **FIG. 4,** one detection station 408 with one monitored area 407 is shown. Some implementations of the particle analysis system 401 can include multiple detection stations. Furthermore, some detection stations can monitor more than one area.

Each signal is assigned a signal value to form a data point for each particle. As described above, this data can be referred to as event data. The data point can be a multidimensional data point including values for respective properties measured for a particle. The detection system 404 is configured to collect a succession of such data points in a first-time interval.

The particle analysis system 401 can also include a control system 406. The control system 406 can include one or more processors, an amplitude control circuit and/or a frequency control circuit. The control system shown can be operationally associated with the fluidics system 402. The control system can be configured to generate a calculated signal frequency for at least a portion of the first-time interval based on a Poisson distribution and the number of data points collected by the detection system 404 during the first time interval. The control system 406 can be further configured to generate an experimental signal frequency based on the number of data points in the portion of the first time interval. The control system 406 can additionally compare the experimental signal frequency with that of a calculated signal frequency or a predetermined signal frequency.

**FIG. 5** shows a functional block diagram for one example of a particle analyzer control system, such as an analytics controller (i.e., processor) 500, for analyzing and displaying biological events. An analytics controller 500 can be configured to implement a variety of processes for controlling graphic display of biological events.

A particle analyzer or sorting system 502 can be configured to acquire biological event data. For example, a flow cytometer can generate flow cytometric event data. The particle analyzer 502 can be configured to provide biological event data to the analytics controller 500. A data communication channel can be included between the particle analyzer or sorting system 502 and the analytics controller 500. The biological event data can be provided to the analytics controller 500 via the data communication channel. Analytics controller 500 may be a processor configured to carry out methods of the invention, e.g., by applying a distance-based classification model to determine a density distinguishing threshold in a size-based analyte feature space, applying a density-based clustering algorithm to separate the analyte data into a high-density cluster and a low-density cluster based on the density threshold and classifying the analyte data based on the high-density cluster and the low density cluster based on the size-based analyte feature space.

The analytics controller 500 can be configured to receive biological event data from the particle analyzer or sorting system 502. The biological event data received from the particle analyzer or sorting system 502 can include flow cytometric event data. The analytics controller 500 can be configured to provide a graphical display including a first plot of biological event data to a display device 506. The analytics controller 500 can be further configured to render a region of interest as a gate around a population of biological event data shown by the display device 506, overlaid upon the first plot, for example. The gate can be a logical combination of one or more graphical regions of interest drawn upon a single parameter histogram or bivariate plot. The display can be used to display particle parameters or saturated detector data.

The analytics controller 500 can be further configured to display the biological event data on the display device 506 within the gate differently from other events in the biological event data outside of the gate. For example, the analytics controller 500 can be configured to render the color of biological event data contained within the gate to be distinct from the color of biological event data outside of the gate. The display device 506 can be implemented as a monitor, a tablet computer, a smartphone, or other electronic device configured to present graphical interfaces.

The analytics controller 500 can be configured to receive a gate selection signal identifying the gate from a first input device. For example, the first input device can be implemented as a mouse 510. The mouse 510 can initiate a gate selection signal to the analytics controller 500 identifying the gate to be displayed on or manipulated via the display device 506 (e.g., by clicking on or in the desired gate when the cursor is positioned there). In some implementations, the first device can be implemented as the keyboard 508 or other means for providing an input signal to the analytics controller 500 such as a touchscreen, a stylus, an optical detector, or a voice recognition system. Some input devices can include multiple inputting functions. In such implementations, the inputting functions can each be considered an input device. For example, as shown **in FIG. 5,** the mouse 510 can include a right mouse button and a left mouse button, each of which can generate a triggering event.

The triggering event can cause the analytics controller 500 to alter the manner in which the data is displayed, which portions of the data is actually displayed on the display device 506, and/or provide input to further processing such as selection of a population of interest for particle sorting.

The analytics controller 500 can be configured to detect when gate selection is initiated by the mouse 510. The analytics controller 500 can be further configured to automatically modify plot visualization to facilitate the gating process. The modification can be based on the specific distribution of biological event data received by the analytics controller 500.

The analytics controller 500 can be connected to a storage device 504. The storage device 504 can be configured to receive and store biological event data from the analytics controller 500. The storage device 504 can also be configured to receive and store flow cytometric event data from the analytics controller 500. The storage device 504 can be further configured to allow retrieval of biological event data, such as flow cytometric event data, by the analytics controller 500.

A display device 506 can be configured to receive display data from the analytics controller 500. The display data can comprise plots of biological event data and gates outlining sections of the plots. The display device 506 can be further configured to alter the information presented according to input received from the analytics controller 500 in conjunction with input from the particle analyzer 502, the storage device 504, the keyboard 508, and/or the mouse 510.

The analytics controller 500 can generate a user interface to receive example events for sorting. For example, the user interface can include a control for receiving example events or example images. The example events or images or an example gate can be provided prior to collection of event data for a sample, or based on an initial set of events for a portion of the sample.

**FIG. 6A** is a schematic drawing of a particle sorter system 600 (e.g., the particle analyzer or sorting system 502) in accordance with the present disclosure. The particle sorter system 600 can be a cell sorter system. As shown in **FIG. 6A,** a drop formation transducer 602 (e.g., piezo-oscillator) is coupled to a fluid conduit 601, which can be coupled to, can include, or can be, a nozzle 603. Within the fluid conduit 601, sheath fluid 604 hydrodynamically focuses a sample fluid 606 comprising particles 609 into a moving fluid column 608 (e.g., a stream). Within the moving fluid column 608, particles 609 (e.g., cells) are lined up in single file to cross a monitored area 611 (e.g., where laser-stream intersect), irradiated by an irradiation source 612 (e.g., a laser). Vibration of the drop formation transducer 602 causes moving fluid column 608 to break into a plurality of drops 610, some of which contain particles 609.

In operation, a detection station 614 (e.g., an event detector) identifies when a particle of interest (or cell of interest) crosses the monitored area 611. Detection station 614 feeds into a timing circuit 628, which in turn feeds into a flash charge circuit 630. At a drop break off point, informed by a timed drop delay ($\Delta t$), a flash charge can be applied to the moving fluid column 608 such that a drop of interest carries a charge. The drop of interest can include one or more particles or cells to be sorted. The charged drop can then be sorted by activating deflection plates (not shown) to deflect the drop into a vessel such as a collection tube or a multi- well or microwell sample plate where a well or microwell can be associated with drops of particular interest. As shown in **FIG.** 6A, the drops can be collected in a drain receptacle 638.

A detection system 616 (e.g., a drop boundary detector) serves to automatically determine the phase of a drop drive signal when a particle of interest passes the monitored area 611. An exemplary drop boundary detector is described in U.S. Pat. No. 7,679,039. The detection system 616 allows the instrument to accurately calculate the place of each detected particle in a drop. The detection system 616 can feed into an amplitude signal 620 and/or phase 618 signal, which in turn feeds (via amplifier 622) into an amplitude control circuit 626 and/or frequency control circuit 624. The amplitude control circuit 626 and/or frequency control circuit 624, in turn, controls the drop formation transducer 602. The amplitude control circuit 626 and/or frequency control circuit 624 can be included in a control system.

Sort electronics (e.g., the detection system 616, the detection station 614 and a processor 640) can be coupled with a memory configured to store the detected events and a sort decision based thereon. The sort decision can be included in the event data for a particle. In some implementations, the detection system 616 and the detection station 614 can be implemented as a single detection unit or communicatively coupled such that an event measurement can be collected by one of the detection system 616 or the detection station 614 and provided to the non-collecting element.

**FIG. 6B** is a schematic drawing of a particle sorter system, in accordance with the present disclosure. The particle sorter system 600 shown in **FIG. 6B,** includes deflection plates 652 and 654. A charge can be applied via a stream-charging wire in a barb. This creates a stream of droplets 610 containing particles 610 for analysis. The particles can be illuminated with one or more light sources (e.g., lasers) to generate light scatter and fluorescence information. The information for a particle is analyzed such as by sorting electronics or other detection system (not shown in FIG. 6B). The deflection plates 652 and 654 can be independently controlled to attract or repel the charged droplet to guide the droplet toward a destination collection receptacle (e.g., one of 672, 674, 676, or 678). As shown in **FIG. 6B,** the deflection plates 652 and 654 can be controlled to direct a particle along a first path 662 toward the receptacle 674 or along a second path 668 toward the receptacle 678. If the particle is not of interest (e.g., does not exhibit scatter or illumination information within a specified sort range), deflection plates may allow the particle to continue along a flow path 664. Such uncharged droplets may pass into a waste receptacle such as via aspirator 670.

The sorting electronics can be included to initiate collection of measurements, receive fluorescence signals for particles, and determine how to adjust the deflection plates to cause sorting of the particles. Example implementations shown in **FIG. 6B** include the BD FACSAria™ line of flow cytometers commercially provided by Becton, Dickinson and Company (Franklin Lakes, NJ).

## COMPUTER-CONTROLLED SYSTEMS

The system may include a display and operator input device. Operator input devices may, for example, be a keyboard, mouse, or the like. The processing module includes a processor which has access to a memory having instructions stored thereon for performing the steps of the subject methods. The processing module may include an operating system, a graphical user interface (GUI) controller, a system memory, memory storage devices, and input-output controllers, cache memory, a data backup unit, and many other devices. The processor may be a commercially available processor, or it may be one of other processors that are or will become available. The processor executes the operating system and the operating system interfaces with firmware and hardware in a well-known manner, and facilitates the processor in coordinating and executing the functions of various computer programs that may be written in a variety of programming languages, such as Java, Perl, C++, Python, other high level or low level languages, as well as combinations thereof, as is known in the art. The operating system, typically in cooperation with the processor, coordinates and executes functions of the other components of the computer. The operating system also provides scheduling, input-output control, file and data management, memory management, and communication control and related services, all in accordance with known techniques. The processor may include analog electronics which provide feedback control, such as for example negative feedback control.

The system memory may be any of a variety of known or future memory storage devices. Examples include any commonly available random access memory (RAM), magnetic medium such as a resident hard disk or tape, an optical medium such as a read and write compact disc, flash memory devices, or other memory storage device. The memory storage device may be any of a variety of known or future devices, including a compact disk drive, a tape drive, or a diskette drive. Such types of memory storage devices typically read from, and/or write to, a program storage medium (not shown) such as a compact disk. Any of these program storage media, or others now in use or that may later be developed, may be considered a computer program product. As will be appreciated, these program storage media typically store a computer software program and/or data. Computer software programs, also called computer control logic, typically are stored in system memory and/or the program storage device used in conjunction with the memory storage device.

A computer program product can be described comprising a computer usable medium having control logic (computer software program, including program code) stored therein. The control logic, when executed by the processor the computer, causes the processor to perform functions described herein. Some functions may be implemented primarily in hardware using, for example, a hardware state machine. Implementation of the hardware state machine so as to perform the functions described herein will be apparent to those skilled in the relevant arts.

Memory may be any suitable device in which the processor can store and retrieve data, such as magnetic, optical, or solid-state storage devices (including magnetic or optical disks or tape or RAM, or any other suitable device, either fixed or portable). The processor may include a general-purpose digital microprocessor suitably programmed from a computer readable medium carrying necessary program code. Programming can be provided remotely to processor through a communication channel, or previously saved in a computer program product such as memory or some other portable or fixed computer readable storage medium using any of those devices in connection with memory. For example, a magnetic or optical disk may carry the programming, and can be read by a disk writer/reader. Systems of the disclosure also include programming, e.g., in the form of computer program products, algorithms for use in practicing the methods as described above. Programming according to the present disclosure can be recorded on computer readable media, e.g., any medium that can be read and accessed directly by a computer. Such media include, but are not limited to: magnetic storage media, such as floppy discs, hard disc storage medium, and magnetic tape; optical storage media such as CD-ROM; electrical storage media such as RAM and ROM; portable flash drive; and hybrids of these categories such as magnetic/optical storage media.

The processor may also have access to a communication channel to communicate with a user at a remote location. By remote location is meant the user is not directly in contact with the system and relays input information to an input manager from an external device, such as a computer connected to a Wide Area Network ("WAN"), telephone network, satellite network, or any other suitable communication channel, including a mobile telephone (i.e., smartphone).

The system according to the present disclosure may be configured to include a communication interface. The communication interface may include a receiver and/or transmitter for communicating with a network and/or another device. The communication interface can be configured for wired or wireless communication, including, but not limited to, radio frequency (RF) communication (e.g., RadioFrequency Identification (RFID), Zigbee communication protocols, Wi-Fi, infrared, wireless Universal Serial Bus (USB), Ultra Wide Band (UWB), Bluetooth® communication protocols, and cellular communication, such as code division multiple access (CDMA) or Global System for Mobile communications (GSM).

The communication interface may be configured to include one or more communication ports, e.g., physical ports or interfaces such as a USB port, a USB-C port, an RS-232 port, or any other suitable electrical connection port to allow data communication between the subject systems and other external devices such as a computer terminal (for example, at a physician's office or in hospital environment) that is configured for similar complementary data communication.

The communication interface may be configured for infrared communication, Bluetooth® communication, or any other suitable wireless communication protocol to enable the subject systems to communicate with other devices such as computer terminals and/or networks, communication enabled mobile telephones, personal digital assistants, or any other communication devices which the user may use in conjunction.

The communication interface may be configured to provide a connection for data transfer utilizing Internet Protocol (IP) through a cell phone network, Short Message Service (SMS), wireless connection to a personal computer (PC) on a Local Area Network (LAN) which is connected to the internet, or Wi-Fi connection to the internet at a Wi-Fi hotspot.

The subject system can be configured to wirelessly communicate with a server device via the communication interface, e.g., using a common standard such as 802.11 or Bluetooth® **RF** protocol, or an IrDA infrared protocol. The server device may be another portable device, such as a smart phone, Personal Digital Assistant (PDA) or notebook computer; or a larger device such as a desktop computer, appliance, etc. The server device may have a display, such as a liquid crystal display (LCD), as well as an input device, such as buttons, a keyboard, mouse or touch-screen.

The communication interface can be configured to automatically or semiautomatically communicate data stored in the subject systems, e.g., in an optional data storage unit, with a network or server device using one or more of the communication protocols and/or mechanisms described above.

Output controllers may include controllers for any of a variety of known display devices for presenting information to a user, whether a human or a machine, whether local or remote. If one of the display devices provides visual information, this information typically may be logically and/or physically organized as an array of picture elements. A graphical user interface (GUI) controller may include any of a variety of known or future software programs for providing graphical input and output interfaces between the system and a user, and for processing user inputs. The functional elements of the computer may communicate with each other via system bus. Some of these communications may be accomplished in alternatives using network or other types of remote communications. The output manager may also provide information generated by the processing module to a user at a remote location, e.g., over the Internet, phone or satellite network, in accordance with known techniques. The presentation of data by the output manager may be implemented in accordance with a variety of known techniques. As some examples, data may include SQL, HTML or XML documents, email or other files, or data in other forms. The data may include Internet URL addresses so that a user may retrieve additional SQL, HTML, XML, or other documents or data from remote sources. The one or more platforms present in the subject systems may be any type of known computer platform or a type to be developed in the future, although they typically will be of a class of computer commonly referred to as servers. However, they may also be a main-frame computer, a workstation, or other computer type. They may be connected via any known or future type of cabling or other communication system including wireless systems, either networked or otherwise. They may be co-located or they may be physically separated. Various operating systems may be employed on any of the computer platforms, possibly depending on the type and/or make of computer platform chosen. Appropriate operating systems include Windows® NT®, Windows® XP, Windows® 7, Windows® 8, Windows® 10, iOS®, macOS®, Linux®, Ubuntu®, Fedora®, OS/400®, i5/OS®, IBM i®, Android™, SGI IRIX®, Oracle Solaris® and others.

**FIG. 7** depicts a general architecture of an example computing device 700 according to the present disclosure. The general architecture of the computing device 700 depicted in **FIG. 7** includes an arrangement of computer hardware and software components. It is not necessary, however, that all of these generally conventional elements be shown in order to provide an enabling disclosure. As illustrated, the computing device 700 includes a processing unit 710, a network interface 720, a computer readable medium drive 730, an input/output device interface 740, a display 750, and an input device 760, all of which may communicate with one another by way of a communication bus. The network interface 720 may provide connectivity to one or more networks or computing systems. The processing unit 710 may thus receive information and instructions from other computing systems or services via a network. The processing unit 710 may also communicate to and from memory 770 and further provide output information for an optional display 750 via the input/output device interface 740. For example, an analysis software (e.g., data analysis software or program such as FlowJo®) stored as executable instructions in the non-transitory memory of the analysis system can display the flow cytometry event data to a user. The input/output device interface 740 may also accept input from the optional input device 760, such as a keyboard, mouse, digital pen, microphone, touch screen, gesture recognition system, voice recognition system, gamepad, accelerometer, gyroscope, or other input device.

The memory 770 may contain computer program instructions (grouped as modules or components) that the processing unit 710 executes in order to implement one or more embodiments. The memory 770 generally includes RAM, ROM and/or other persistent, auxiliary or non-transitory computer-readable media. The memory 770 may store an operating system 772 that provides computer program instructions for use by the processing unit 710 in the general administration and operation of the computing device 700. Data may be stored in data storage device 790. The memory 770 may further include computer program instructions and other information for implementing aspects of the present disclosure.

## NON-TRANSITORY COMPUTER-READABLE STORAGE MEDIA

An aspect of the present disclosure further includes non-transitory computer readable storage media having instructions for practicing the subject method, such as to practice a one or more computer implemented method described herein. Computer readable storage media may be employed on one or more computers for complete automation or partial automation of a system for practicing methods described herein. In the present disclosure, instructions in accordance with the method described herein can be coded onto a computer-readable medium in the form of "programming", where the term "computer readable medium" as used herein refers to any non-transitory storage medium that participates in providing instructions and data to a computer for execution and processing. Examples of suitable non-transitory storage media include a floppy disk, hard disk, optical disk, magneto-optical disk, CD-ROM, CD-R, magnetic tape, non-volatile memory card, ROM, DVD-ROM, Blue-ray disk, solid state disk, and network attached storage (NAS), whether or not such devices are internal or external to the computer. A file containing information can be "stored" on computer readable medium, where "storing" means recording information such that it is accessible and retrievable at a later date by a computer. The computer-implemented method described herein can be executed using programming that can be written in one or more of any number of computer programming languages. Such languages include, for example, Python, Java, Java Script, C, C#, C++, Go, R, Swift, PHP, as well as many others.

The non-transitory computer readable storage medium may include algorithm for irradiating a sample comprising particles in a flow stream with a light source in a flow cytometer, algorithm for detecting light from the irradiated particles with a light detection system comprising a photodetector, algorithm for measuring autofluorescence spectra generated by the particles in the sample and algorithm for assessing collinearity between the autofluorescence spectra generated by two or more different particles in the sample.

The sample can have a plurality of different particles and the non-transitory computer readable storage medium includes algorithm for measuring the autofluorescence spectra generated by each of the different particles in the sample. The particles of the sample may have one or more fluorochromes and the non-transitory computer readable storage medium includes algorithm for assessing the collinearity between the autofluorescence spectrum of one or more of the particles and the fluorescence spectrum of one or more fluorochromes.

The non-transitory computer readable storage medium may include algorithm for measuring autofluorescence from a sample of unlabeled particles. The non-transitory computer readable storage medium may include algorithm for measuring autofluorescence from a sample of single-stained control particles. The non-transitory computer readable storage medium may include algorithm for measuring autofluorescence from a sample of particles having a plurality of fluorochromes. The non-transitory computer readable storage medium may include algorithm for selecting a population of autofluorescence spectra to assess collinearity. The non-transitory computer readable storage medium may include algorithm for selecting the population of autofluorescence spectra by generating a scatter plot of fluorescence parameters for particles of the sample and gating one or more populations on the scatter plot based on median fluorescence intensity measured for each of the particles. The non-transitory computer readable storage medium may include algorithm for selecting the population of autofluorescence spectra by applying an unsupervised clustering algorithm to identify the particle populations. The unsupervised clustering algorithm may include one or more of self-organizing maps clustering, K-means clustering, hierarchical clustering, density-based spatial clustering of applications with noise (DBSCAN), Gaussian mixture clustering, spectral clustering, MeanShift clustering, hierarchical and density-based clustering, apriori algorithm, fuzzy c-means clustering, centroid based clustering and Birch algorithm. The unsupervised clustering algorithm may be a self-organizing maps algorithm (e.g., FlowSOM).

The non-transitory computer readable storage medium may include algorithm for selecting the population of autofluorescence spectra using a statistical analysis algorithm. In The statistical analysis algorithm may include one or more of principal component analysis (PCA), singular value decomposition (SVD), factor analysis (FA), partial least squares (PLS), correspondence analysis (CA), multiple correspondence analysis (MCA), hierarchical cluster analysis (HCA), linear discriminant analysis and matrix factorization. The statistical analysis algorithm may include dimensionality reduction. The non-transitory computer readable storage medium may include algorithm for determining the autofluorescence spectra of the particles based on the median fluorescence intensity (MFI) of each particle population.

The non-transitory computer readable storage medium may include algorithm for evaluating unmixing performance of two or more autofluorescence spectra generated by the particles in the sample. The non-transitory computer readable storage medium may include algorithm for evaluating unmixing performance by generating a spectral matrix associated with fluorescence spectra of the one or more fluorochromes and one or more autofluorescence spectra generated by the particles in the sample, applying the spectral matrix to unmix the fluorescence spectra generated by unstained controls, single-stained controls, stained sample or any combination thereof and calculating one or more of unmixing bias and unmixing variance. The non-transitory computer readable storage medium may include algorithm for calculating the unmixing bias by measuring the presence of false-positive unmixed fluorochrome signal associated with the autofluorescence spectra. The non-transitory computer readable storage medium may include algorithm for determining that false-positive unmixed fluorochrome signal associated with the autofluorescence spectra is absent in unmixed fluorochrome channels in all generated particle populations of the sample. The non-transitory computer readable storage medium may include algorithm for calculating the unmixing variance by measuring unmixing-dependent spread in unmixed fluorochrome signals. The non-transitory computer readable storage medium may include algorithm for identifying the autofluorescence spectra generated by the particles in the sample that minimizes unmixing bias.

The non-transitory computer readable storage medium may include algorithm for assessing collinearity, such as having algorithm for generating a spectral matrix associated with the autofluorescence generated by the particles in the sample, algorithm for calculating an inverse matrix from the generated spectral matrix and algorithm for identifying the autofluorescence spectra that is associated with variance in data generated by the flow cytometer using the autofluorescence spectra. The non-transitory computer readable storage medium may include algorithm for identifying the autofluorescence spectra that contributes to variance in the flow cytometer data.

The non-transitory computer readable storage medium may include algorithm for identifying the autofluorescence spectra that are affected by variance in the flow cytometer data. The non-transitory computer readable storage medium may include algorithm for identifying the autofluorescence spectra that contributes to variance in the flow cytometer data. The non-transitory computer readable storage medium may include algorithm for identifying the autofluorescence spectra that are affected by variance in the flow cytometer data. The inverse matrix may be a pseudoinverse matrix. The pseudoinverse matrix may be a Moore-Penrose pseudoinverse matrix. The inverse matrix may be a gramian inverse matrix. The inverse matrix may be calculated according to the following equation:

$$G = (M^T M)^{-1}$$

where:

G is the gramian inverse matrix;
M is the spectral matrix; and
$M^T$ is the transpose of the spectral matrix.

The non-transitory computer readable storage medium may include algorithm for analyzing the calculated inverse matrix by deriving a quantitative metric from the inverse matrix. The quantitative metric may abe a matrix norm. The quantitative metric may be a vector norm. The non-transitory computer readable storage medium may include algorithm for identifying the autofluorescence spectra generated by the particles in the sample that minimizes generated data variance. The non-transitory computer readable storage medium may include algorithm for identifying the autofluorescence spectra which minimizes generated data variance by identifying the autofluorescence spectra which exhibit the greatest spectral matrix conditioning. The non-transitory computer readable storage medium may include algorithm for identifying the autofluorescence spectra generated by the particles in the sample that minimizes unmixing bias and minimizes generated data variance.

The non-transitory computer readable storage medium may include algorithm for removing the autofluorescence contribution from the generated flow cytometer data. The non-transitory computer readable storage medium may include algorithm for iteratively identifying the autofluorescence spectra generated by the particles in the sample that minimizes generated data variance.

The flow cytometer system may include a display for visualizing the assessed collinearity of the autofluorescence spectra. The non-transitory computer readable storage medium may include algorithm for producing on a display a visualization of the assessed collinearity of the autofluorescence spectra in the generated data. The visualization may highlight the autofluorescence spectra that would be associated with variance in the generated data. The visualization may include a panel hotspot matrix. The visualization may include a diagonal visualization of the panel hotspot matrix. The visualization may include a spread correlation matrix. The diagonal values of the spectral matrix's correlation matrix may include variance inflation factors (also referred to herein as spreading inflation factors, SIFs) The non-transitory computer readable storage medium may include algorithm for measuring spreading inflation factors (SIFs) from the hotspot matrix. The non-transitory computer readable storage medium may include algorithm for assessing the measured spreading inflation factors to determine whether they are confined to the autofluorescence spectra.

The non-transitory computer readable storage medium may include algorithm for assessing the collinearity between the autofluorescence spectra by evaluating variance decomposition proportion (VDP). In the present disclosure, the non-transitory computer readable storage medium includes algorithm for assessing by variance decomposition proportion that the measured spreading inflation factors are confined to the autofluorescence spectra based on the assessed collinearity of the autofluorescence spectra. The non-transitory computer readable storage medium may include algorithm for evaluating variance decomposition proportion by singular value decomposition (SVD) to identify collinear sets of spectra. The non-transitory computer readable storage medium may include algorithm for calculating a condition index for each singular value generated by the singular value decomposition. The non-transitory computer readable storage medium may include algorithm for calculating the condition index as a ratio of the largest calculated singular value to each individually calculated singular value. The non-transitory computer readable storage medium may include algorithm for identifying autofluorescence spectra that have a variance decomposition proportion for each condition index of greater than 0.3. The non-transitory computer readable storage medium may include algorithm for identifying autofluorescence spectra that have a condition index of greater than 15. The non-transitory computer readable storage medium may include algorithm for identifying the autofluorescence spectra that have a variance decomposition proportion for each condition index of greater than 0.3 and a condition index of greater than 15 as being collinear.

The non-transitory computer readable storage medium may include algorithm for removing the autofluorescence spectra which are determined to be collinear. The non-transitory computer readable storage medium may include algorithm for removing the autofluorescence spectra that contribute to the greatest amount of variance in the flow cytometer data. The non-transitory computer readable storage medium may include algorithm for determining the optimal combination of autofluorescence spectra to use when analyzing the flow cytometry data. The non-transitory computer readable storage medium may include algorithm for removing the fluorescence spectra of fluorochromes which contribute to variance in the flow cytometer data based on the calculated collinearity of the fluorochrome fluorescence spectra with one or more of the autofluorescence spectra. The non-transitory computer readable storage medium may include algorithm for removing the autofluorescence spectra that contributes to the greatest amount of unmixing bias in spectral unmixing of the flow cytometer data.

The non-transitory computer readable storage medium may be employed on one or more computer systems having a display and operator input device. Operator input devices may, for example, be a keyboard, mouse, or the like. The processing module includes a processor which has access to a memory having instructions stored thereon for performing the steps of the subject methods. The processing module may include an operating system, a graphical user interface (GUI) controller, a system memory, memory storage devices, and input-output controllers, cache memory, a data backup unit, and many other devices. The processor may be a commercially available processor or it may be one of other processors that are or will become available. The processor executes the operating system and the operating system interfaces with firmware and hardware in a well-known manner, and facilitates the processor in coordinating and executing the functions of various computer programs that may be written in a variety of programming languages, such as those mentioned above, other high level or low level languages, as well as combinations thereof, as is known in the art. The operating system, typically in cooperation with the processor, coordinates and executes functions of the other components of the computer. The operating system also provides scheduling, input-output control, file and data management, memory management, and communication control and related services, all in accordance with known techniques.

## KITS

An aspect of the present disclosure further include a kit, where kits include storage media such as a magneto-optical disk, CD-ROM, CD-R, magnetic tape, non-volatile memory card, ROM, DVD-ROM, Blue-ray disk, solid state disk, and network attached storage (NAS). Any of these program storage media, or others now in use or that may later be developed, may be included in the subject kits. The program storage media may include instructions for analyzing flow cytometer data as in the methods and for use with the systems described herein. The instructions contained on computer readable media provided in the subject kit, or a portion thereof, can be implemented as software components of a software for analyzing data. Computer-controlled systems according to the instant disclosure may function as a software "plugin" for an existing software package (e.g., FlowJo®).

In addition to the above components, the subject kit may further include instructions. These instructions may be present in the subject kits in a variety of forms, one or more of which may be present in the kit. One form in which these instructions may be present is as printed information on a suitable medium or substrate, e.g., a piece or pieces of paper on which the information is printed, in the packaging of the kit, in a package insert, and the like. Yet another form of these instructions is a computer readable medium, e.g., diskette, compact disk (CD), portable flash drive, and the like, on which the information has been recorded. Yet another form of these instructions that may be present is a website address which may be used via the internet to access the information at a removed site.

## UTILITY

The subject method, system and computer system find use in a variety of applications where it is desirable to calibrate or optimize a light detection system (e.g., having a photodetector), such as in a particle analyzer. The subject method and system also find use for light detection systems that are used to analyze and sort particle components in a sample in a fluid medium, such as a biological sample. The present disclosure also finds use in flow cytometry where it is desirable to provide a flow cytometer with improved cell sorting accuracy, enhanced particle collection, reduced energy consumption, particle charging efficiency, more accurate particle charging and enhanced particle deflection during cell sorting. The present disclosure reduces the need for user input or manual adjustment during sample analysis with a flow cytometer. In the present disclosure, the subject method and system provide fully automated protocols so that adjustments to a flow cytometer during use require little, if any human input.

## EXPERIMENTAL

The following is presented by way of example and not by way of limitation:

Example Workflow for Determining an Optimized Combination of Autofluorescence Spectra for a Spectral Unmixing Matrix

Step 1: Acquire data for unstained sample(s) containing cell type(s) of interest on the flow cytometer. Data for single-color controls and full panel staining may also be acquired.

Step 2: Define a candidate set of autofluorescence spectra based on analysis of unstained sample(s).

a. Option 1: Manual gating: A user visually inspects plots of scatter and fluorescence parameters, and draw gates around distinct populations that may have different autofluorescences. The median fluorescence intensity (MFI) of each population is calculated in each detector, and these MFIs are used to determine different autofluorescence (AF) spectra.

b. Option 2: Unsupervised clustering: Use a clustering technique (e.g., FlowSOM) to identify distinct populations without manual human gating. The median fluorescence intensity (MFI) of each population is calculated in each detector, and these MFIs are used to determine different autofluorescence spectra.

c. Option 3: Statistical analysis (PCA, SVD, other matrix factorization or component analysis techniques): Statistical techniques are used to identify constituent spectral components that explain most of the variance in the total measured data.

d. Option 4: A combination of gating, clustering, and statistical analysis (e.g., the data is coarsely segmented via manual gating, and component analysis is used to identify spectra within each manually gated subset).

Step 3: Evaluate the unmixing performance of different combinations of autofluorescence spectra determined in Step 2 above.

a. Create a spectral matrix containing the panel fluorochrome spectra and some subset of autofluorescence spectra

b. Use the generated spectral unmixing matrix to unmix the unstained controls, single stained controls, and/or fully stained sample

c. Analyze the unmixed performance of those samples based on two types of metrics:

i. Metrics that evaluate bias in the unmixing: do populations have false positive unmixed fluorochrome signal due to autofluorescence? If autofluorescence is appropriately unmixed, there should be minimal false-positive signal in unmixed fluorochrome channels on all populations. This can be seen by confirming that the unmixed fluorochrome MFIs of populations in an unstained recording is close to zero, for example.

ii. Metrics that evaluate variance (spread) in the unmixing: is there large unmixing-dependent spreading as measured by Hotspot (SIFs) or VDP in the unmixed fluorochrome signals? If so, the selected AF subset may be overly collinear with the fluorochrome spectra, causing high fluorochrome variance. High SIFs within the unmixing matrix are acceptable as long as they are confined to the autofluorescence spectra themselves. This can be confirmed by VDP analysis.

Step 4: Based on the above metrics, find a combination of autofluorescence spectra that balances bias and unmixing-dependent spreading simultaneously.

Once the desired optimized combination of autofluorescence spectra has been identified, use the determined subset in a spectral matrix when unmixing the samples of interest in a flow cytometry experiment.

Notwithstanding the appended claims, the disclosure is also defined by the following clauses:

1. A method comprising:

irradiating a sample comprising particles in a flow stream with a light source in a flow cytometer;
detecting light from the irradiated particles with a light detection system comprising a photodetector;
measuring autofluorescence spectra generated by the particles in the sample; and
assessing collinearity between the autofluorescence spectra generated by two or more different particles in the sample.

2. The method according to clause 1, wherein the sample comprises a plurality of different particles and the method comprises measuring the autofluorescence spectra generated by each of the different particles in the sample.

3. The method according to any one of clauses 1-2, wherein the method comprises measuring autofluorescence from one or more of: a sample of unlabeled particles, single-stained control particles and particles comprising a plurality of fluorochromes.

4. The method according to any one of clauses 1-3, wherein the method comprises selecting a population of autofluorescence spectra for assessing collinearity.

5. The method according to clause 4, wherein selecting the population of autofluorescence spectra comprises:

generating a scatter plot comprising fluorescence parameters for particles of the sample; and
gating one or more populations on the scatter plot based on median fluorescence intensity measured for each of the particles.

6. The method according to any one of clauses 4-5, wherein selecting the population of autofluorescence spectra comprises applying an unsupervised clustering algorithm to identify the particle populations.

7. The method according to clause 6, wherein the unsupervised clustering algorithm is selected from the group consisting of self-organizing maps clustering, K-means clustering, hierarchical clustering, density-based spatial clustering of applications with noise (DBSCAN), Gaussian mixture clustering, spectral clustering, MeanShift clustering, hierarchical and density-based clustering, apriori algorithm, fuzzy c-means clustering, centroid based clustering and Birch algorithm.

8. The method according to clause 7, wherein the unsupervised clustering algorithm comprises a self-organizing maps algorithm.

9. The method according to any one of clauses 4-8, wherein selecting the population of autofluorescence spectra comprises a statistical analysis algorithm.

10. The method according to clause 9, wherein the statistical analysis algorithm is selected from the group consisting of principal component analysis (PCA), singular value decomposition (SVD), factor analysis (FA), partial least squares (PLS), correspondence analysis (CA), multiple correspondence analysis (MCA), hierarchical cluster analysis (HCA), linear discriminant analysis and matrix factorization.

11. The method according to clause 10, wherein the statistical analysis algorithm comprises dimensionality reduction.

12. The method according to any one of clauses 4-11, wherein the autofluorescence spectra of the particles is determined based on the median fluorescence intensity of each particle population.

13. The method according to any one of clauses 1-12, wherein the particles further comprise one or more fluorochromes.

14. The method according to any one of clauses 1-13, wherein the method comprises assessing the collinearity between the autofluorescence spectrum of one or more of the particles and the fluorescence spectrum of one or more fluorochromes.

15. The method according to any one of clauses 1-14, wherein the method comprises evaluating unmixing performance of two or more autofluorescence spectra generated by the particles in the sample.

16. The method according to clause 15, wherein evaluating unmixing performance comprises:

generating a spectral matrix associated with fluorescence spectra of the one or more fluorochromes and one or more autofluorescence spectra generated by the particles in the sample; and
applying the spectral matrix to unmix the fluorescence spectra generated by unstained controls, single-stained controls, stained sample or any combination thereof; and
calculating one or more of unmixing bias and unmixing variance.

17. The method according to clause 16, wherein calculating the unmixing bias comprises measuring the presence of false-positive unmixed fluorochrome signal associated with the autofluorescence spectra.

18. The method according to clause 17, wherein the method comprises determining that false-positive unmixed fluorochrome signal associated with the autofluorescence spectra is absent in unmixed fluorochrome channels in all generated particle populations of the sample.

19. The method according to any one of clauses 16-18, wherein calculating the unmixing variance comprises measuring unmixing-dependent spread in unmixed fluorochrome signals.

20. The method according to any one of clauses 1-19, wherein assessing the collinearity comprises:

generating a spectral matrix associated with the autofluorescence generated by the particles in the sample;
calculating an inverse matrix from the generated spectral matrix; and
identifying the autofluorescence spectra that is associated with variance in data generated by the flow cytometer using the autofluorescence spectra.

21. The method according to clause 20, wherein the method comprises identifying the autofluorescence spectra that contributes to variance in the flow cytometer data.

22. The method according to any one of clauses 20-21, wherein the method comprises identifying the autofluorescence spectra that are affected by variance in the flow cytometer data.

23. The method according to any one of clauses 20-22, wherein the inverse matrix is a pseudoinverse matrix.
24. The method according to clause 23, wherein the pseudoinverse matrix is a Moore-Penrose pseudoinverse matrix.
25. The method according to any one of clauses 20-24, wherein the inverse matrix is a gramian inverse matrix.
26. The method according to clause 25, wherein the inverse matrix is calculated according to the following equation:

$$G = (M^T M)^{-1}$$

wherein:

G is the gramian inverse matrix;
*M* is the spectral matrix; and
$M^T$ is the transpose of the spectral matrix.

27. The method according to any one of clauses 20-26, wherein analyzing the calculated inverse matrix comprises deriving a quantitative metric from the inverse matrix.
28. The method according to clause 27, wherein the quantitative metric is a matrix norm.
29. The method according to clause 27, wherein the quantitative metric is a vector norm.
30. The method according to any one of clauses 1-29, wherein the method further comprises identifying the autofluorescence spectra generated by the particles in the sample that minimizes unmixing bias.
31. The method according to any one of clauses 1-29, wherein the method further comprises identifying the autofluorescence spectra generated by the particles in the sample that minimizes generated data variance.
32. The method according to clause 31, wherein identifying the autofluorescence spectra which minimize generated data variance comprises identifying the autofluorescence spectra which exhibit the greatest spectral matrix conditioning.
33. The method according to any one of clauses 30-32, wherein the method comprises identifying the autofluorescence spectra generated by the particles in the sample that minimizes unmixing bias and minimizes generated data variance.
34. The method according to any one of clauses 30-33, wherein the method comprises removing the autofluorescence contribution from the generated flow cytometer data.
35. The method according to any one of clauses 30-34, wherein the method comprises iteratively identifying the autofluorescence spectra generated by the particles in the sample that minimizes generated data variance.
36. The method according to any one of clauses 20-35, wherein the flow cytometer data is spectrally unmixed flow cytometer data.
37. The method according to any one of clauses 20-36, wherein the flow cytometer data is compensated flow cytometer data.
38. The method according to any one of clauses 20-37, wherein the variance comprises noise in the flow cytometer data.
39. The method according to any one of clauses 1-38, further comprising producing a visualization of the assessed collinearity of the autofluorescence spectra in the generated data.
40. The method according to clause 39, wherein the visualization highlights the autofluorescence spectra that would be associated with variance in the generated data.
41. The method according to any one of clauses 39-40, wherein the visualization comprises a panel hotspot matrix.
42. The method according to clause 41, wherein the visualization comprises a diagonal visualization of the panel hotspot matrix.
43. The method according to any one of clauses 39-42, wherein the visualization comprises a spread correlation matrix.
44. The method according to any one of clauses 41-3, wherein the method comprises measuring spreading inflation factors (SIFs) from the hotspot matrix.
45. The method according to clause 44, wherein the method further comprises assessing whether the measured spreading inflation factors are confined to the autofluorescence spectra.
46. The method according to any one of clauses 1-45, wherein assessing the collinearity between the autofluorescence spectra comprises evaluating variance decomposition proportion (VDP).
47. The method according to clause 46, wherein the method comprises assessing by variance decomposition proportion that the measured spreading inflation factors are confined to the autofluorescence spectra based on the assessed collinearity of the autofluorescence spectra.
48. The method according to any one of clauses 46-47, wherein evaluating variance decomposition proportion comprises singular value decomposition (SVD) to identify collinear sets of spectra.

49. The method according to clause 48, wherein the method further comprises calculating a condition index for each singular value generated by the singular value decomposition.

50. The method according to clause 49, wherein the condition index is calculated as a ratio of the largest calculated singular value to each individually calculated singular value.

51. The method according to any one of clauses 46-50, wherein the method comprises identifying autofluorescence spectra that have a variance decomposition proportion for each condition index of greater than 0.3.

52. The method according to any one of clauses 46-51, wherein the method comprises identifying autofluorescence spectra that have a condition index of greater than 15.

53. The method according to any one of clauses 51-52, wherein the method comprises identifying the autofluorescence spectra that have a variance decomposition proportion for each condition index of greater than 0.3 and a condition index of greater than 15 as being collinear.

54. The method according to any one of clauses 1-53, wherein the method further comprises removing the autofluorescence spectra which are determined to be collinear.

55. The method according to any one of clauses 1-53, wherein the method further comprises removing the autofluorescence spectra that contribute to the greatest amount of variance in the flow cytometer data.

56. The method according to any one of clauses 1-53, wherein the method further comprises removing the autofluorescence spectra that contributes to the greatest amount of unmixing bias in spectral unmixing of the flow cytometer data.

57. A flow cytometer system comprising:

a light source for irradiating a sample comprising particles in a flow stream;
a light detection system comprising a photodetector for detecting light from the irradiated particles; and
a processor comprising memory operably coupled to the processor wherein the memory comprises instructions stored thereon, which when executed by the processor, cause the processor to:

measure autofluorescence spectra generated by the particles in the sample; and
assess collinearity between the autofluorescence spectra generated by two or more different particles in the sample.

58. The system according to clause 57, wherein the sample comprises a plurality of different particles and the memory comprises instructions for measuring the autofluorescence spectra generated by each of the different particles in the sample.

59. The system according to any one of clauses 57-58, wherein the memory comprises instructions for measuring autofluorescence from one or more of: a sample of unlabeled particles, single-stained control particles and particles comprising a plurality of fluorochromes.

60. The system according to any one of clauses 57-59, wherein the memory comprises instructions for selecting a population of autofluorescence spectra for assessing collinearity.

61. The system according to clause 60, wherein the memory comprises instructions for selecting the population of autofluorescence spectra by:

generating a scatter plot comprising fluorescence parameters for particles of the sample; and
gating one or more populations on the scatter plot based on median fluorescence intensity measured for each of the particles.

62. The system according to any one of clauses 60-61, wherein the memory comprises instructions for selecting the population of autofluorescence spectra by applying an unsupervised clustering algorithm to identify the particle populations.

63. The system according to clause 62, wherein the unsupervised clustering algorithm is selected from the group consisting of self-organizing maps clustering, K-means clustering, hierarchical clustering, density-based spatial clustering of applications with noise (DBSCAN), Gaussian mixture clustering, spectral clustering, MeanShift clustering, hierarchical and density-based clustering, apriori algorithm, fuzzy c-means clustering, centroid based clustering and Birch algorithm.

64. The system according to clause 63, wherein the unsupervised clustering algorithm comprises a self-organizing maps algorithm.

65. The system according to any one of clauses 60-64, wherein the memory comprises instructions for selecting the population of autofluorescence spectra by applying a statistical analysis algorithm.

66. The system according to clause 65, wherein the statistical analysis algorithm is selected from the group consisting of principal component analysis (PCA), singular value decomposition (SVD), factor analysis (FA), partial least squares (PLS), correspondence analysis (CA), multiple correspondence analysis (MCA), hierarchical cluster analysis (HCA), linear discriminant analysis and matrix factorization.

67. The system according to clause 66, wherein the statistical analysis algorithm comprises dimensionality reduction.

68. The system according to any one of clauses 60-67, wherein the memory comprises instructions for determining the autofluorescence spectra of the particles based on the median fluorescence intensity of each particle population.

69. The system according to any one of clauses 57-68, wherein the particles further comprise one or more fluorochromes.

70. The system according to any one of clauses 57-69, wherein the memory comprises instructions for assessing the collinearity between the autofluorescence spectrum of one or more of the particles and the fluorescence spectrum of one or more fluorochromes.

71. The system according to any one of clauses 57-70, wherein the memory comprises instructions for evaluating unmixing performance of two or more autofluorescence spectra generated by the particles in the sample.

72. The system according to clause 71, wherein the memory comprises instructions for evaluating unmixing performance by:

generating a spectral matrix associated with fluorescence spectra of the one or more fluorochromes and one or more autofluorescence spectra generated by the particles in the sample; and
applying the spectral matrix to unmix the fluorescence spectra generated by unstained controls, single-stained controls, stained sample or any combination thereof; and
calculating one or more of unmixing bias and unmixing variance.

73. The system according to clause 72, wherein the memory comprises instructions for calculating the unmixing bias by measuring the presence of false-positive unmixed fluorochrome signal associated with the autofluorescence spectra.

74. The system according to clause 72, wherein the memory comprises instructions for determining that false-positive unmixed fluorochrome signal associated with the autofluorescence spectra is absent in unmixed fluorochrome channels in all generated particle populations of the sample.

75. The system according to any one of clauses 72-74, wherein the memory comprises instructions for calculating the unmixing variance by measuring unmixing-dependent spread in unmixed fluorochrome signals.

76. The system according to any one of clauses 57-75, wherein the memory comprises instructions for assessing the collinearity by:

generating a spectral matrix associated with the autofluorescence generated by the particles in the sample;
calculating an inverse matrix from the generated spectral matrix; and
identifying the autofluorescence spectra that is associated with variance in data generated by the flow cytometer using the autofluorescence spectra.

77. The system according to clause 76, wherein the memory comprises instructions for identifying the autofluorescence spectra that contributes to variance in the flow cytometer data.

78. The system according to any one of clauses 76-77, wherein the memory comprises instructions for identifying the autofluorescence spectra that are affected by variance in the flow cytometer data.

79. The system according to any one of clauses 76-78, wherein the inverse matrix is a pseudoinverse matrix.

80. The system according to clause 79, wherein the pseudoinverse matrix is a Moore-Penrose pseudoinverse matrix.

81. The system according to any one of clauses 76-80, wherein the inverse matrix is a gramian inverse matrix.

82. The system according to clause 81, wherein the memory comprises instructions for calculating the inverse matrix according to the following equation:

$$G = (M^T M)^{-1}$$

wherein:

G is the gramian inverse matrix;
M is the spectral matrix; and
$M^T$ is the transpose of the spectral matrix.

83. The system according to any one of clauses 76-82, wherein the memory comprises instructions for analyzing the calculated inverse matrix by deriving a quantitative metric from the inverse matrix.

84. The system according to clause 83, wherein the quantitative metric is a matrix norm.

85. The system according to clause 83, wherein the quantitative metric is a vector norm.

86. The system according to any one of clauses 57-85, wherein the memory comprises instructions for identifying the autofluorescence spectra generated by the particles in the sample that minimizes unmixing bias.

87. The system according to any one of clauses 57-86, wherein the memory comprises instructions for identifying the autofluorescence spectra generated by the particles in the sample that minimizes generated data variance.

88. The system according to clause 87, wherein the memory comprises instructions for identifying the autofluorescence spectra which minimizes generated data variance by identifying the autofluorescence spectra which exhibit the greatest spectral matrix conditioning.

89. The system according to any one of clauses 86-88, wherein the memory comprises instructions for identifying the autofluorescence spectra generated by the particles in the sample that minimizes unmixing bias and minimizes generated data variance.

90. The system according to any one of clauses 86-89, wherein the memory comprises instructions for removing the autofluorescence contribution from the generated flow cytometer data.

91. The system according to any one of clauses 86-90, wherein the memory comprises instructions for iteratively identifying the autofluorescence spectra generated by the particles in the sample that minimizes generated data variance.

92. The system according to any one of clauses 57-91, wherein the flow cytometer data is spectrally unmixed flow cytometer data.

93. The system according to any one of clauses 57-91, wherein the flow cytometer data is compensated flow cytometer data.

94. The system according to any one of clauses 57-93, wherein the variance comprises noise in the flow cytometer data.

95. The system according to any one of clauses 57-94, wherein the memory comprises instructions for producing on a display a visualization of the assessed collinearity of the autofluorescence spectra in the generated data.

96. The system according to clause 95, wherein the visualization highlights the autofluorescence spectra that would be associated with variance in the generated data.

97. The system according to any one of clauses 95-96, wherein the visualization comprises a panel hotspot matrix.

98. The system according to clause 59, wherein the visualization comprises a diagonal visualization of the panel hotspot matrix.

99. The system according to any one of clauses 95-98, wherein the visualization comprises a spread correlation matrix.

100. The system according to any one of clauses 95-99, wherein the memory comprises instructions for measuring spreading inflation factors (SIFs) from the hotspot matrix.

101. The system according to clause 100, wherein the memory comprises instructions for assessing whether the measured spreading inflation factors are confined to the autofluorescence spectra.

102. The system according to any one of clauses 57-101, wherein the memory comprises instructions for assessing the collinearity between the autofluorescence spectra by evaluating variance decomposition proportion (VDP).

103. The system according to clause 102, wherein the memory comprises instructions for assessing by variance decomposition proportion that the measured spreading inflation factors are confined to the autofluorescence spectra based on the assessed collinearity of the autofluorescence spectra.

104. The system according to clause 102, wherein the memory comprises instructions for evaluating variance decomposition proportion by singular value decomposition (SVD) to identify collinear sets of spectra.

105. The system according to clause 63, wherein the memory comprises instructions for calculating a condition index for each singular value generated by the singular value decomposition.

106. The system according to clause 105, wherein the memory comprises instructions for calculating the condition index as a ratio of the largest calculated singular value to each individually calculated singular value.

107. The system according to any one of clauses 102-106, wherein the memory comprises instructions for identifying autofluorescence spectra that have a variance decomposition proportion for each condition index of greater than 0.3.

108. The system according to any one of clauses 102-107, wherein the memory comprises instructions for identifying autofluorescence spectra that have a condition index of greater than 15.

109. The system according to any one of clauses 107-108, wherein the memory comprises instructions for identifying the autofluorescence spectra that have a variance decomposition proportion for each condition index of greater than 0.3 and a condition index of greater than 15 as being collinear.

110. The system according to any one of clauses 57-109, wherein the memory comprises instructions for removing the autofluorescence spectra which are determined to be collinear.

111. The system according to any one of clauses 57-109, wherein the memory comprises instructions for removing the autofluorescence spectra that contribute to the greatest amount of variance in the flow cytometer data.

112. The system according to any one of clauses 57-111, wherein the memory comprises instructions for removing the autofluorescence spectra that contributes to the greatest amount of unmixing bias in spectral unmixing of the flow cytometer data.
113. A non-transitory computer readable storage medium comprising instructions stored thereon, the instructions comprising:

algorithm for irradiating a sample comprising particles in a flow stream with a light source in a flow cytometer;
algorithm for detecting light from the irradiated particles with a light detection system comprising a photodetector;
algorithm for measuring autofluorescence spectra generated by the particles in the sample; and
algorithm for assessing collinearity between the autofluorescence spectra generated by two or more different particles in the sample.

114. The non-transitory computer readable storage medium according to clause 113, wherein the sample comprises a plurality of different particles and the non-transitory computer readable storage medium comprises algorithm for measuring the autofluorescence spectra generated by each of the different particles in the sample.
115. The non-transitory computer readable storage medium according to any one of clauses 113-114, wherein the non-transitory computer readable storage medium comprises algorithm for measuring autofluorescence from one or more of: a sample of unlabeled particles, single-stained control particles and particles comprising a plurality of fluorochromes.
116. The non-transitory computer readable storage medium according to any one of clauses 113-115, wherein the non-transitory computer readable storage medium comprises algorithm for selecting a population of autofluorescence spectra for assessing collinearity.
117. The non-transitory computer readable storage medium according to clause 116, wherein the non-transitory computer readable storage medium comprises algorithm for selecting the population of autofluorescence spectra by:

generating a scatter plot comprising fluorescence parameters for particles of the sample; and
gating one or more populations on the scatter plot based on median fluorescence intensity measured for each of the particles.

118. The non-transitory computer readable storage medium according to any one of clauses 116-117, wherein the non-transitory computer readable storage medium comprises algorithm for selecting the population of autofluorescence spectra by applying an unsupervised clustering algorithm to identify the particle populations.
119. The non-transitory computer readable storage medium according to clause 118, wherein the unsupervised clustering algorithm is selected from the group consisting of self-organizing maps clustering, K-means clustering, hierarchical clustering, density-based spatial clustering of applications with noise (DBSCAN), Gaussian mixture clustering, spectral clustering, MeanShift clustering, hierarchical and density-based clustering, apriori algorithm, fuzzy c-means clustering, centroid based clustering and Birch algorithm.
120. The non-transitory computer readable storage medium according to clause 119, wherein the unsupervised clustering algorithm comprises a self-organizing maps algorithm.
121. The non-transitory computer readable storage medium according to any one of clauses 116-120, wherein the non-transitory computer readable storage medium comprises algorithm for selecting the population of autofluorescence spectra by applying a statistical analysis algorithm.
122. The non-transitory computer readable storage medium according to clause 121, wherein the statistical analysis algorithm is selected from the group consisting of principal component analysis (PCA), singular value decomposition (SVD), factor analysis (FA), partial least squares (PLS), correspondence analysis (CA), multiple correspondence analysis (MCA), hierarchical cluster analysis (HCA), linear discriminant analysis and matrix factorization.
123. The non-transitory computer readable storage medium according to clause 122, wherein the statistical analysis algorithm comprises dimensionality reduction.
124. The non-transitory computer readable storage medium according to any one of clauses 60-67, wherein the non-transitory computer readable storage medium comprises algorithm for determining the autofluorescence spectra of the particles based on the median fluorescence intensity of each particle population.
125. The non-transitory computer readable storage medium according to any one of clauses 113-124, wherein the particles further comprise one or more fluorochromes.
126. The non-transitory computer readable storage medium according to clause 125, wherein the non-transitory computer readable storage medium comprises algorithm for assessing the collinearity between the autofluorescence spectrum of one or more of the particles and the fluorescence spectrum of one or more fluorochromes.
127. The non-transitory computer readable storage medium according to any one of clauses 113-126, wherein the non-transitory computer readable storage medium comprises algorithm for evaluating unmixing performance of two or more autofluorescence spectra generated by the particles in the sample.

128. The non-transitory computer readable storage medium according to clause 127, wherein the non-transitory computer readable storage medium comprises algorithm for evaluating unmixing performance by:

generating a spectral matrix associated with fluorescence spectra of the one or more fluorochromes and one or more autofluorescence spectra generated by the particles in the sample; and
applying the spectral matrix to unmix the fluorescence spectra generated by unstained controls, single-stained controls, stained sample or any combination thereof; and
calculating one or more of unmixing bias and unmixing variance.

129. The non-transitory computer readable storage medium according to clause 128, wherein the non-transitory computer readable storage medium comprises algorithm for calculating the unmixing bias by measuring the presence of false-positive unmixed fluorochrome signal associated with the autofluorescence spectra.

130. The non-transitory computer readable storage medium according to clause 128, wherein the non-transitory computer readable storage medium comprises algorithm for determining that false-positive unmixed fluorochrome signal associated with the autofluorescence spectra is absent in unmixed fluorochrome channels in all generated particle populations of the sample.

131. The non-transitory computer readable storage medium according to any one of clauses 128-130, wherein the non-transitory computer readable storage medium comprises algorithm for calculating the unmixing variance by measuring unmixing-dependent spread in unmixed fluorochrome signals.

132. The non-transitory computer readable storage medium according to any one of clauses 113-132, wherein the non-transitory computer readable storage medium comprises algorithm for assessing the collinearity comprising:

algorithm for generating a spectral matrix associated with the autofluorescence generated by the particles in the sample;
algorithm for calculating an inverse matrix from the generated spectral matrix; and algorithm for identifying the autofluorescence spectra that is associated with variance in data generated by the flow cytometer using the autofluorescence spectra.

133. The non-transitory computer readable storage medium according to clause 132, wherein the non-transitory computer readable storage medium comprises algorithm for identifying the autofluorescence spectra that contributes to variance in the flow cytometer data.

134. The non-transitory computer readable storage medium according to any one of clauses 132-133, wherein the non-transitory computer readable storage medium comprises algorithm for identifying the autofluorescence spectra that are affected by variance in the flow cytometer data.

135. The non-transitory computer readable storage medium according to any one of clauses 132-134, wherein the inverse matrix is a pseudoinverse matrix.

135. The non-transitory computer readable storage medium according to clause 135, wherein the pseudoinverse matrix is a Moore-Penrose pseudoinverse matrix.

136. The non-transitory computer readable storage medium according to any one of clauses 132-135, wherein the inverse matrix is a gramian inverse matrix.

137. The non-transitory computer readable storage medium according to clause 136, wherein the non-transitory computer readable storage medium comprises algorithm for calculating the inverse matrix is calculated according to the following equation:

$$G = (M^T M)^{-1}$$

wherein:

G is the gramian inverse matrix;
M is the spectral matrix; and
$M^T$ is the transpose of the spectral matrix.

138. The non-transitory computer readable storage medium according to any one of clauses 135-137, wherein the non-transitory computer readable storage medium comprises algorithm for analyzing the calculated inverse matrix by deriving a quantitative metric from the inverse matrix.

139. The non-transitory computer readable storage medium according to clause 138, wherein the quantitative metric is a matrix norm.

140. The non-transitory computer readable storage medium according to clause 138, wherein the quantitative metric is a vector norm.

141. The non-transitory computer readable storage medium according to any one of clauses 113-140, wherein the non-transitory computer readable storage medium comprises algorithm for identifying the autofluorescence spectra generated by the particles in the sample that minimizes unmixing bias.

142. The non-transitory computer readable storage medium according to any one of clauses 113-141, wherein the non-transitory computer readable storage medium comprises algorithm for identifying the autofluorescence spectra generated by the particles in the sample that minimizes generated data variance.

143. The non-transitory computer readable storage medium according to clause 142, wherein the non-transitory computer readable storage medium comprises algorithm for identifying the autofluorescence spectra which minimize generated data variance by identifying the autofluorescence spectra which exhibit the greatest spectral matrix conditioning.

144. The non-transitory computer readable storage medium according to any one of clauses 141-143, wherein the non-transitory computer readable storage medium comprises algorithm for identifying the autofluorescence spectra generated by the particles in the sample that minimizes unmixing bias and minimizes generated data variance.

145. The non-transitory computer readable storage medium according to any one of clauses 141-144, wherein the non-transitory computer readable storage medium comprises algorithm for removing the autofluorescence contribution from the generated flow cytometer data.

146. The non-transitory computer readable storage medium according to any one of clauses 141-145, wherein the non-transitory computer readable storage medium comprises algorithm for iteratively identifying the autofluorescence spectra generated by the particles in the sample that minimizes generated data variance.

147. The non-transitory computer readable storage medium according to any one of clauses 113-146, wherein the flow cytometer data is spectrally unmixed flow cytometer data.

148. The non-transitory computer readable storage medium according to any one of clauses 113-146, wherein the flow cytometer data is compensated flow cytometer data. 149. The non-transitory computer readable storage medium according to any one of clauses 113-146, wherein the variance comprises noise in the flow cytometer data.

150. The non-transitory computer readable storage medium according to any one of clauses 113-149, wherein the non-transitory computer readable storage medium comprises algorithm for producing a visualization of the assessed collinearity of the autofluorescence spectra in the generated data.

151. The non-transitory computer readable storage medium according to clause 150, wherein the visualization highlights the autofluorescence spectra that would be associated with variance in the generated data.

152. The non-transitory computer readable storage medium according to any one of clauses 150-151, wherein the visualization comprises a panel hotspot matrix.

153. The non-transitory computer readable storage medium according to clause 152, wherein the visualization comprises a diagonal visualization of the panel hotspot matrix. 154. The non-transitory computer readable storage medium according to any one of clauses 150-153, wherein the visualization comprises a spread correlation matrix.

155. The non-transitory computer readable storage medium according to any one of clauses 152-154, wherein the memory comprises instructions for measuring spreading inflation factors (SIFs) from the hotspot matrix.

156. The system according to clause 155, wherein the memory comprises instructions for assessing whether the measured spreading inflation factors are confined to the autofluorescence spectra.

157. The non-transitory computer readable storage medium according to any one of clauses 113-156, wherein the non-transitory computer readable storage medium comprises algorithm for assessing the collinearity between the autofluorescence spectra by evaluating variance decomposition proportion (VDP).

158. The non-transitory computer readable storage medium according to clause 157, wherein the non-transitory computer readable storage medium comprises algorithm for assessing by variance decomposition proportion that the measured spreading inflation factors are confined to the autofluorescence spectra based on the assessed collinearity of the autofluorescence spectra.

159. The non-transitory computer readable storage medium according to clause 157, wherein the non-transitory computer readable storage medium comprises algorithm for evaluating variance decomposition proportion by singular value decomposition (SVD) to identify collinear sets of spectra.

160. The non-transitory computer readable storage medium according to clause 159, wherein the non-transitory computer readable storage medium comprises algorithm for calculating a condition index for each singular value generated by the singular value decomposition.

161. The non-transitory computer readable storage medium according to clause 160, wherein the non-transitory computer readable storage medium comprises algorithm for calculating the condition index as a ratio of the largest calculated singular value to each individually calculated singular value.

162. The non-transitory computer readable storage medium according to any one of clauses 157-161, wherein the non-transitory computer readable storage medium comprises algorithm for identifying autofluorescence spectra that have a variance decomposition proportion for each condition index of greater than 0.3.

163. The non-transitory computer readable storage medium according to any one of clauses 157-162, wherein the non-transitory computer readable storage medium comprises algorithm for identifying autofluorescence spectra that have a condition index of greater than 15.

164. The non-transitory computer readable storage medium according to any one of clauses 162-163, wherein the non-transitory computer readable storage medium comprises algorithm for identifying the autofluorescence spectra that have a variance decomposition proportion for each condition index of greater than 0.3 and a condition index of greater than 15 as being collinear.

165. The non-transitory computer readable storage medium according to any one of clauses 113-164, wherein the non-transitory computer readable storage medium comprises algorithm for removing the autofluorescence spectra which are determined to be collinear.

166. The non-transitory computer readable storage medium according to any one of clauses 113-164, wherein the non-transitory computer readable storage medium comprises algorithm for removing the autofluorescence spectra that contribute to the greatest amount of variance in the flow cytometer data.

167. The non-transitory computer readable storage medium according to any one of clauses 113-166, wherein the non-transitory computer readable storage medium comprises algorithm for removing the autofluorescence spectra that contributes to the greatest amount of unmixing bias in spectral unmixing of the flow cytometer data.

Although the foregoing disclosure has been described in some detail by way of illustration and example for purposes of clarity of understanding, it is readily apparent to those of ordinary skill in the art in light of the teachings of this disclosure that some changes and modifications may be made thereto without departing from the scope of the appended claims.

Accordingly, the preceding merely illustrates the principles of the disclosure. It will be appreciated that those skilled in the art will be able to devise various arrangements which, although not explicitly described or shown herein, embody the principles of the disclosure and are included within its scope. Furthermore, all examples and conditional language recited herein are principally intended to aid the reader in understanding the principles of the disclosure and the concepts contributed by the disclosure to furthering the art, and are to be construed as being without limitation to such specifically recited examples and conditions. Moreover, all statements herein reciting principles and aspects, of the disclosure as well as specific examples thereof, are intended to encompass both structural and functional equivalents thereof. Additionally, it is intended that such equivalents include both currently known equivalents and equivalents developed in the future, i.e., any elements developed that perform the same function, regardless of structure. Moreover, nothing disclosed herein is intended to be dedicated to the public regardless of whether such disclosure is explicitly recited in the claims.

The scope of the present disclosure, therefore, is not intended to be limited to the examples shown and described herein. Rather, the scope of present disclosure is embodied by the appended claims.

## Claims

**1.** A method comprising:

irradiating a sample comprising particles in a flow stream with a light source in a flow cytometer;
detecting light from the irradiated particles with a light detection system comprising a photodetector;
measuring autofluorescence spectra generated by the particles in the sample; and
assessing collinearity between the autofluorescence spectra generated by two or more different particles in the sample.

**2.** The method according to claim 1, wherein the method comprises selecting a population of autofluorescence spectra for assessing collinearity.

**3.** The method according to claim 2, wherein selecting the population of autofluorescence spectra comprises:

a) generating a scatter plot comprising fluorescence parameters for particles of the sample; and
gating one or more populations on the scatter plot based on median fluorescence intensity measured for each of the particles; or
b) applying an unsupervised clustering algorithm to identify the particle populations; or
c) applying a statistical analysis algorithm.

**4.** The method according to any one of claims 1-3, wherein the method comprises evaluating unmixing performance of two or more autofluorescence spectra generated by the particles in the sample, wherein evaluating unmixing performance comprises:

generating a spectral matrix associated with fluorescence spectra of the one or more fluorochromes and one or more autofluorescence spectra generated by the particles in the sample; and
applying the spectral matrix to unmix the fluorescence spectra generated by unstained controls, single-stained controls, stained sample or any combination thereof; and
calculating one or more of unmixing bias and unmixing variance.

**5.** The method according to claim 4, wherein calculating the unmixing bias comprises measuring the presence of false-positive unmixed fluorochrome signal associated with the autofluorescence spectra.

**6.** The method according to any one of claims 1-5, wherein assessing the collinearity comprises:

generating a spectral matrix associated with the autofluorescence generated by the particles in the sample;
calculating an inverse matrix from the generated spectral matrix; and
identifying the autofluorescence spectra that is associated with variance in data generated by the flow cytometer using the autofluorescence spectra.

**7.** The method according to any one of claims 1-6, wherein the method further comprises identifying the autofluorescence spectra generated by the particles in the sample that minimizes unmixing bias and minimizes generated data variance.

**8.** The method according to any one of claims 1-7, further comprising producing a visualization of the assessed collinearity of the autofluorescence spectra in the generated data.

**9.** The method according to claim 8, wherein the visualization comprises a panel hotspot matrix.

**10.** The method according to any one of claims 1-9, wherein assessing the collinearity between the autofluorescence spectra comprises evaluating variance decomposition proportion (VDP).

**11.** The method according to any one of claims 1-10, wherein the method further comprises removing the autofluorescence spectra which are determined to be collinear.

**12.** The method according to any one of claims 1-11, wherein the method further comprises removing the autofluorescence spectra that contribute to the greatest amount of variance in the flow cytometer data and removing the autofluorescence spectra that contributes to the greatest amount of unmixing bias in spectral unmixing of the flow cytometer data

**13.** A flow cytometer system comprising:

a light source for irradiating a sample comprising particles in a flow stream;
a light detection system comprising a photodetector for detecting light from the irradiated particles; and
a processor comprising memory operably coupled to the processor wherein the memory comprises instructions stored thereon, which when executed by the processor, cause the processor to:

measure autofluorescence spectra generated by the particles in the sample; and
assess collinearity between the autofluorescence spectra generated by two or more different particles in the sample.

**14.** The system according to claim 13, wherein the memory comprises instructions for removing the autofluorescence spectra that:

are determined to be collinear; or
contribute to the greatest amount of variance in the flow cytometer data; or
contributes to the greatest amount of unmixing bias in spectral unmixing of the flow cytometer data.

**15.** A non-transitory computer readable storage medium comprising instructions stored thereon, the instructions comprising:

algorithm for irradiating a sample comprising particles in a flow stream with a light source in a flow cytometer;
algorithm for detecting light from the irradiated particles with a light detection system comprising a photodetector;
algorithm for measuring autofluorescence spectra generated by the particles in the sample; and
algorithm for assessing collinearity between the autofluorescence spectra generated by two or more different particles in the sample.

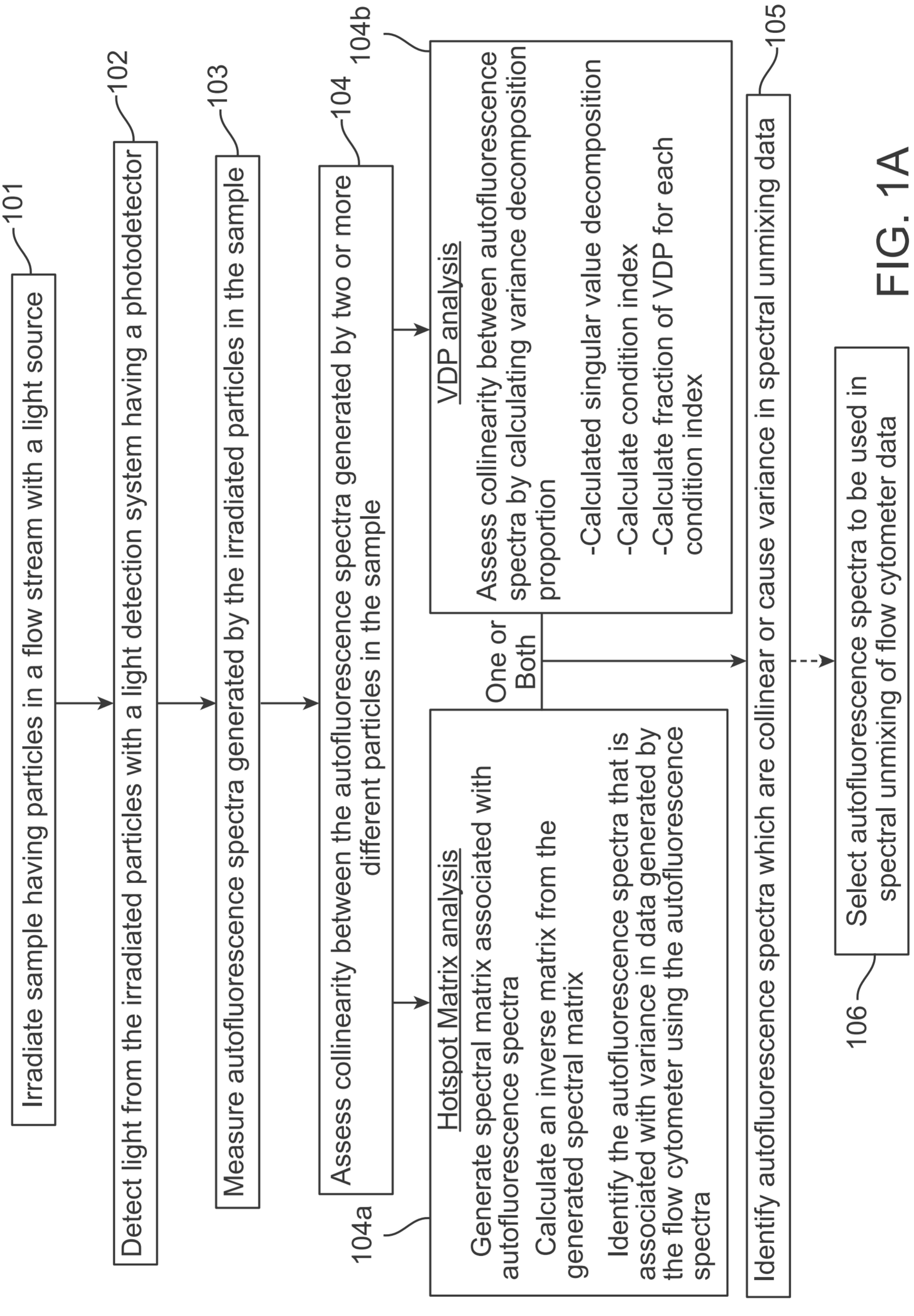
101
Irradiate sample having particles in a flow stream with a light source
102
Detect light from the irradiated particles with a light detection system having a photodetector
103
Measure autofluorescence spectra generated by the irradiated particles in the sample
104
Assess collinearity between the autofluorescence spectra generated by two or more different particles in the sample
104a
Hotspot Matrix analysis
Generate spectral matrix associated with autofluorescence spectra
Calculate an inverse matrix from the generated spectral matrix
Identify the autofluorescence spectra that is associated with variance in data generated by the flow cytometer using the autofluorescence spectra
104b
VDP analysis
Assess collinearity between autofluorescence spectra by calculating variance decomposition proportion
-Calculated singular value decomposition
-Calculate condition index
-Calculate fraction of VDP for each condition index
One or Both
105
Identify autofluorescence spectra which are collinear or cause variance in spectral unmixing data
106
Select autofluorescence spectra to be used in spectral unmixing of flow cytometer data

FIG. 1A

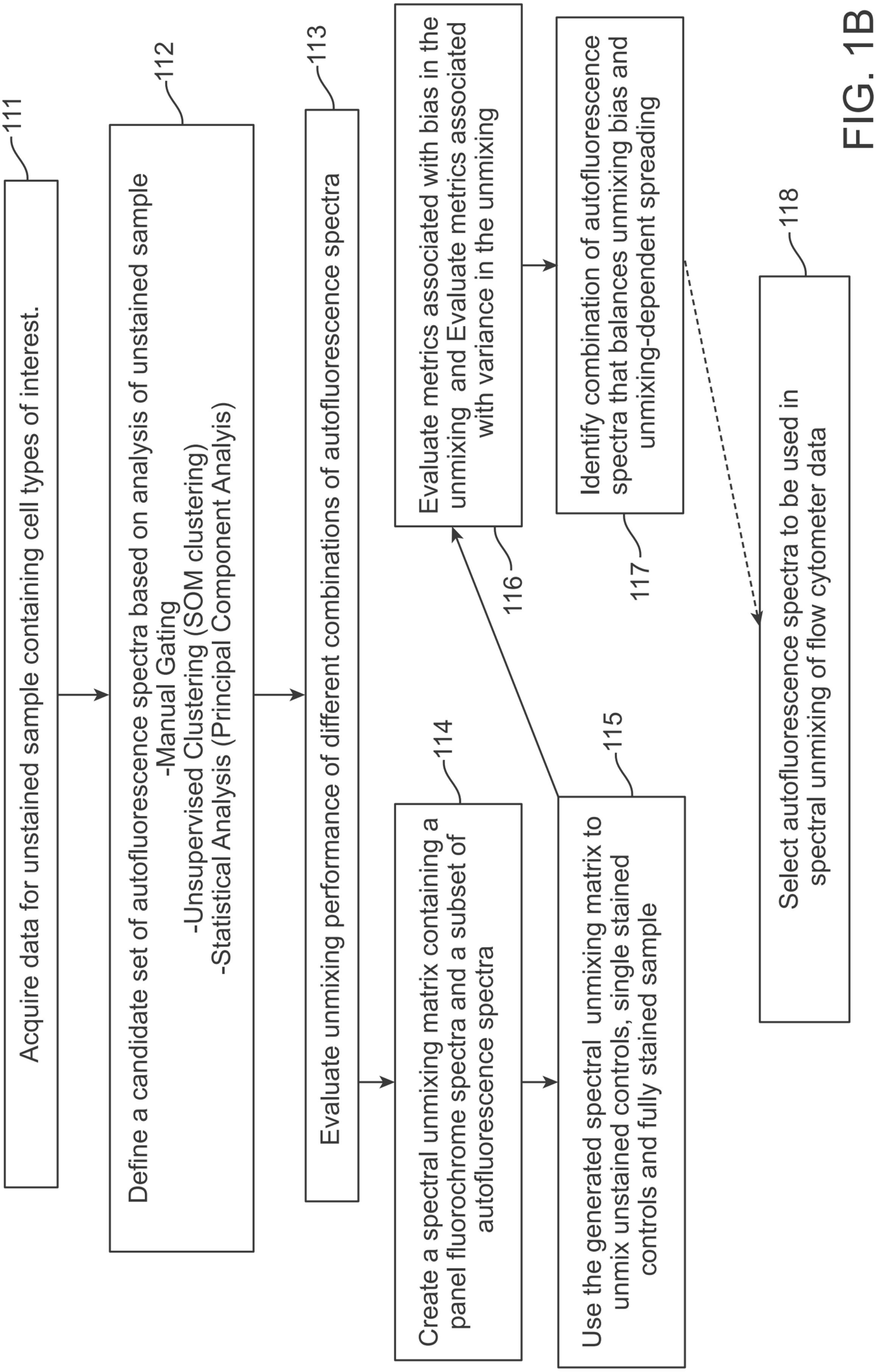

111
Acquire data for unstained sample containing cell types of interest.
112
Define a candidate set of autofluorescence spectra based on analysis of unstained sample
-Manual Gating
-Unsupervised Clustering (SOM clustering)
-Statistical Analysis (Principal Component Analyis)
113
Evaluate unmixing performance of different combinations of autofluorescence spectra
114
Create a spectral unmixing matrix containing a panel fluorochrome spectra and a subset of autofluorescence spectra
115
Use the generated spectral unmixing matrix to unmix unstained controls, single stained controls and fully stained sample
116
Evaluate metrics associated with bias in the unmixing and Evaluate metrics associated with variance in the unmixing
117
Identify combination of autofluorescence spectra that balances unmixing bias and unmixing-dependent spreading
118
Select autofluorescence spectra to be used in spectral unmixing of flow cytometer data


FIG. 1B

**Step 1: Identify unstained populations**

- Acquire two unstained samples
  - Unstained_001: Unstimulated PBMCs
  - Unstained_002: Stimulated PBMCs
- For each unstained recording, look at scatter plot
- Draw gates around different visible populations
  - Three discrete populations in each sample, and defines six populations total

Unstained_001: Unstimulated

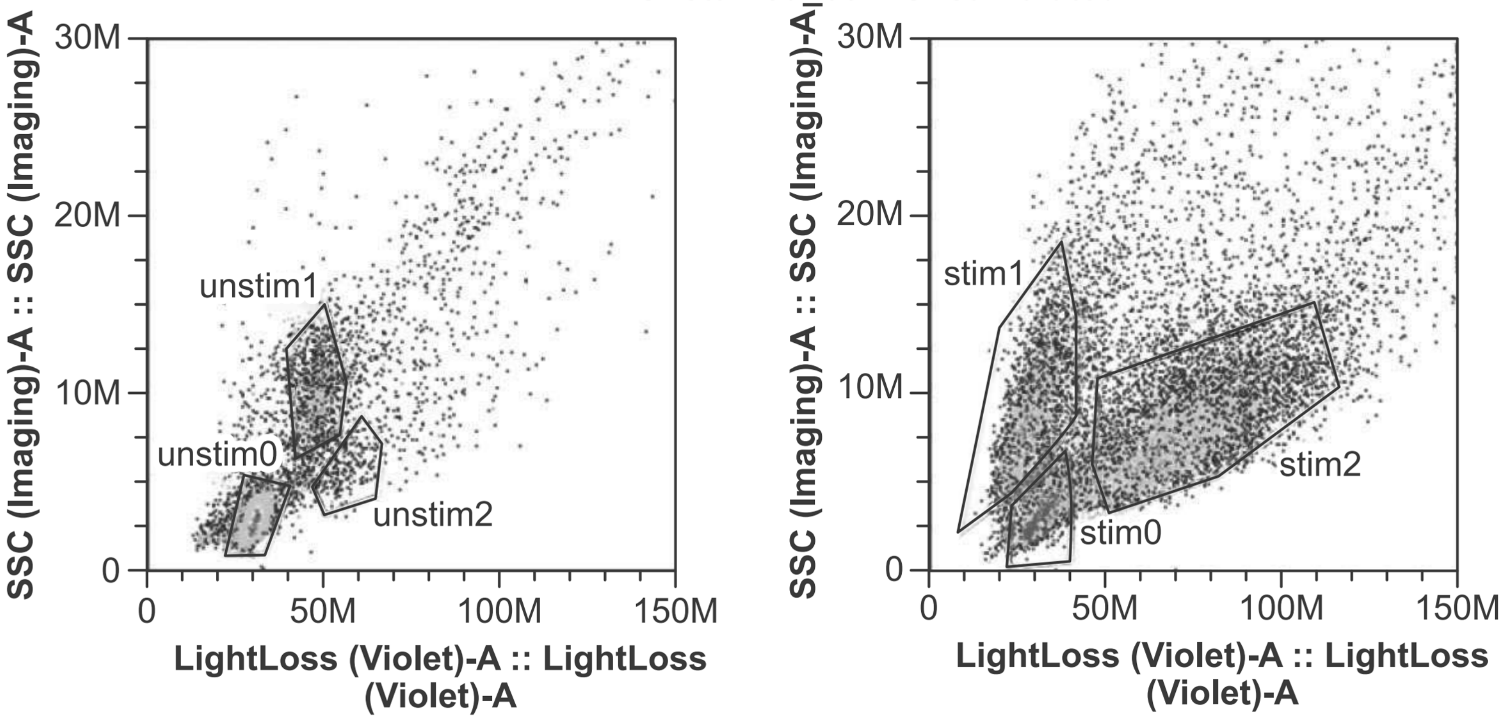


FIG. 1C

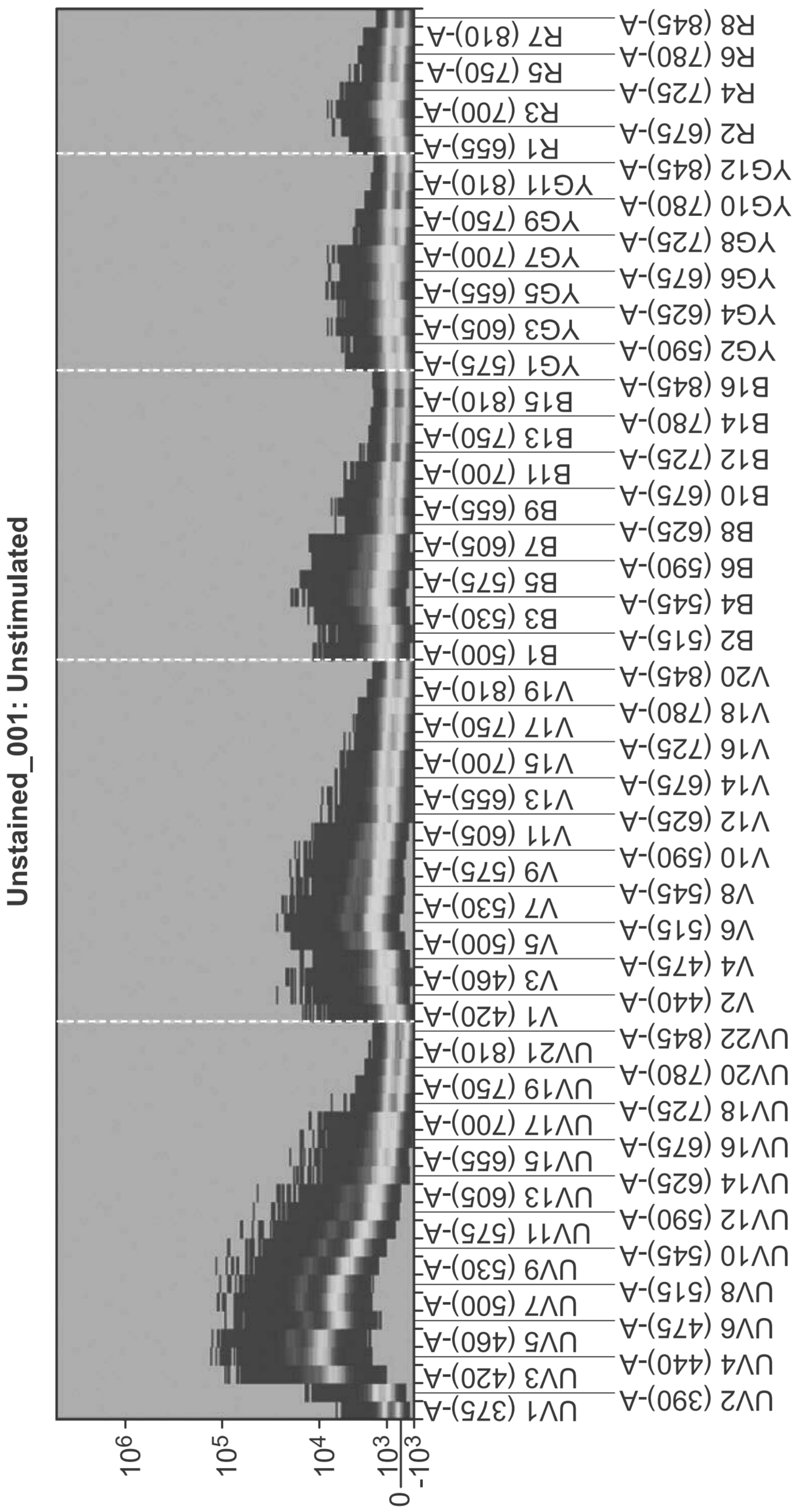
Unstained_001: Unstimulated
10^6
10^5
10^4
10^3
0
-10^3
UV1 (375)-A
UV2 (390)-A
UV3 (420)-A
UV4 (440)-A
UV5 (460)-A
UV6 (475)-A
UV7 (500)-A
UV8 (515)-A
UV9 (530)-A
UV10 (545)-A
UV11 (575)-A
UV12 (590)-A
UV13 (605)-A
UV14 (625)-A
UV15 (655)-A
UV16 (675)-A
UV17 (700)-A
UV18 (725)-A
UV19 (750)-A
UV20 (780)-A
UV21 (810)-A
UV22 (845)-A
V1 (420)-A
V2 (440)-A
V3 (460)-A
V4 (475)-A
V5 (500)-A
V6 (515)-A
V7 (530)-A
V8 (545)-A
V9 (575)-A
V10 (590)-A
V11 (605)-A
V12 (625)-A
V13 (655)-A
V14 (675)-A
V15 (700)-A
V16 (725)-A
V17 (750)-A
V18 (780)-A
V19 (810)-A
V20 (845)-A
B1 (500)-A
B2 (515)-A
B3 (530)-A
B4 (545)-A
B5 (575)-A
B6 (590)-A
B7 (605)-A
B8 (625)-A
B9 (655)-A
B10 (675)-A
B11 (700)-A
B12 (725)-A
B13 (750)-A
B14 (780)-A
B15 (810)-A
B16 (845)-A
YG1 (575)-A
YG2 (590)-A
YG3 (605)-A
YG4 (625)-A
YG5 (655)-A
YG6 (675)-A
YG7 (700)-A
YG8 (725)-A
YG9 (750)-A
YG10 (780)-A
YG11 (810)-A
YG12 (845)-A
R1 (655)-A
R2 (675)-A
R3 (700)-A
R4 (725)-A
R5 (750)-A
R6 (780)-A
R7 (810)-A
R8 (845)-A

FIG. 1C (Cont. 1)

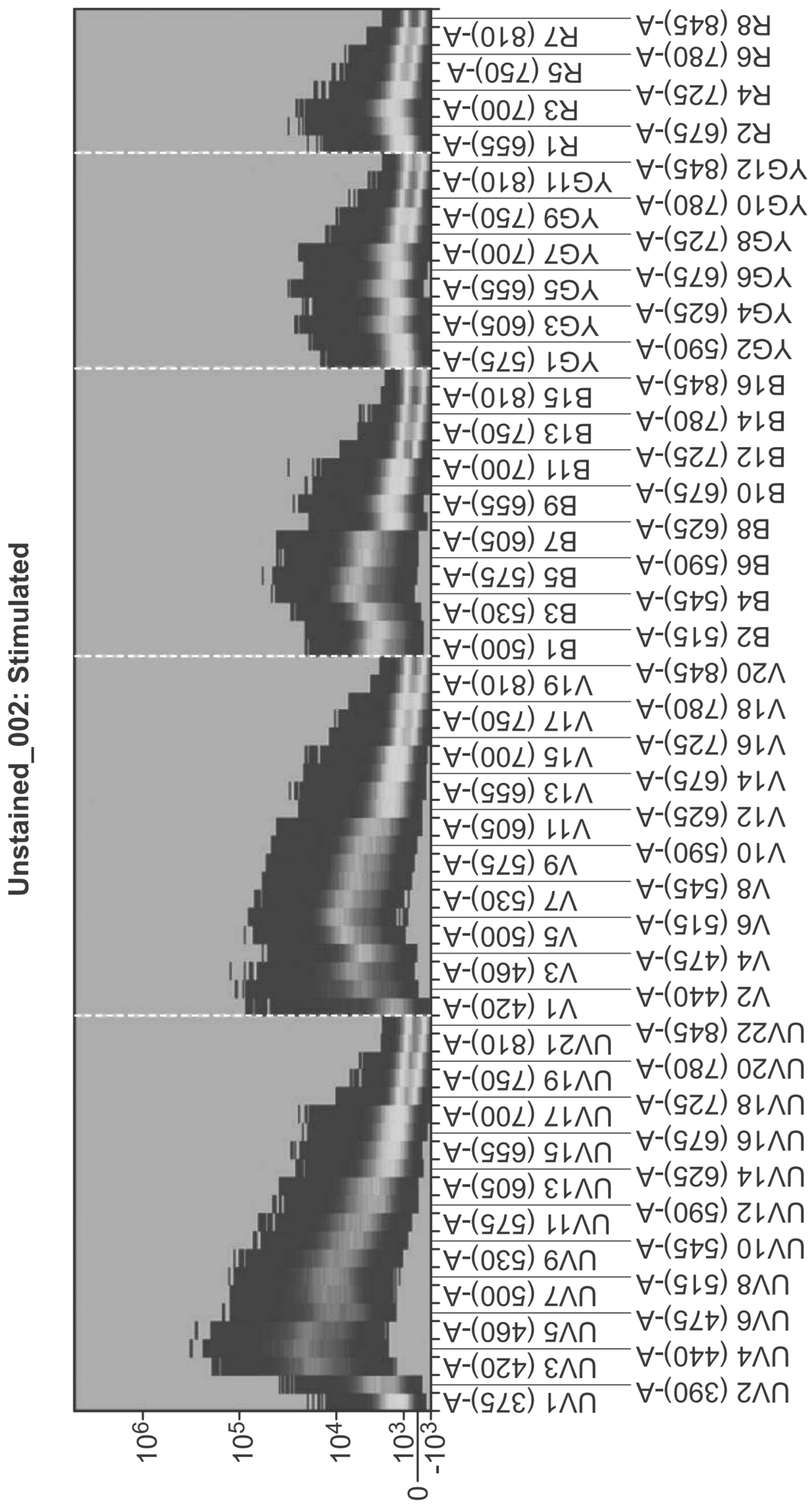
Unstained_002: Stimulated
0
-10^3
10^3
10^4
10^5
10^6
UV1 (375)-A
UV2 (390)-A
UV3 (420)-A
UV4 (440)-A
UV5 (460)-A
UV6 (475)-A
UV7 (500)-A
UV8 (515)-A
UV9 (530)-A
UV10 (545)-A
UV11 (575)-A
UV12 (590)-A
UV13 (605)-A
UV14 (625)-A
UV15 (655)-A
UV16 (675)-A
UV17 (700)-A
UV18 (725)-A
UV19 (750)-A
UV20 (780)-A
UV21 (810)-A
UV22 (845)-A
V1 (420)-A
V2 (440)-A
V3 (460)-A
V4 (475)-A
V5 (500)-A
V6 (515)-A
V7 (530)-A
V8 (545)-A
V9 (575)-A
V10 (590)-A
V11 (605)-A
V12 (625)-A
V13 (655)-A
V14 (675)-A
V15 (700)-A
V16 (725)-A
V17 (750)-A
V18 (780)-A
V19 (810)-A
V20 (845)-A
B1 (500)-A
B2 (515)-A
B3 (530)-A
B4 (545)-A
B5 (575)-A
B6 (590)-A
B7 (605)-A
B8 (625)-A
B9 (655)-A
B10 (675)-A
B11 (700)-A
B12 (725)-A
B13 (750)-A
B14 (780)-A
B15 (810)-A
B16 (845)-A
YG1 (575)-A
YG2 (590)-A
YG3 (605)-A
YG4 (625)-A
YG5 (655)-A
YG6 (675)-A
YG7 (700)-A
YG8 (725)-A
YG9 (750)-A
YG10 (780)-A
YG11 (810)-A
YG12 (845)-A
R1 (655)-A
R2 (675)-A
R3 (700)-A
R4 (725)-A
R5 (750)-A
R6 (780)-A
R7 (810)-A
R8 (845)-A

FIG. 1C (Cont. 2)

**Step 2: Compare different AF spectra**

- Add/select all 6 unstained populations as candidate AF spectra
- Visualize the AF spectra of the identified unstained populations
- Analyze similarity scores
- Select a subset to proceed with testing

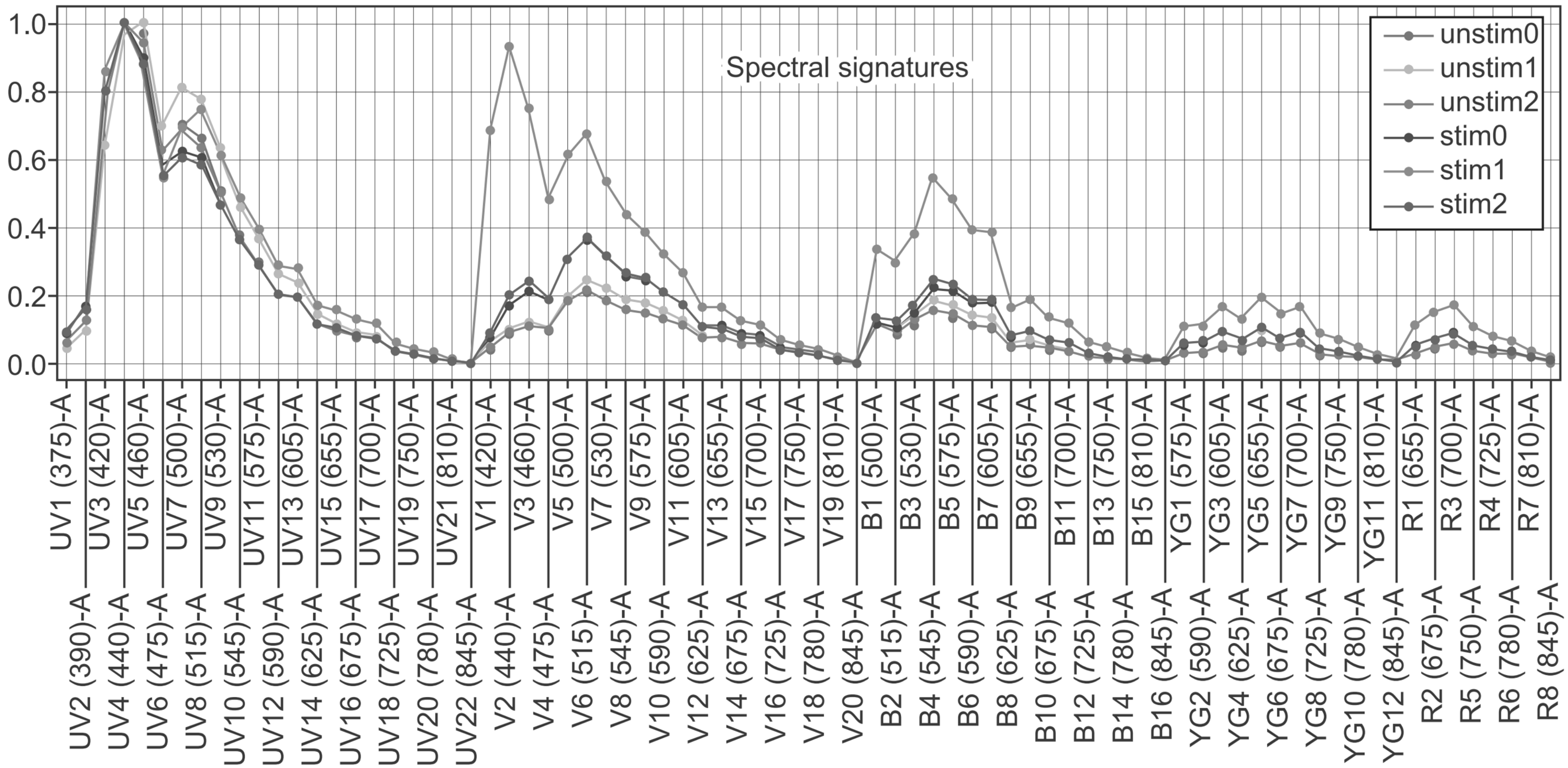


FIG. 1D

- From visual inspection and similarity scores, Chip can see that unstim0 and unstim2 are essentially identical
- Same for stim0 and stim2
- Moving forward, Chip will focus just on four candidates: **unstim1, unstim2, stim1, and stim2**

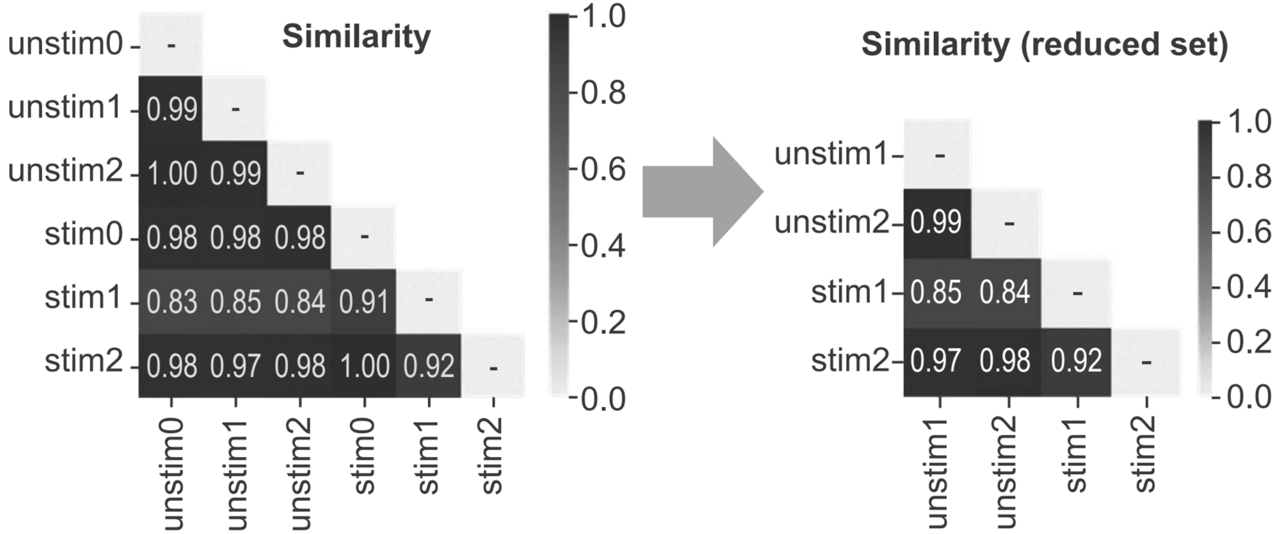


FIG. 1D (Cont.)

**Step 3a: Evaluate unmixing performance of different AF matrix options. Option 1: No AF**

- An all-x-n for one of single-stain controls on unstimulated cells are analyzed
  - Sample: BUV805_001
  - X-axis parameter: BUV805-A
  - Previewed Matrix

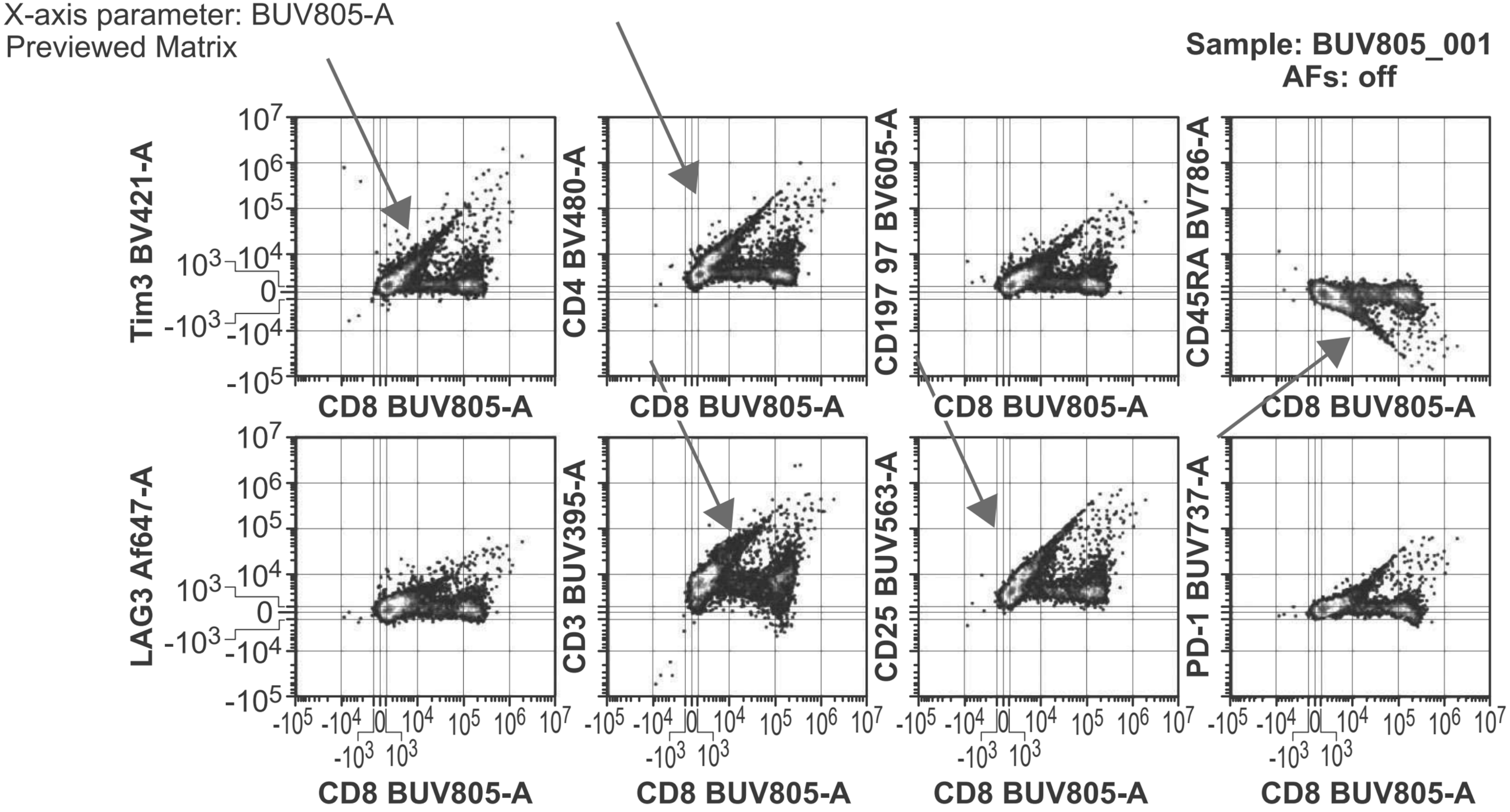


FIG. 1E

- Unmixing using a matrix with no AF selection first is checked
- A number of unmixing errors are found due to AF in the sample being unaccounted for

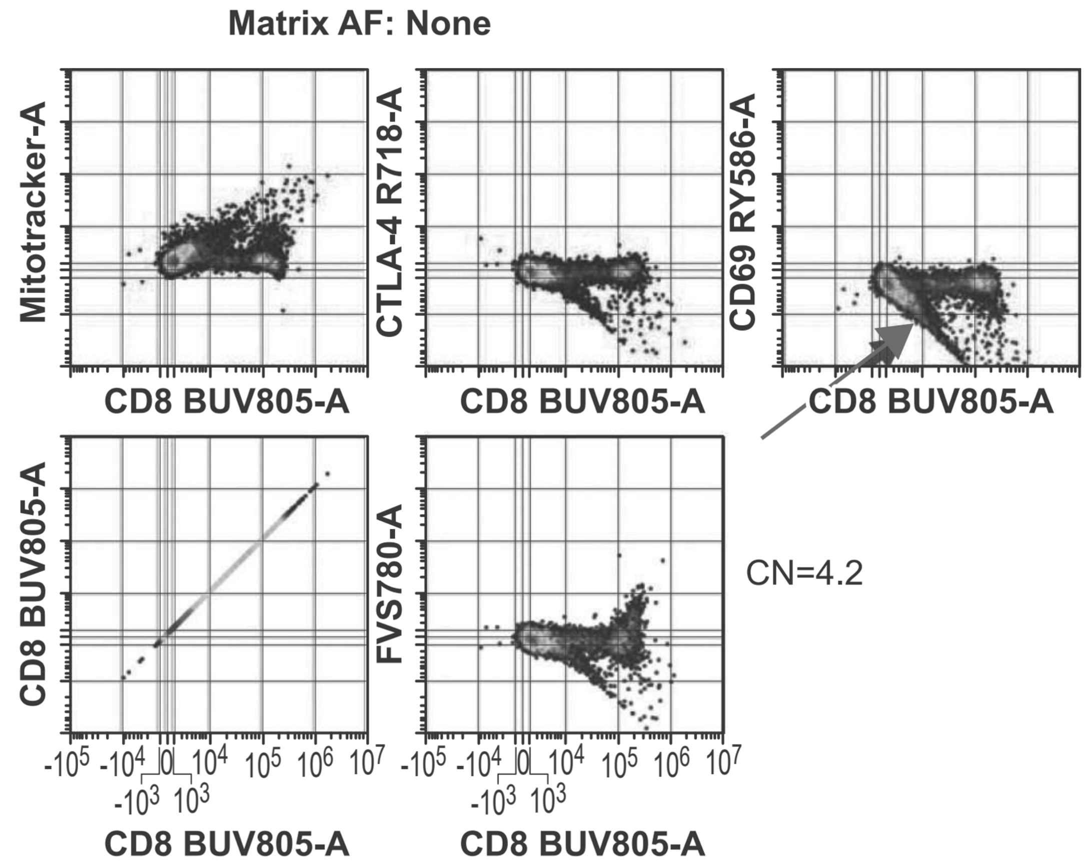


FIG. 1E (Cont.)

**Step 3b: Evaluate unmixing performance of different AF matrix options. Option 2: Single AF, two versions**

- A new matrix with a single AF selection is made: unstim1
- Still some problem areas
  - Small false-positive CD3 population
- A different single-AF selection is made: unstim2

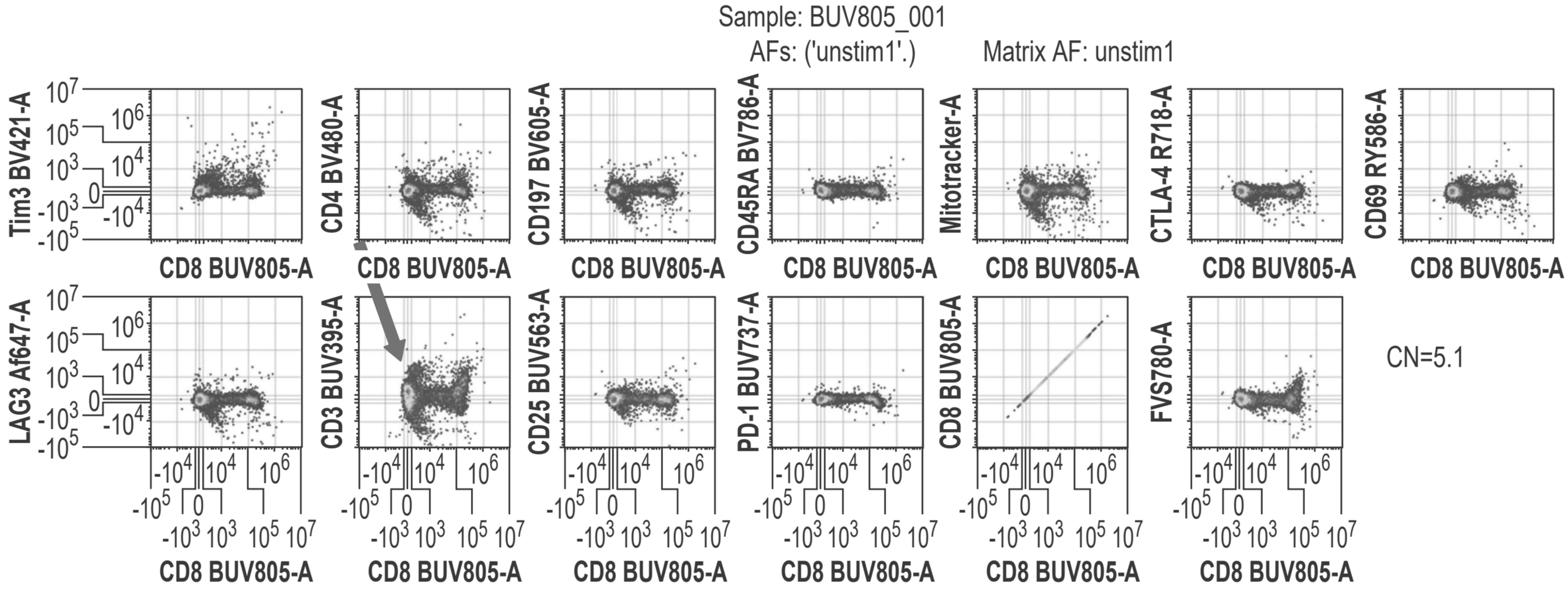


FIG. 1F

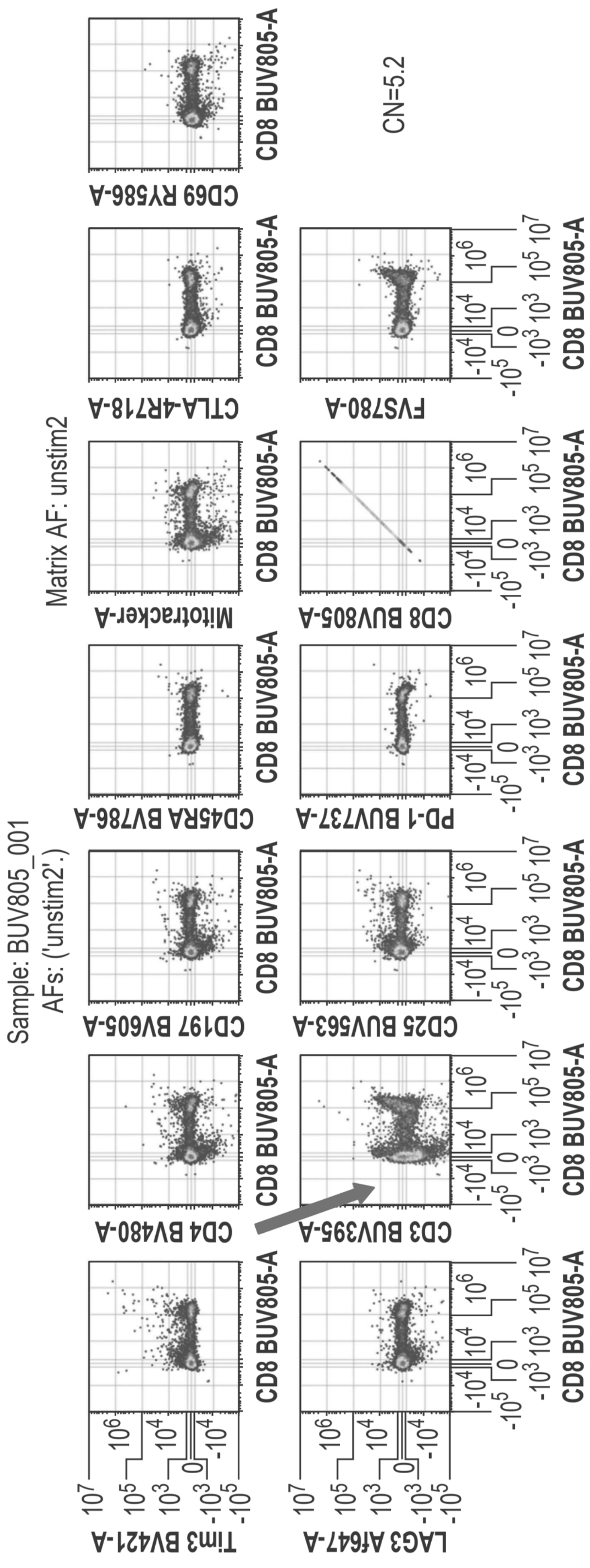
Sample: BUV805_001
AFs: ('unstim2',)
Matrix AF: unstim2
CN=5.2
Tim3 BV421-A
CD4 BV480-A
CD197 BV605-A
CD45RA BV786-A
Mitotracker-A
CTLA-4R718-A
CD69 RY586-A
LAG3 Af647-A
CD3 BUV395-A
CD25 BUV563-A
PD-1 BUV737-A
CD8 BUV805-A
FVS780-A
CD8 BUV805-A

FIG. 1F (Cont.)

**Step 3c: Evaluate unmixing performance of different AF matrix options. Option 3: Two-AF selection**

- Since there are several different AF populations in his sample, two unstimulated AF spectra at the same time are selected
- This resolves the CD3 false-positive and doesn't cause too many new issues
- This does make the complexity score much higher, but examination of the hotspot matrix reveals that the unmixing hotspot is focused on the AF spectra themselves and does not affect other fluorochromes
- This is confirmed by looking at other parameters in all-x-n that the fluorsare not badly affected, but keep an eye on BUV395 which has a slightly higher hotspot value

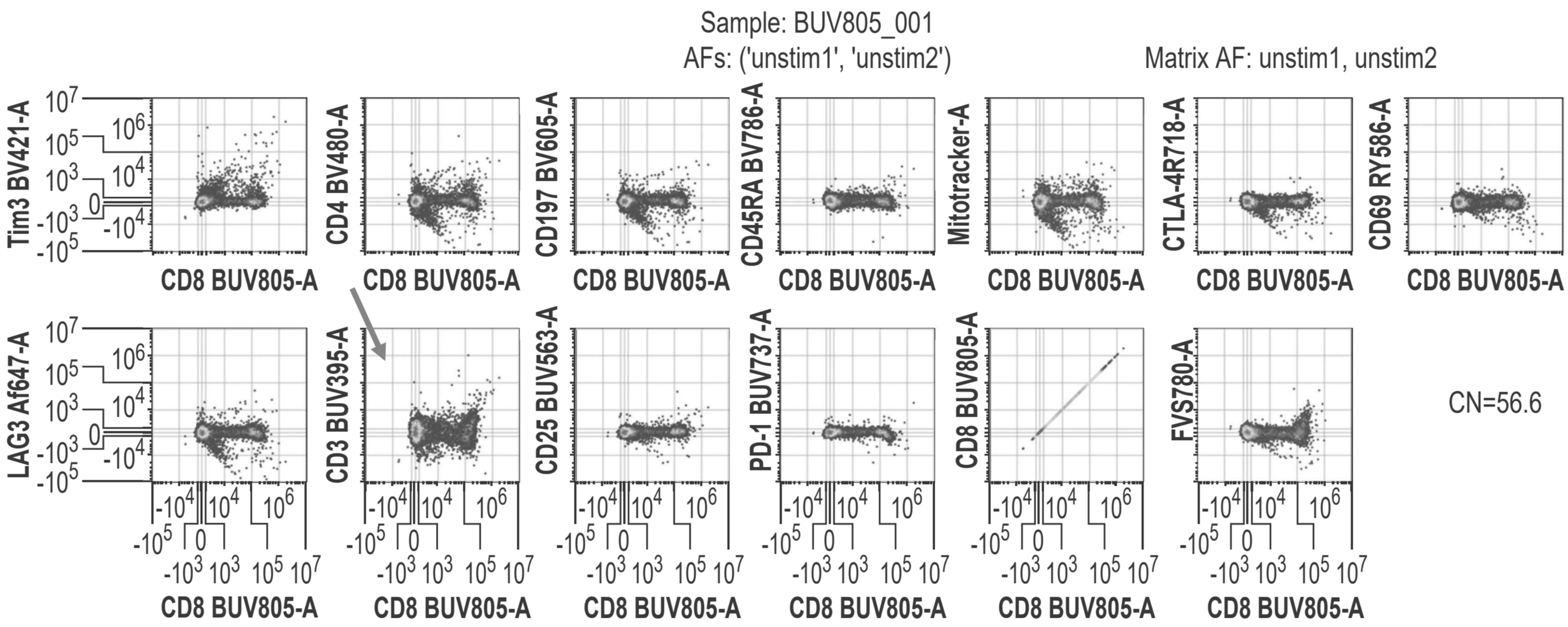


FIG. 1G

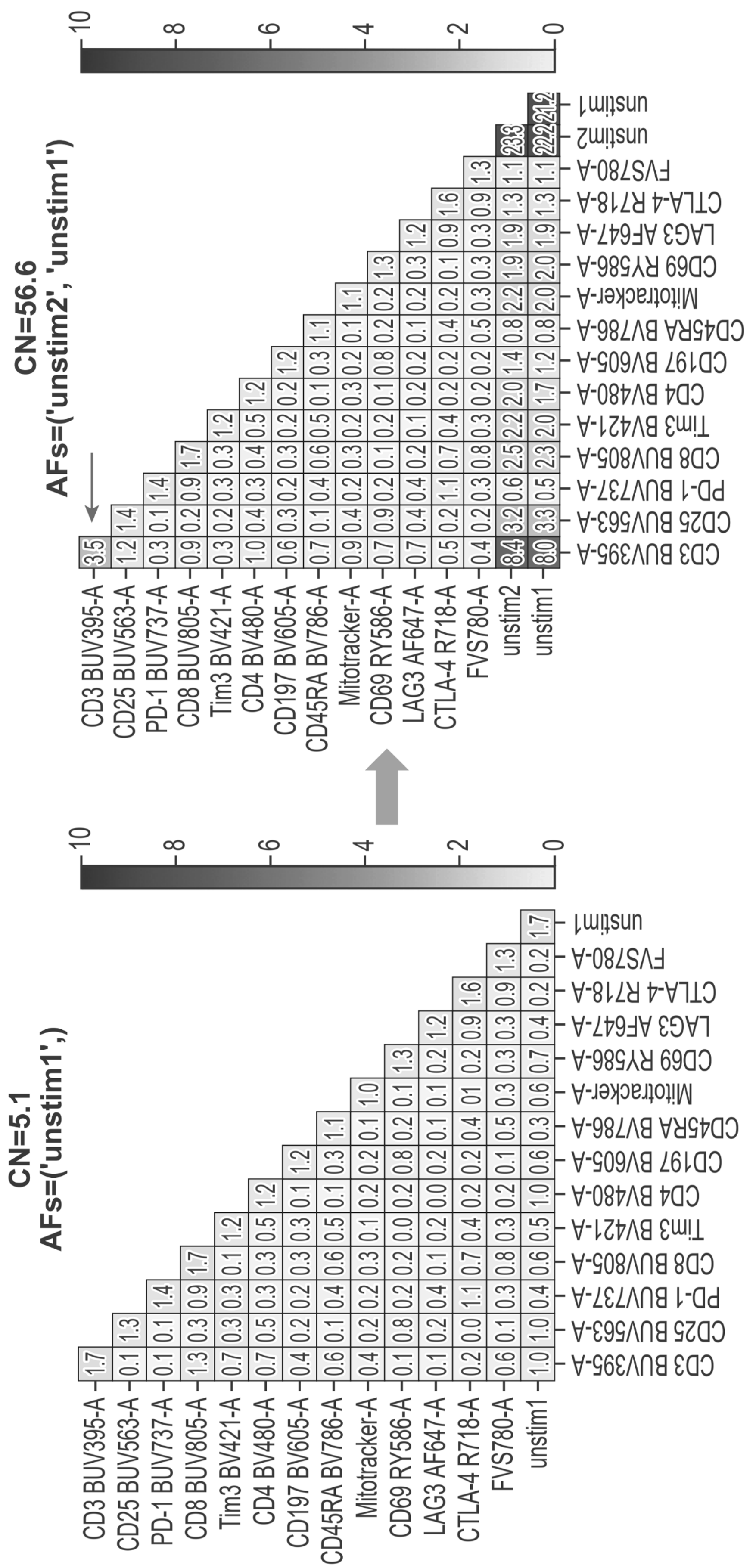
CN=5.1
AFs=('unstim1',)
CN=56.6
AFs=('unstim2', 'unstim1')
CD3 BUV395-A
CD25 BUV563-A
PD-1 BUV737-A
CD8 BUV805-A
Tim3 BV421-A
CD4 BV480-A
CD197 BV605-A
CD45RA BV786-A
Mitotracker-A
CD69 RY586-A
LAG3 AF647-A
CTLA-4 R718-A
FVS780-A
unstim2
unstim1

FIG. 1G (Cont.)

**Step 3d: Evaluate unmixing performance of different AF matrix options. Option 4: Three-AF selection**

- A stimulated recording is looked at to see how the unmixing looks
    - Sample: Unstained_002: Stimulated
    - X-axis: BV480-A
- The unstained sample should show a population centered at zero for all markers if unmixed correctly
- Significant false-positive expression is seen due to AF in the unstained simulated sample
- A third AF spectrum is added: stim1
- This improves the results, but now BV421-A looks less desirable

Sample: Unstained_002: Stimulated
AFs: ('unstim1', 'unstim2')
Matrix AF: unstim1, unstim2

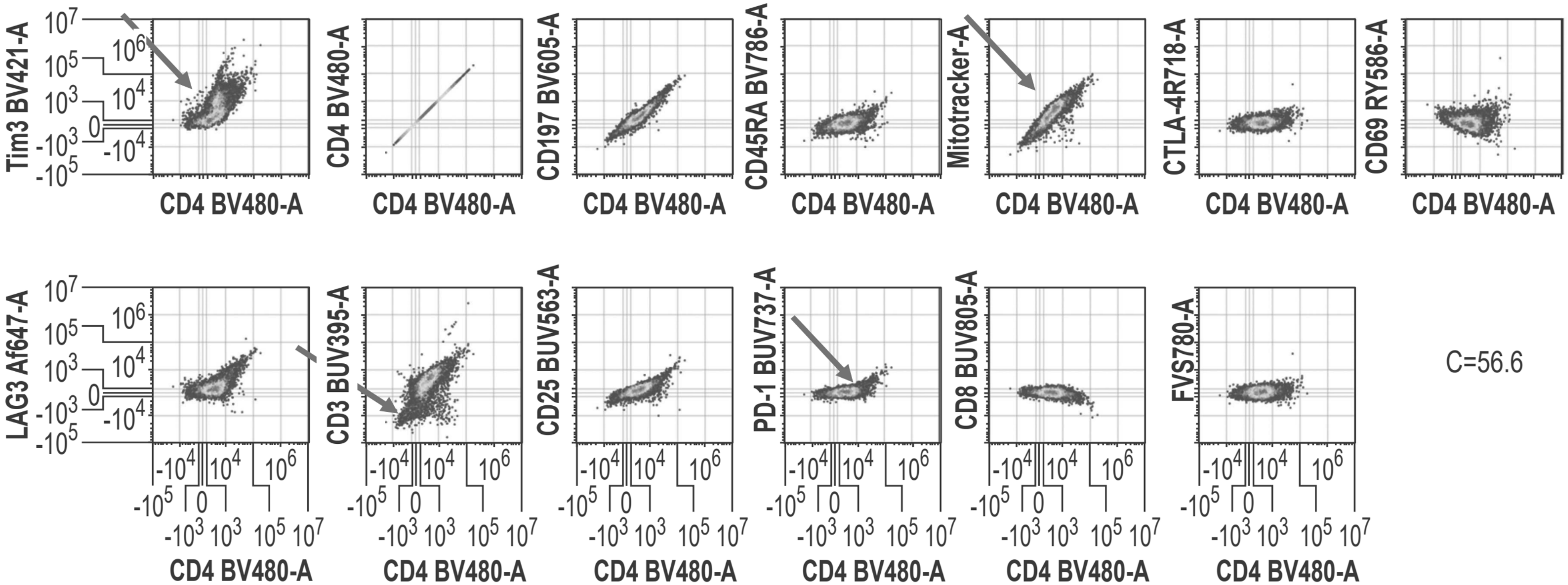


FIG. 1H

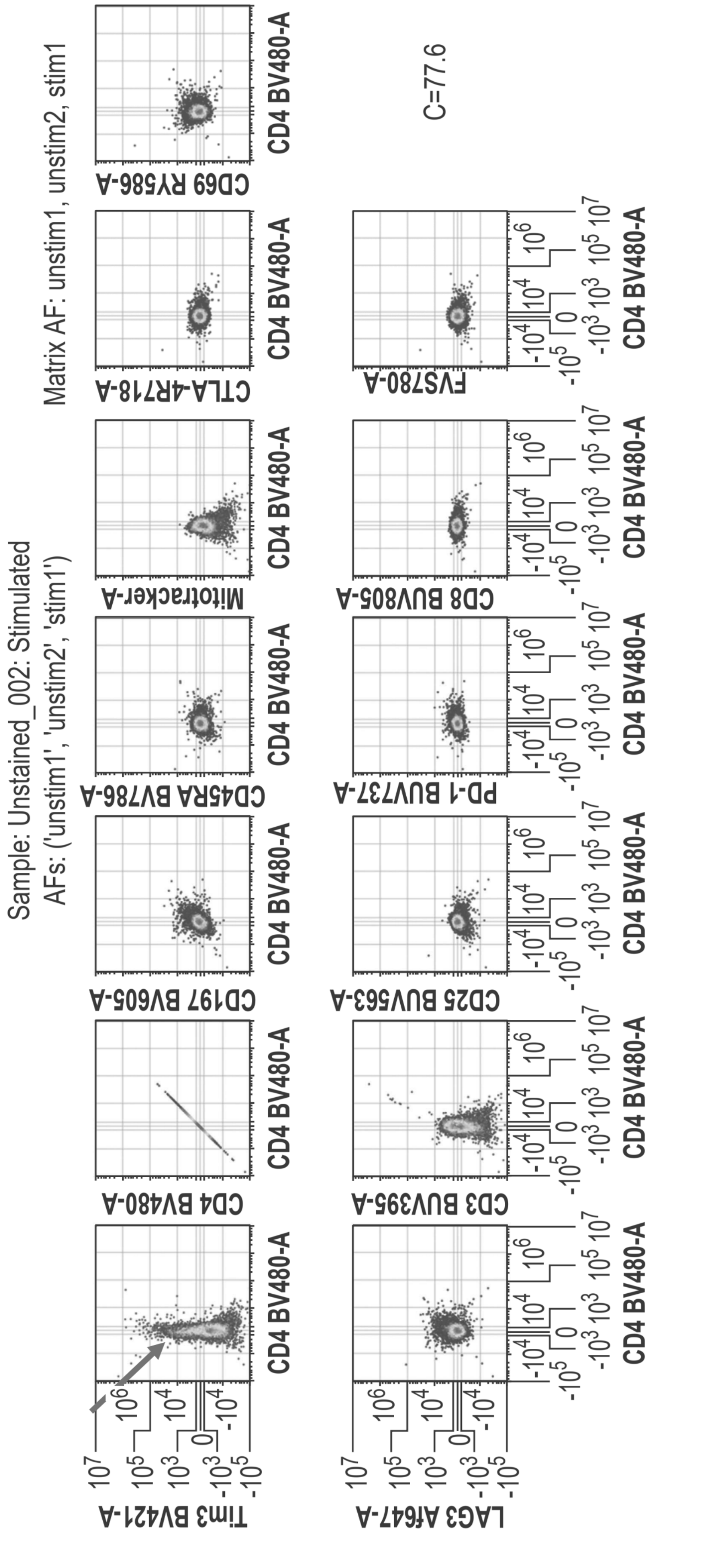

Sample: Unstained_002: Stimulated
AFs: ('unstim1', 'unstim2', 'stim1')
Matrix AF: unstim1, unstim2, stim1
C=77.6
Tim3 BV421-A
CD4 BV480-A
CD197 BV605-A
CD45RA BV786-A
Mitotracker-A
CTLA-4R718-A
CD69 RY586-A
LAG3 Af647-A
CD3 BUV395-A
CD25 BUV563-A
PD-1 BUV737-A
CD8 BUV805-A
FVS780-A


FIG. 1H (Cont.)

**Step 3e: Evaluate unmixing performance of different AF matrix options. Option 5: Four-AF selection**

- A fourth AF is added to the matrix
- The populations are all centered at zero, although there is a lot of spread in BV421 now
- To check, all-x-n is switched back to the unstimulated BV421 single-stain control
- Positive expression is seen and the unmixing looks good.
- The final 13-color and 4 autofluorescence matrix is determined and acquire fully stained sample at View Data

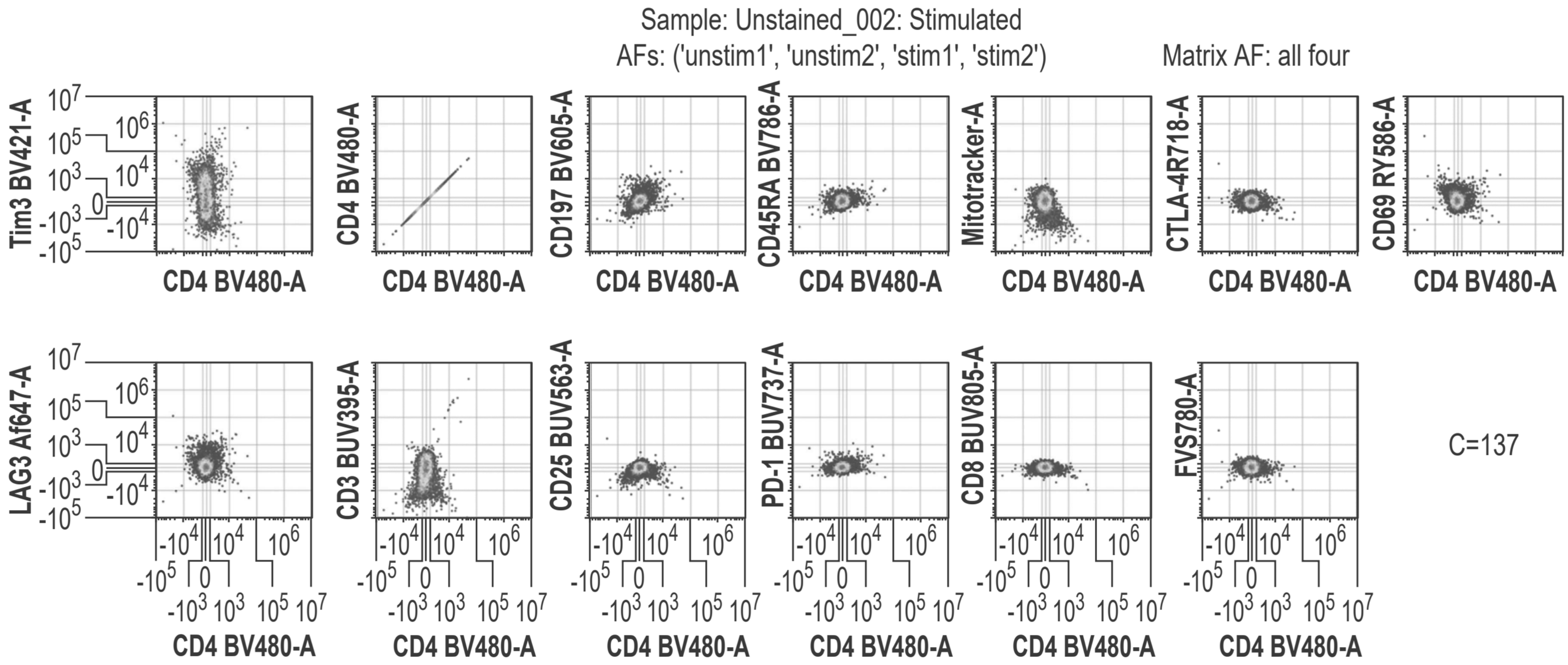


FIG. 1I

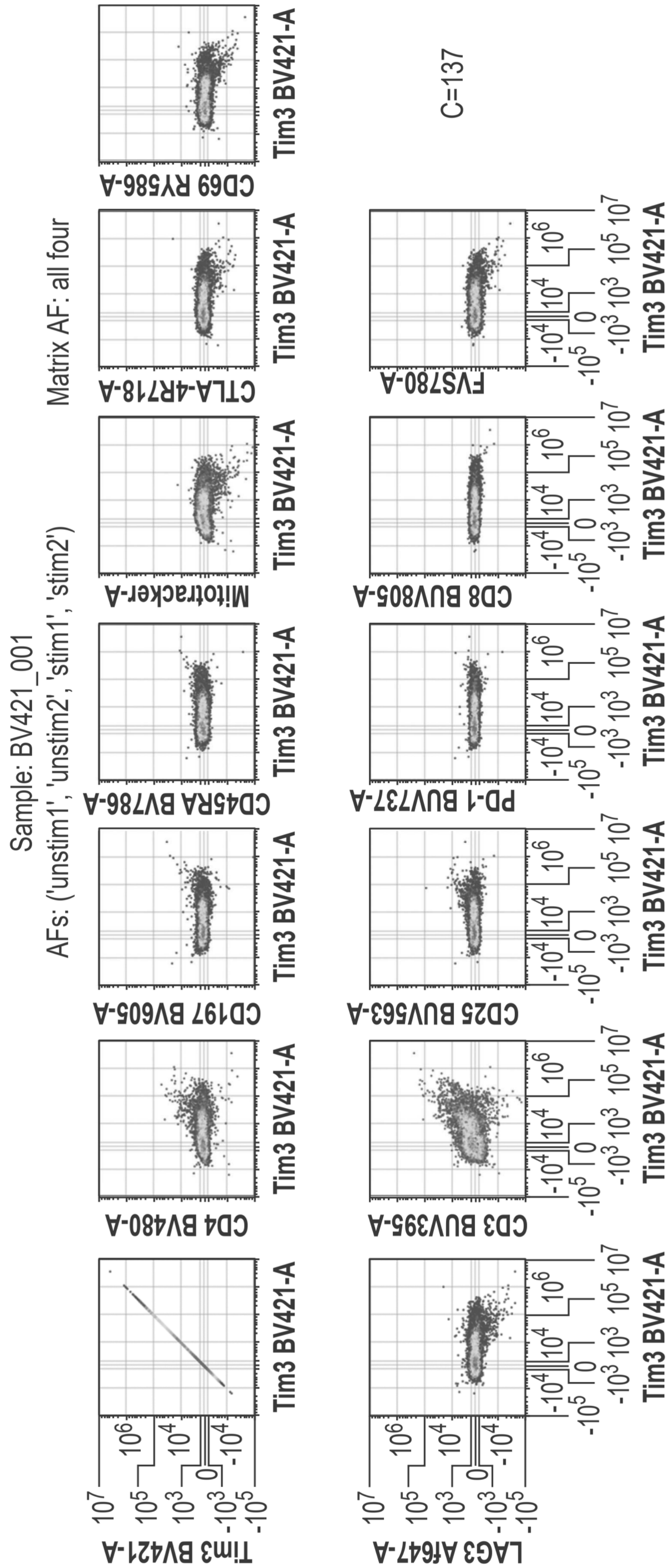

Sample: BV421_001
AFs: ('unstim1', 'unstim2', 'stim1', 'stim2')
Matrix AF: all four
C=137
Tim3 BV421-A
CD4 BV480-A
CD197 BV605-A
CD45RA BV786-A
Mitotracker-A
CTLA-4R718-A
CD69 RY586-A
LAG3 Af647-A
CD3 BUV395-A
CD25 BUV563-A
PD-1 BUV737-A
CD8 BUV805-A
FVS780-A


FIG. 1I (Cont.)

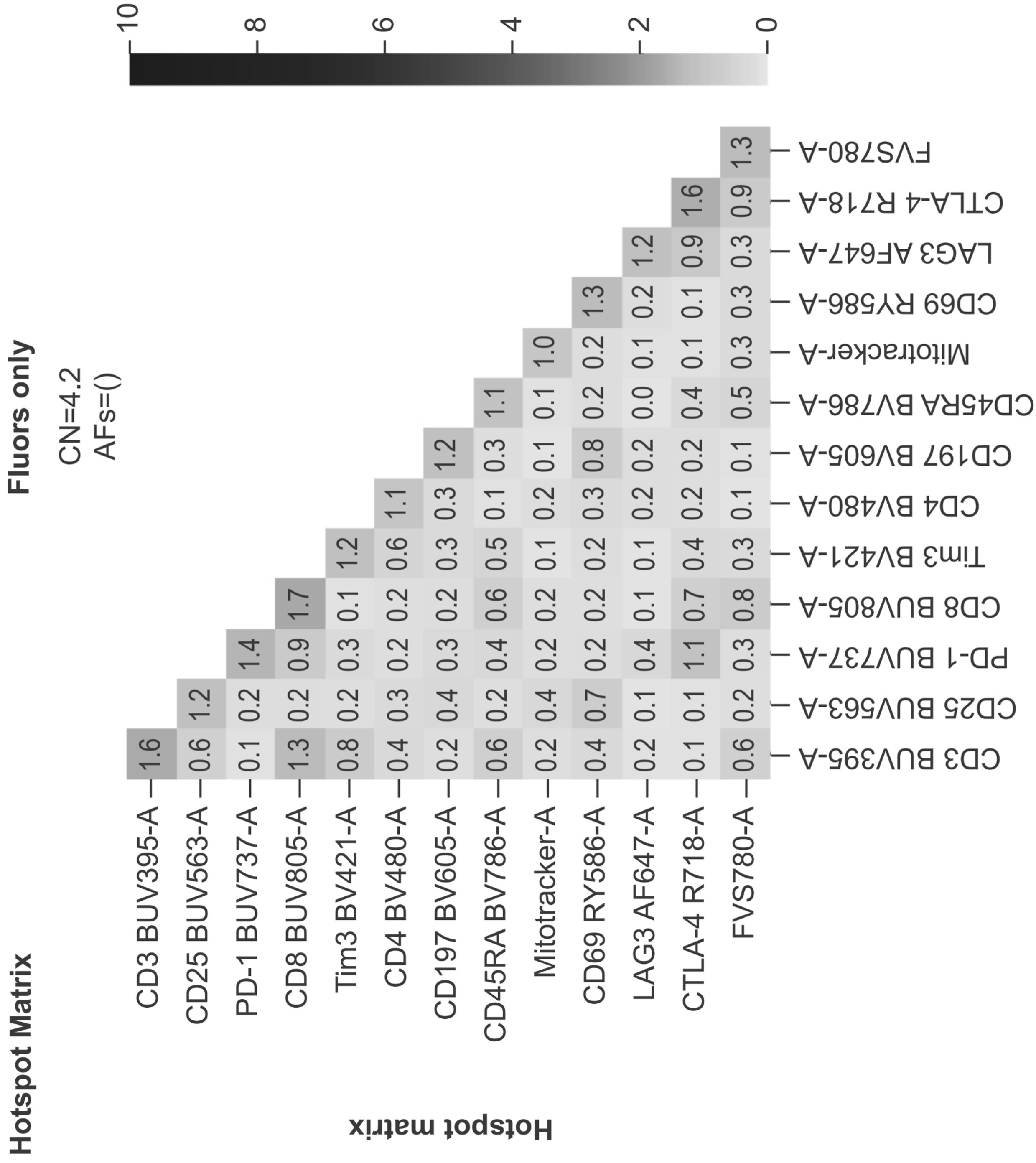
Hotspot Matrix
Fluors only
CN=4.2
AFs=()
Hotspot matrix
CD3 BUV395-A
CD25 BUV563-A
PD-1 BUV737-A
CD8 BUV805-A
Tim3 BV421-A
CD4 BV480-A
CD197 BV605-A
CD45RA BV786-A
Mitotracker-A
CD69 RY586-A
LAG3 AF647-A
CTLA-4 R718-A
FVS780-A
1.6
0.6 1.2
0.1 0.2 1.4
1.3 0.2 0.9 1.7
0.8 0.2 0.3 0.1 1.2
0.4 0.3 0.2 0.2 0.6 1.1
0.2 0.4 0.3 0.2 0.3 0.3 1.2
0.6 0.2 0.4 0.6 0.5 0.1 0.3 1.1
0.2 0.4 0.2 0.2 0.1 0.2 0.1 0.1 1.0
0.4 0.7 0.2 0.2 0.2 0.3 0.8 0.2 0.2 1.3
0.2 0.1 0.4 0.1 0.1 0.2 0.2 0.0 0.1 0.2 1.2
0.1 0.1 1.1 0.7 0.4 0.2 0.2 0.4 0.1 0.1 0.9 1.6
0.6 0.2 0.3 0.8 0.3 0.1 0.1 0.5 0.3 0.3 0.3 0.9 1.3
0
2
4
6
8
10

FIG. 1J

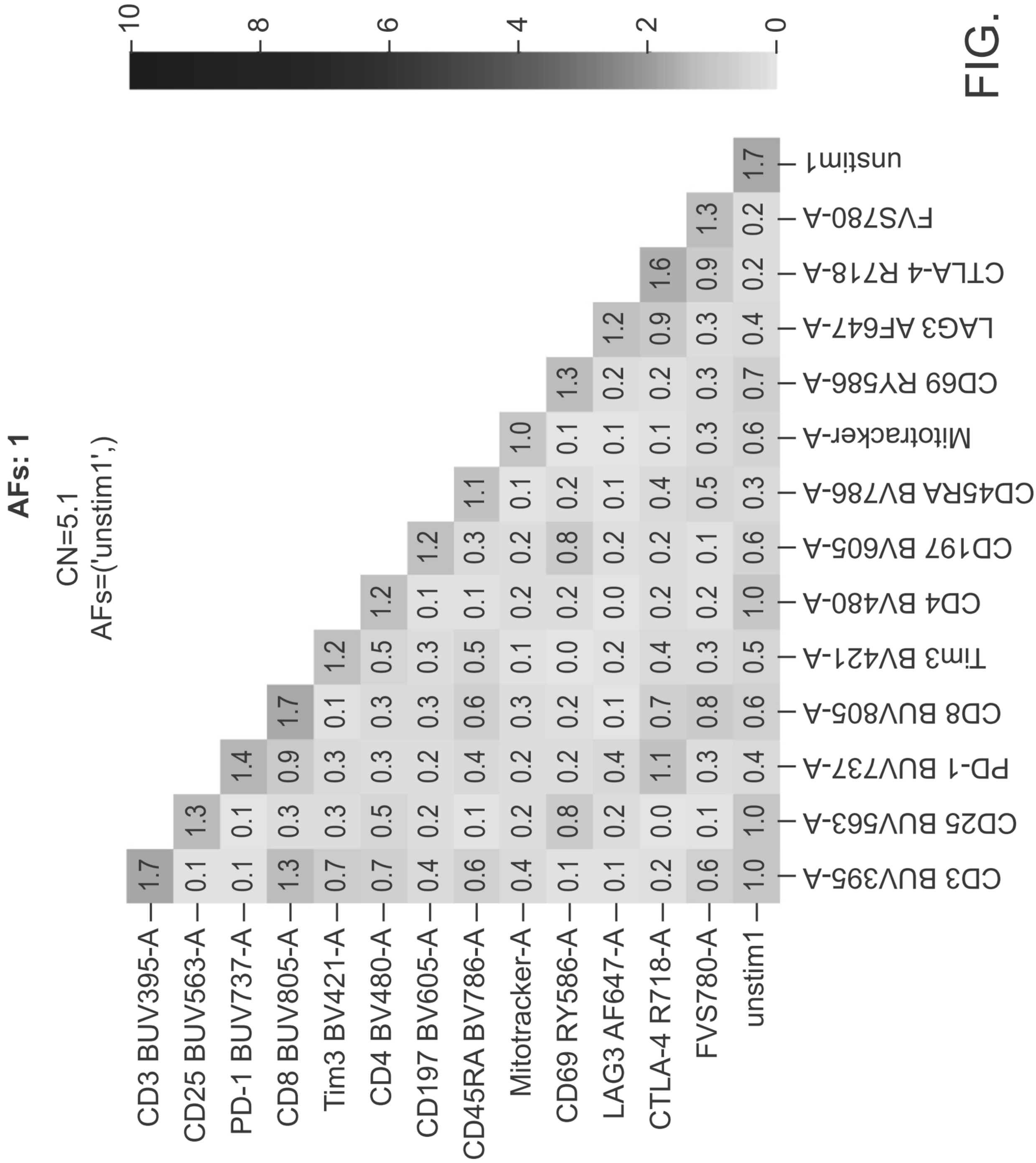
AFs: 1
CN=5.1
AFs=('unstim1',)
CD3 BUV395-A 1.7
CD25 BUV563-A 0.1 1.3
PD-1 BUV737-A 0.1 0.1 1.4
CD8 BUV805-A 1.3 0.3 0.9 1.7
Tim3 BV421-A 0.7 0.3 0.3 0.1 1.2
CD4 BV480-A 0.7 0.5 0.3 0.3 0.5 1.2
CD197 BV605-A 0.4 0.2 0.2 0.3 0.3 0.1 1.2
CD45RA BV786-A 0.6 0.1 0.4 0.6 0.5 0.1 0.3 1.1
Mitotracker-A 0.4 0.2 0.2 0.3 0.1 0.2 0.2 0.1 1.0
CD69 RY586-A 0.1 0.8 0.2 0.2 0.0 0.2 0.8 0.2 0.1 1.3
LAG3 AF647-A 0.1 0.2 0.4 0.1 0.2 0.0 0.2 0.1 0.1 0.2 1.2
CTLA-4 R718-A 0.2 0.0 1.1 0.7 0.4 0.2 0.2 0.4 0.1 0.2 0.9 1.6
FVS780-A 0.6 0.1 0.3 0.8 0.3 0.2 0.1 0.5 0.3 0.3 0.3 0.9 1.3
unstim1 1.0 1.0 0.4 0.6 0.5 1.0 0.6 0.3 0.6 0.7 0.4 0.2 0.2 1.7
CD3 BUV395-A
CD25 BUV563-A
PD-1 BUV737-A
CD8 BUV805-A
Tim3 BV421-A
CD4 BV480-A
CD197 BV605-A
CD45RA BV786-A
Mitotracker-A
CD69 RY586-A
LAG3 AF647-A
CTLA-4 R718-A
FVS780-A
unstim1
10
8
6
4
2
0

FIG. 1J (Cont. 1)

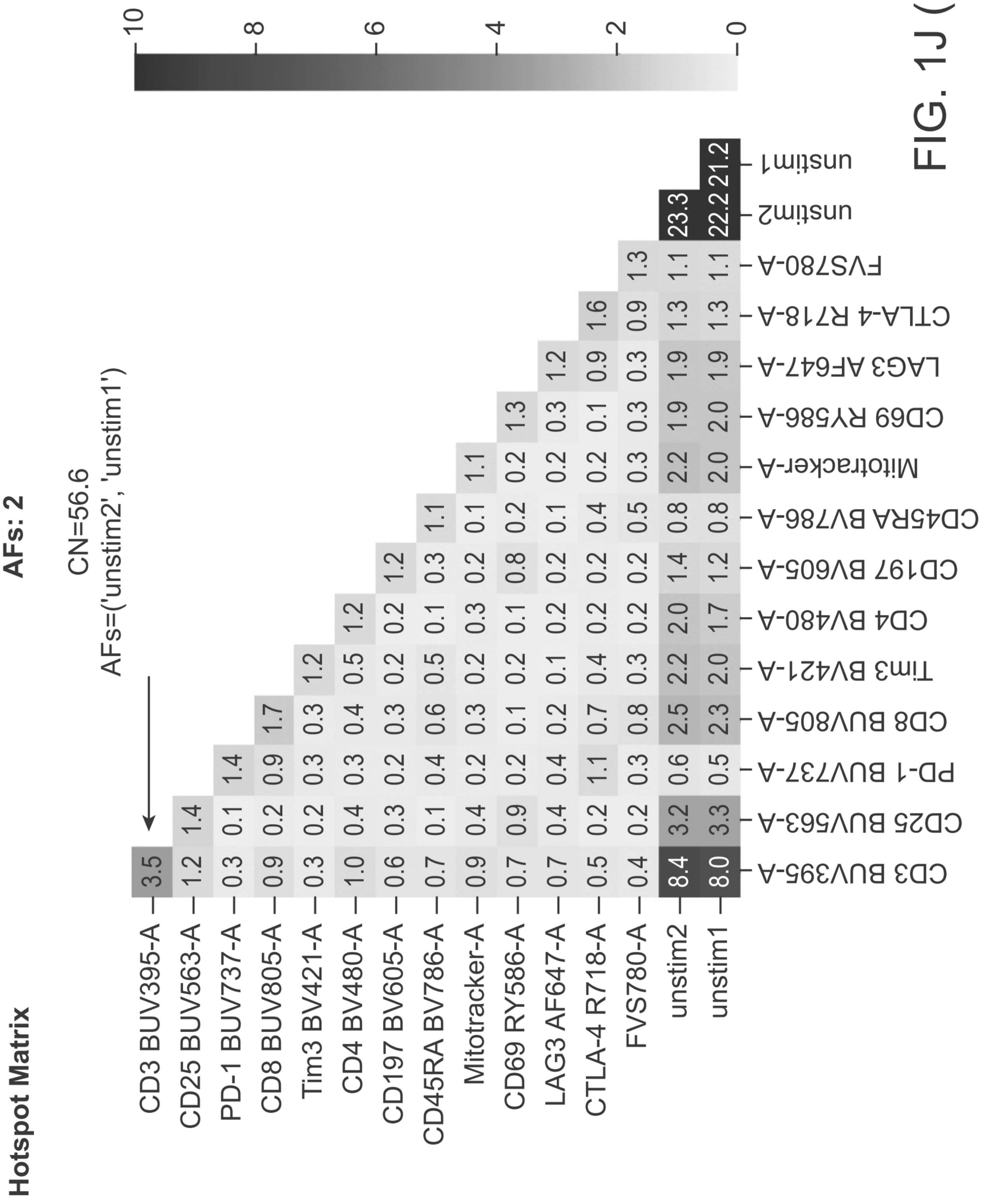
Hotspot Matrix
AFs: 2
CN=56.6
AFs=('unstim2', 'unstim1')
CD3 BUV395-A
CD25 BUV563-A
PD-1 BUV737-A
CD8 BUV805-A
Tim3 BV421-A
CD4 BV480-A
CD197 BV605-A
CD45RA BV786-A
Mitotracker-A
CD69 RY586-A
LAG3 AF647-A
CTLA-4 R718-A
FVS780-A
unstim2
unstim1
3.5
1.2 1.4
0.3 0.1 1.4
0.9 0.2 0.9 1.7
0.3 0.2 0.3 0.3 1.2
1.0 0.4 0.3 0.4 0.5 1.2
0.6 0.3 0.2 0.3 0.2 0.2 1.2
0.7 0.1 0.4 0.6 0.5 0.1 0.3 1.1
0.9 0.4 0.2 0.3 0.2 0.3 0.2 0.1 1.1
0.7 0.9 0.2 0.1 0.2 0.1 0.8 0.2 0.2 1.3
0.7 0.4 0.4 0.2 0.1 0.2 0.2 0.1 0.2 0.3 1.2
0.5 0.2 1.1 0.7 0.4 0.2 0.2 0.4 0.2 0.1 0.9 1.6
0.4 0.2 0.3 0.8 0.3 0.2 0.2 0.5 0.3 0.3 0.3 0.9 1.3
8.4 3.2 0.6 2.5 2.2 2.0 1.4 0.8 2.2 1.9 1.9 1.3 1.1 23.3
8.0 3.3 0.5 2.3 2.0 1.7 1.2 0.8 2.0 2.0 1.9 1.3 1.1 22.2 21.2
0
2
4
6
8
10

FIG. 1J (Cont. 2)

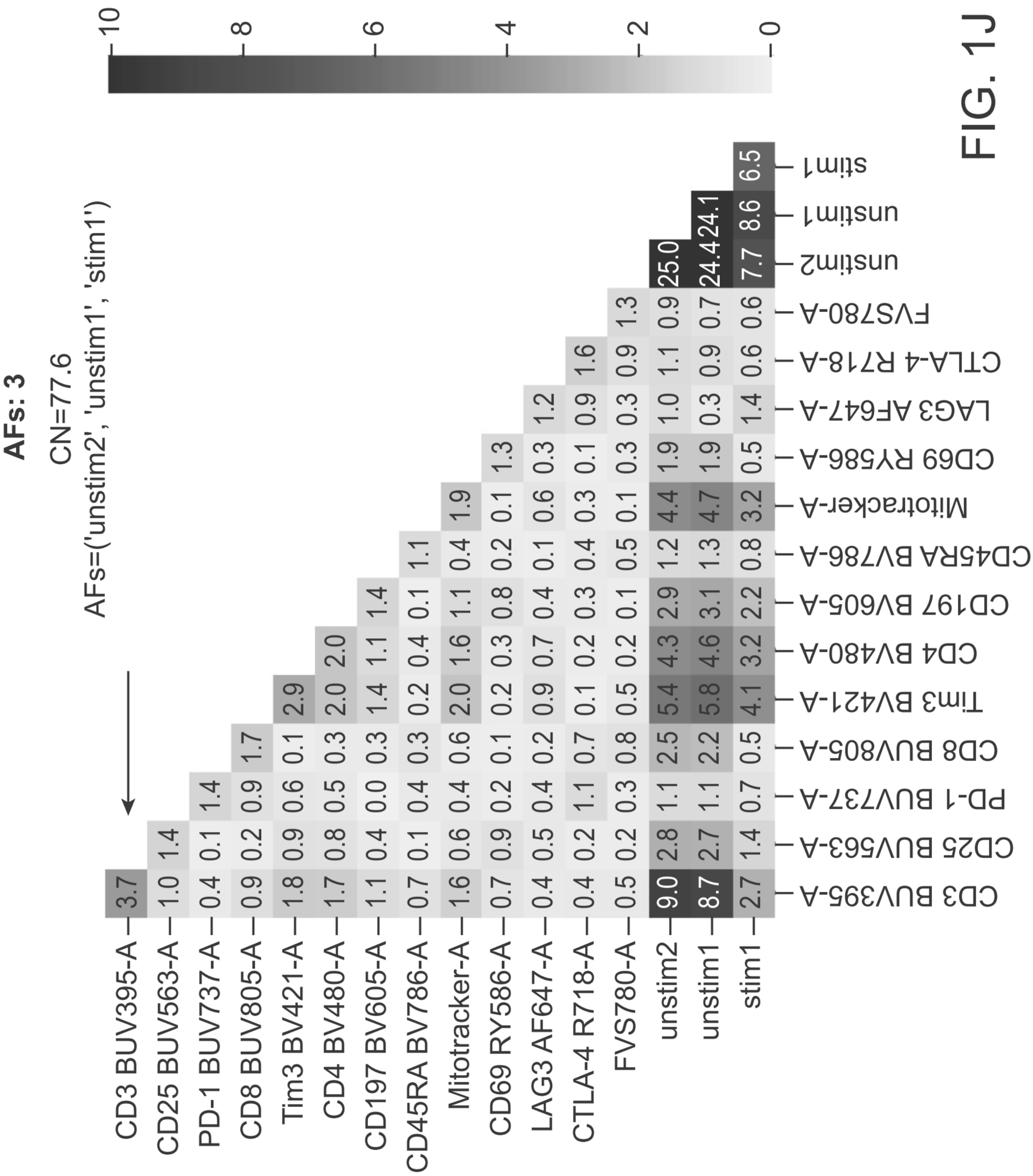
AFs: 3
CN=77.6
AFs=('unstim2', 'unstim1', 'stim1')
CD3 BUV395-A
CD25 BUV563-A
PD-1 BUV737-A
CD8 BUV805-A
Tim3 BV421-A
CD4 BV480-A
CD197 BV605-A
CD45RA BV786-A
Mitotracker-A
CD69 RY586-A
LAG3 AF647-A
CTLA-4 R718-A
FVS780-A
unstim2
unstim1
stim1
10
8
6
4
2
0

FIG. 1J (Cont. 3)

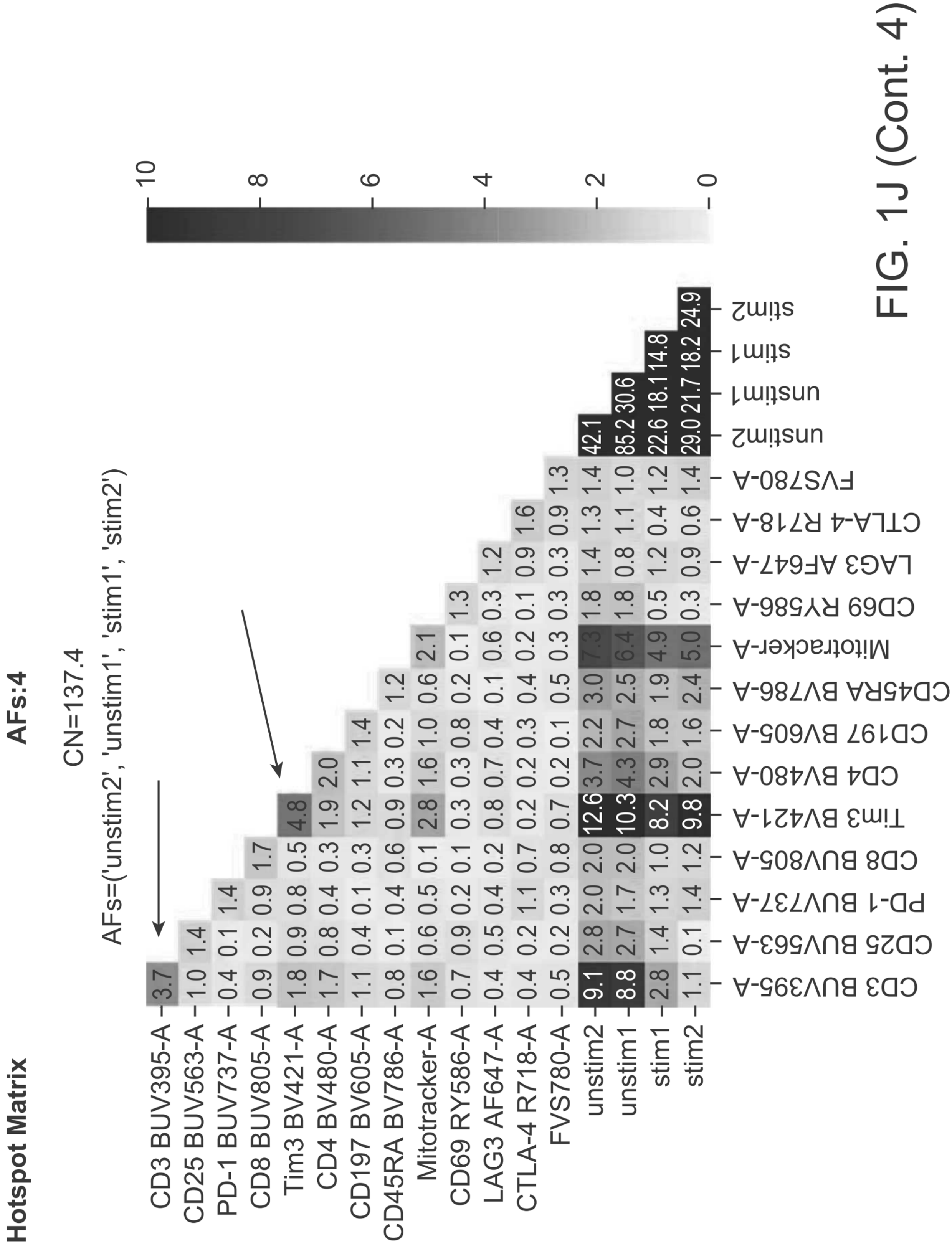
Hotspot Matrix
AFs:4
CN=137.4
AFs=('unstim2', 'unstim1', 'stim1', 'stim2')
CD3 BUV395-A
CD25 BUV563-A
PD-1 BUV737-A
CD8 BUV805-A
Tim3 BV421-A
CD4 BV480-A
CD197 BV605-A
CD45RA BV786-A
Mitotracker-A
CD69 RY586-A
LAG3 AF647-A
CTLA-4 R718-A
FVS780-A
unstim2
unstim1
stim1
stim2
0
2
4
6
8
10

FIG. 1J (Cont. 4)

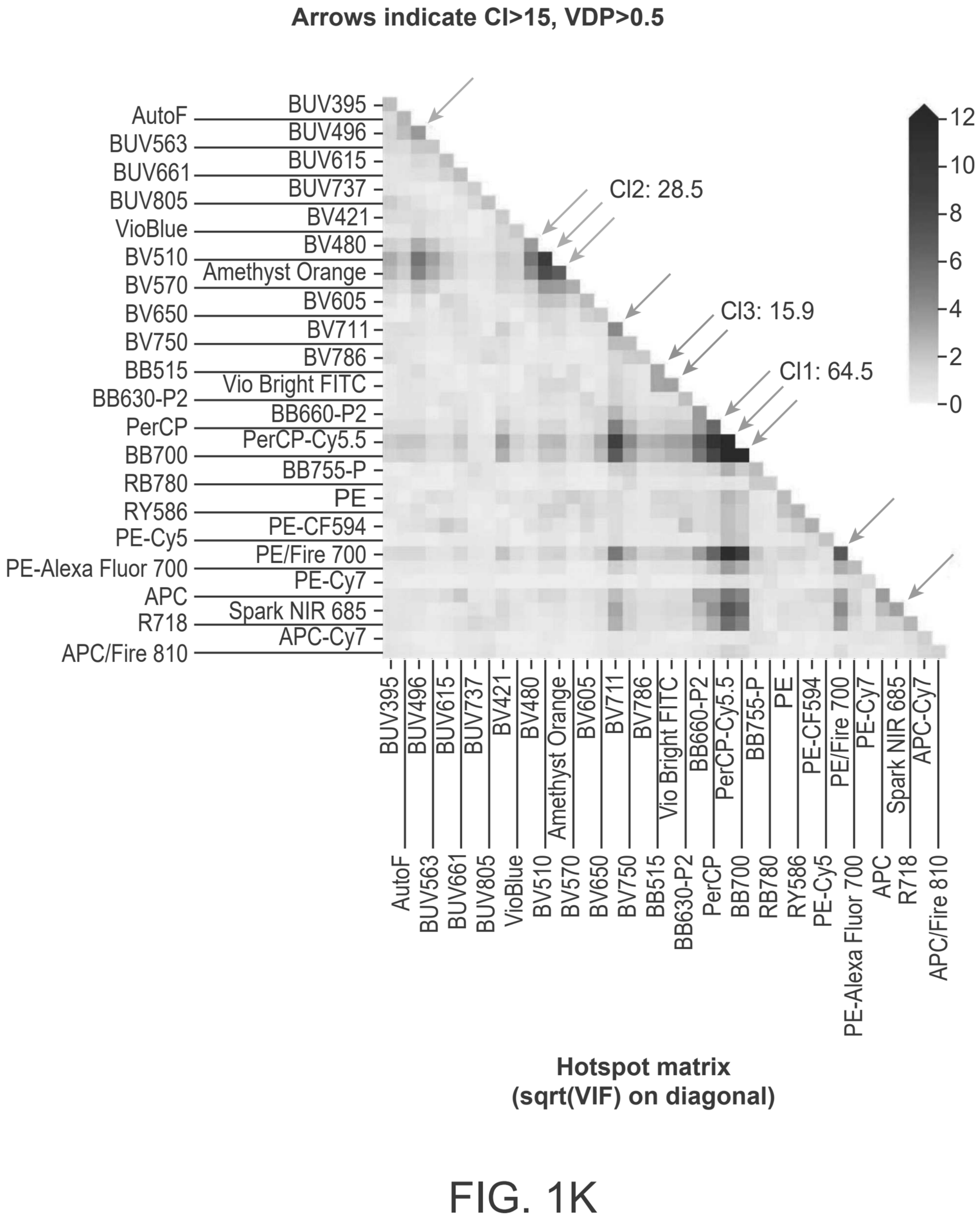

Arrows indicate CI>15, VDP>0.5
CI2: 28.5
CI3: 15.9
CI1: 64.5
12
10
8
6
4
2
0
AutoF
BUV563
BUV661
BUV805
VioBlue
BV510
BV570
BV650
BV750
BB515
BB630-P2
PerCP
BB700
RB780
RY586
PE-Cy5
PE-Alexa Fluor 700
APC
R718
APC/Fire 810
BUV395
BUV496
BUV615
BUV737
BV421
BV480
Amethyst Orange
BV605
BV711
BV786
Vio Bright FITC
BB660-P2
PerCP-Cy5.5
BB755-P
PE
PE-CF594
PE/Fire 700
PE-Cy7
Spark NIR 685
APC-Cy7
Hotspot matrix
(sqrt(VIF) on diagonal)


FIG. 1K

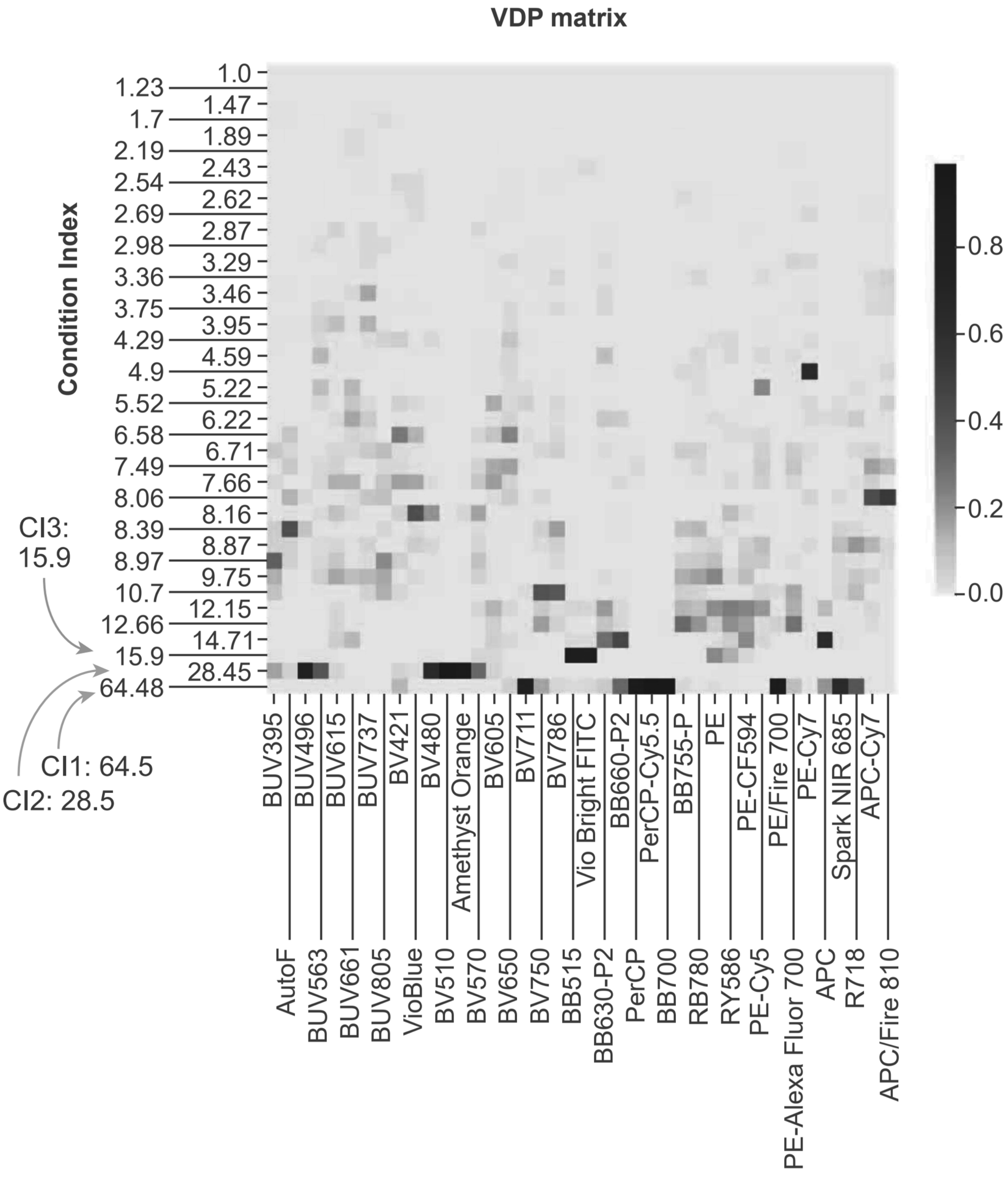
VDP matrix
Condition Index
1.0
1.23
1.47
1.7
1.89
2.19
2.43
2.54
2.62
2.69
2.87
2.98
3.29
3.36
3.46
3.75
3.95
4.29
4.59
4.9
5.22
5.52
6.22
6.58
6.71
7.49
7.66
8.06
8.16
8.39
8.87
8.97
9.75
10.7
12.15
12.66
14.71
15.9
28.45
64.48
CI3:
15.9
CI1: 64.5
CI2: 28.5
0.8
0.6
0.4
0.2
0.0
BUV395
AutoF
BUV496
BUV563
BUV615
BUV661
BUV737
BUV805
BV421
VioBlue
BV480
BV510
Amethyst Orange
BV570
BV605
BV650
BV711
BV750
BV786
BB515
Vio Bright FITC
BB630-P2
BB660-P2
PerCP
PerCP-Cy5.5
BB700
BB755-P
RB780
PE
RY586
PE-CF594
PE-Cy5
PE/Fire 700
PE-Alexa Fluor 700
PE-Cy7
APC
Spark NIR 685
R718
APC-Cy7
APC/Fire 810
Fluorochrome

FIG. 1K (Cont.)

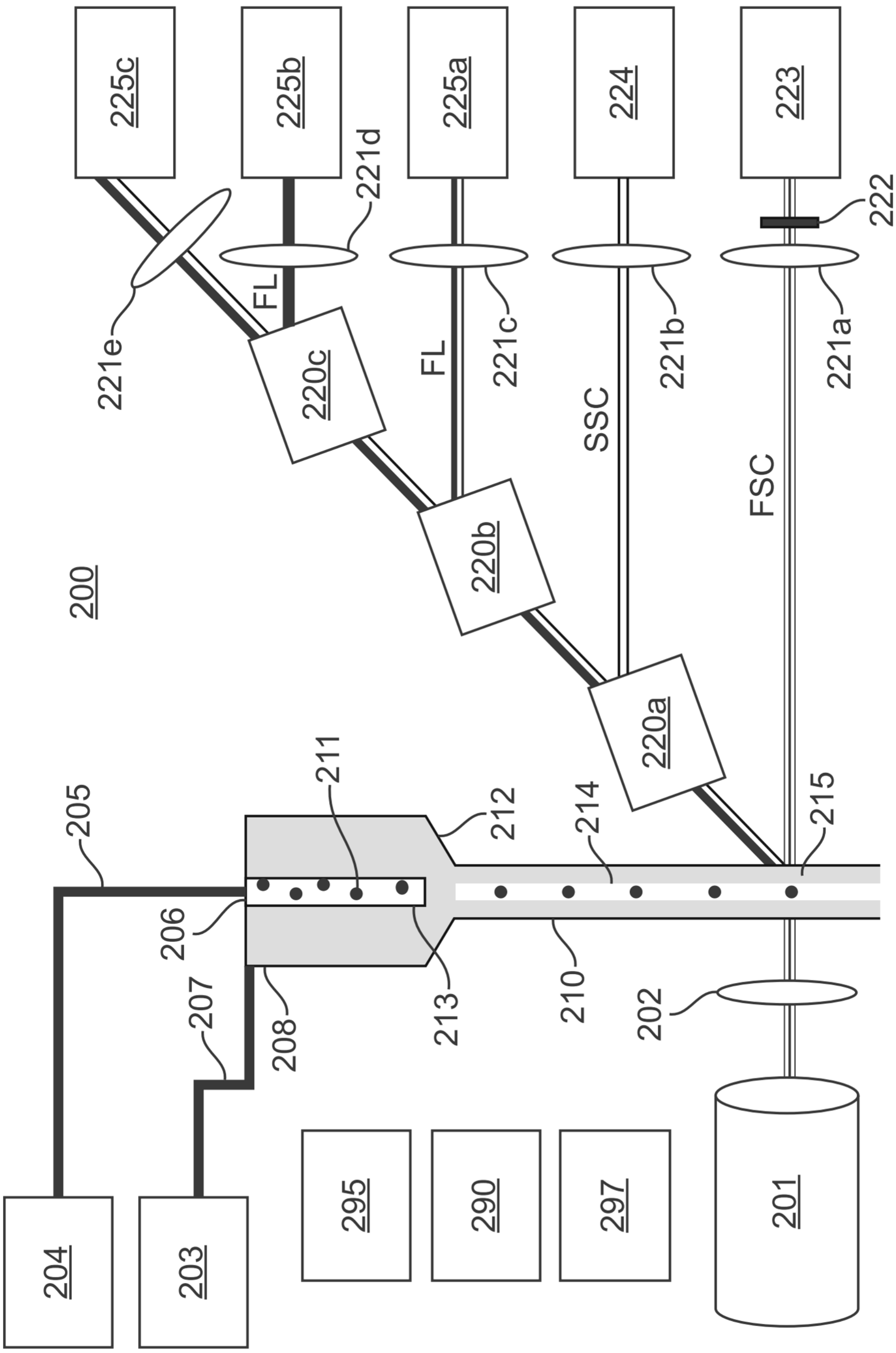
200
201
202
203
204
205
206
207
208
210
211
212
213
214
215
220a
220b
220c
221a
221b
221c
221d
221e
222
223
224
225a
225b
225c
290
295
297
FSC
SSC
FL
FL

FIG. 2

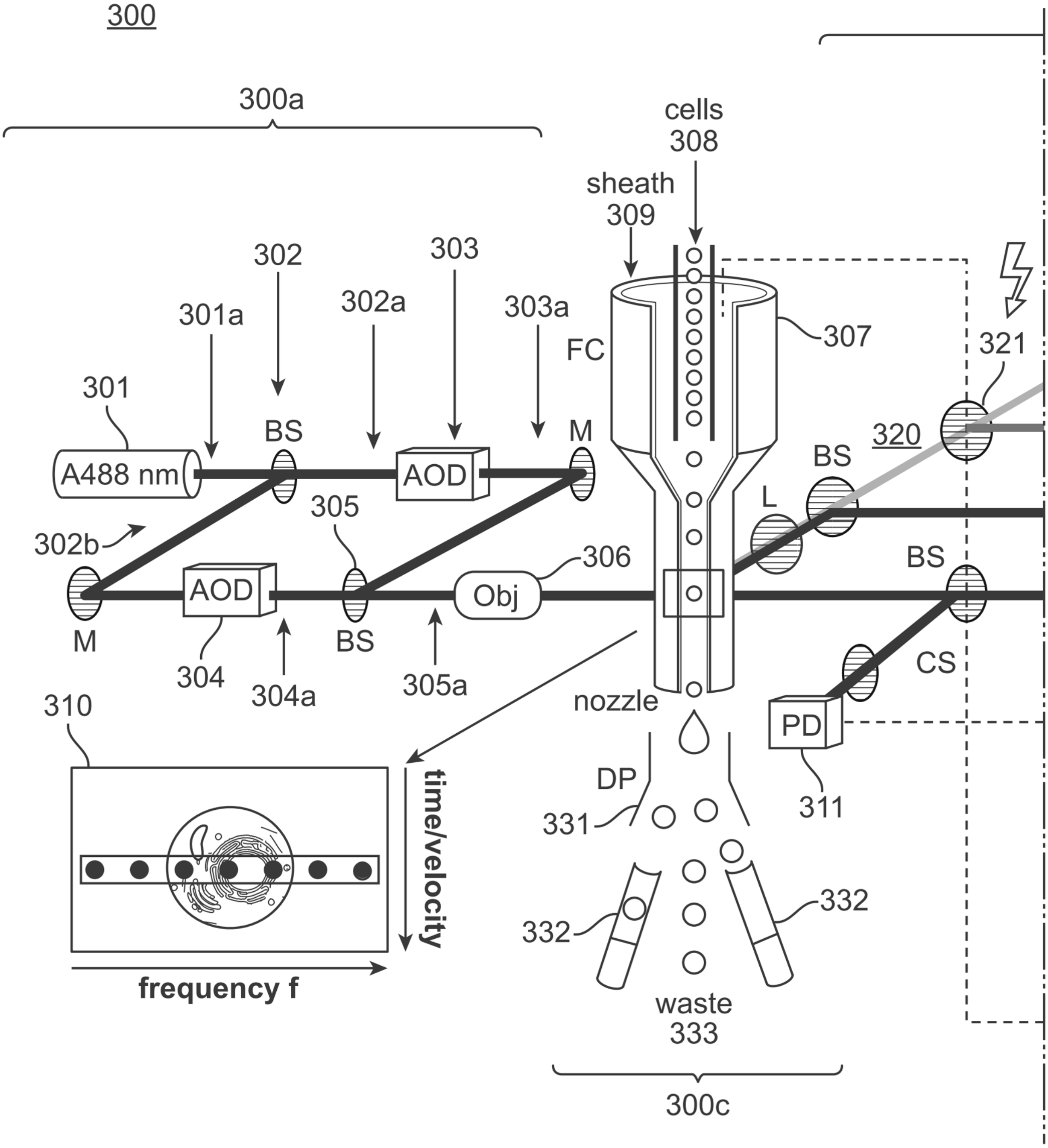
300
300a
cells
308
sheath
309
302
303
301a
302a
303a
FC
307
321
301
BS
M
320
A488 nm
AOD
BS
305
L
302b
306
BS
AOD
Obj
M
BS
CS
304
304a
305a
310
nozzle
PD
DP
311
331
time/velocity
332
332
frequency f
waste
333
300c

FIG. 3

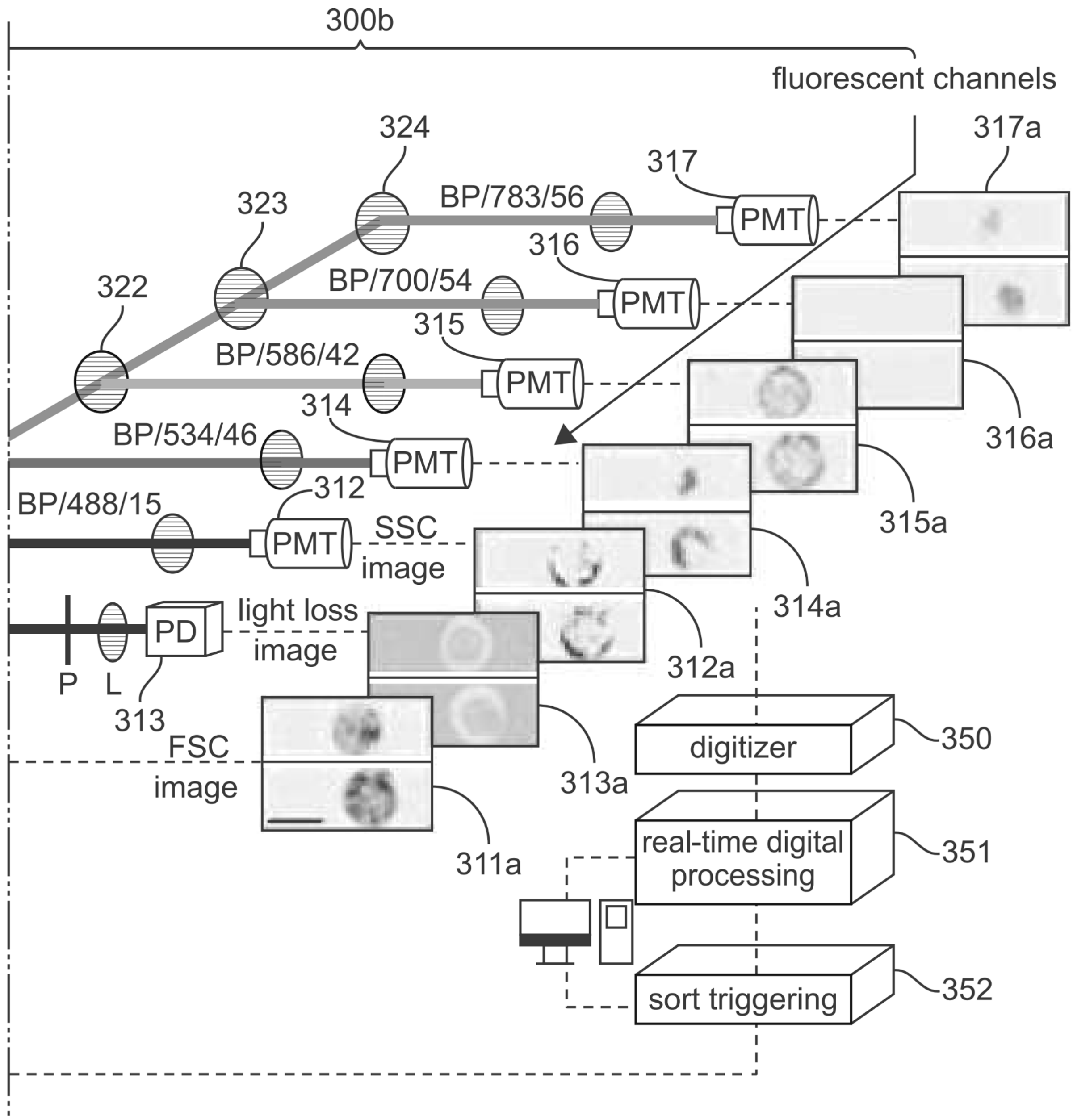
300b
fluorescent channels
324
323
322
317
317a
BP/783/56
PMT
316
BP/700/54
PMT
315
BP/586/42
PMT
314
BP/534/46
PMT
312
BP/488/15
PMT
SSC
image
PD
light loss
image
P
L
313
FSC
image
316a
315a
314a
312a
313a
311a
digitizer
350
real-time digital
processing
351
sort triggering
352

FIG. 3 (Cont.)

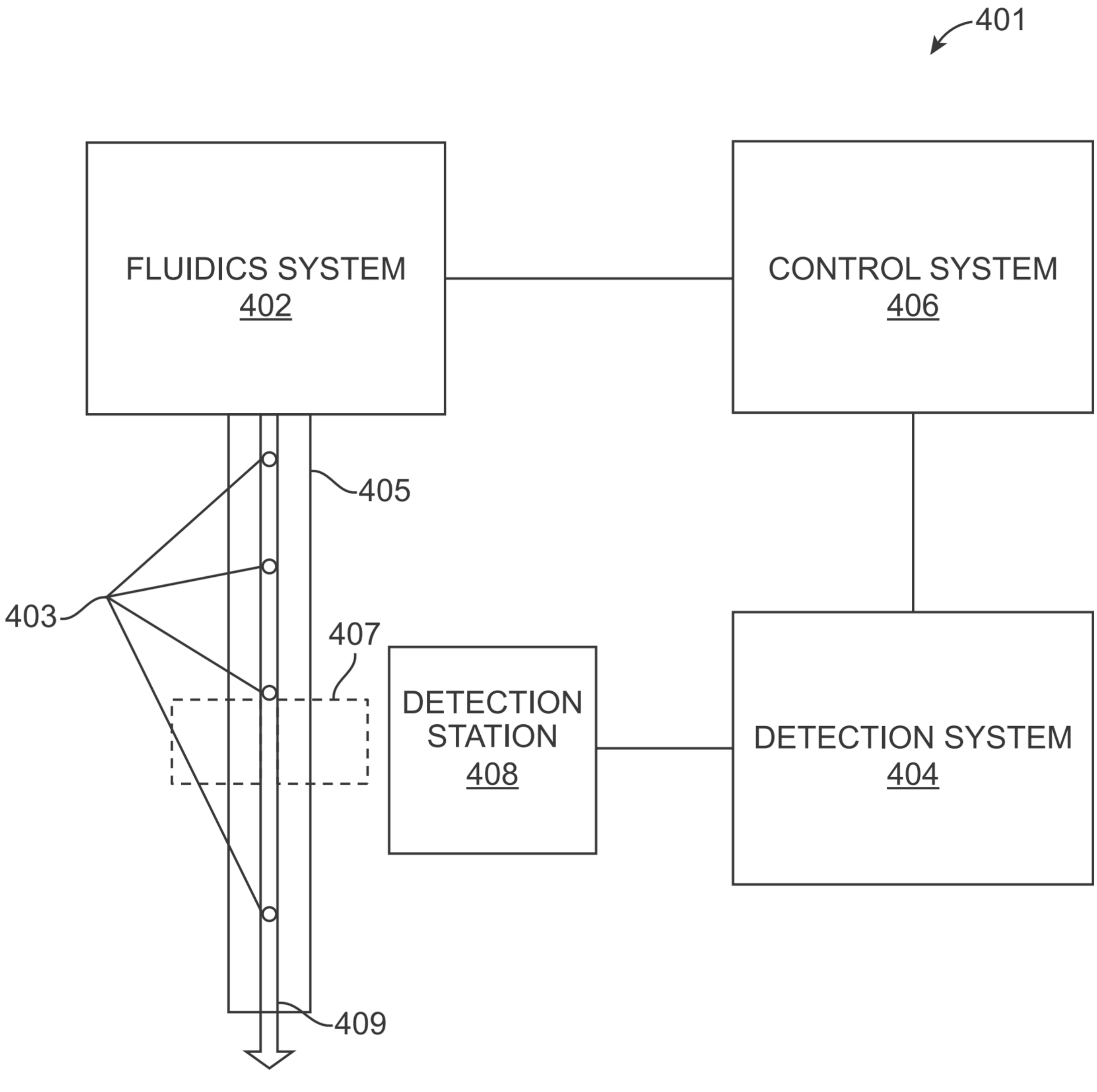
401
FLUIDICS SYSTEM
402
CONTROL SYSTEM
406
405
403
407
DETECTION
STATION
408
DETECTION SYSTEM
404
409

FIG. 4

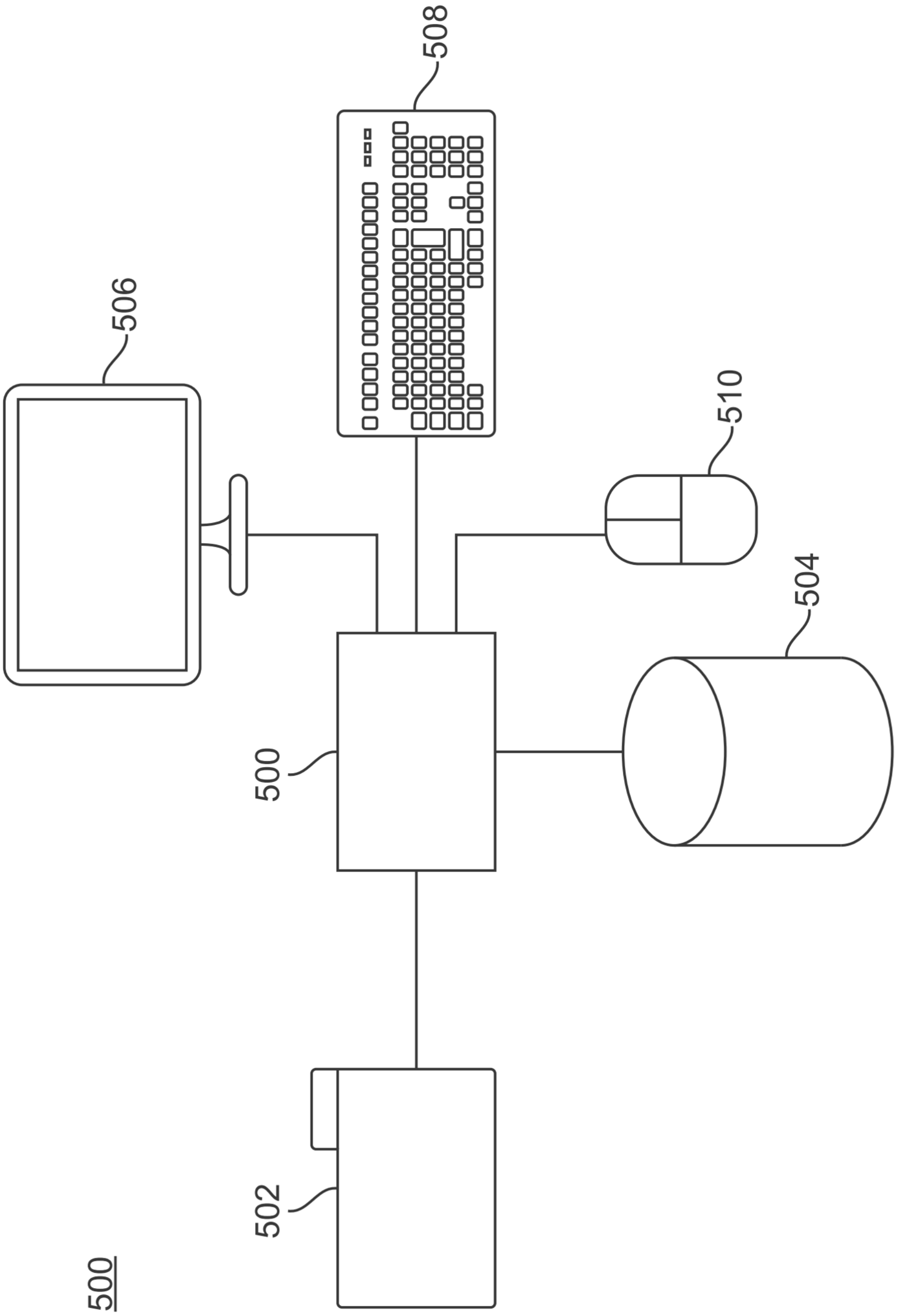


FIG. 5

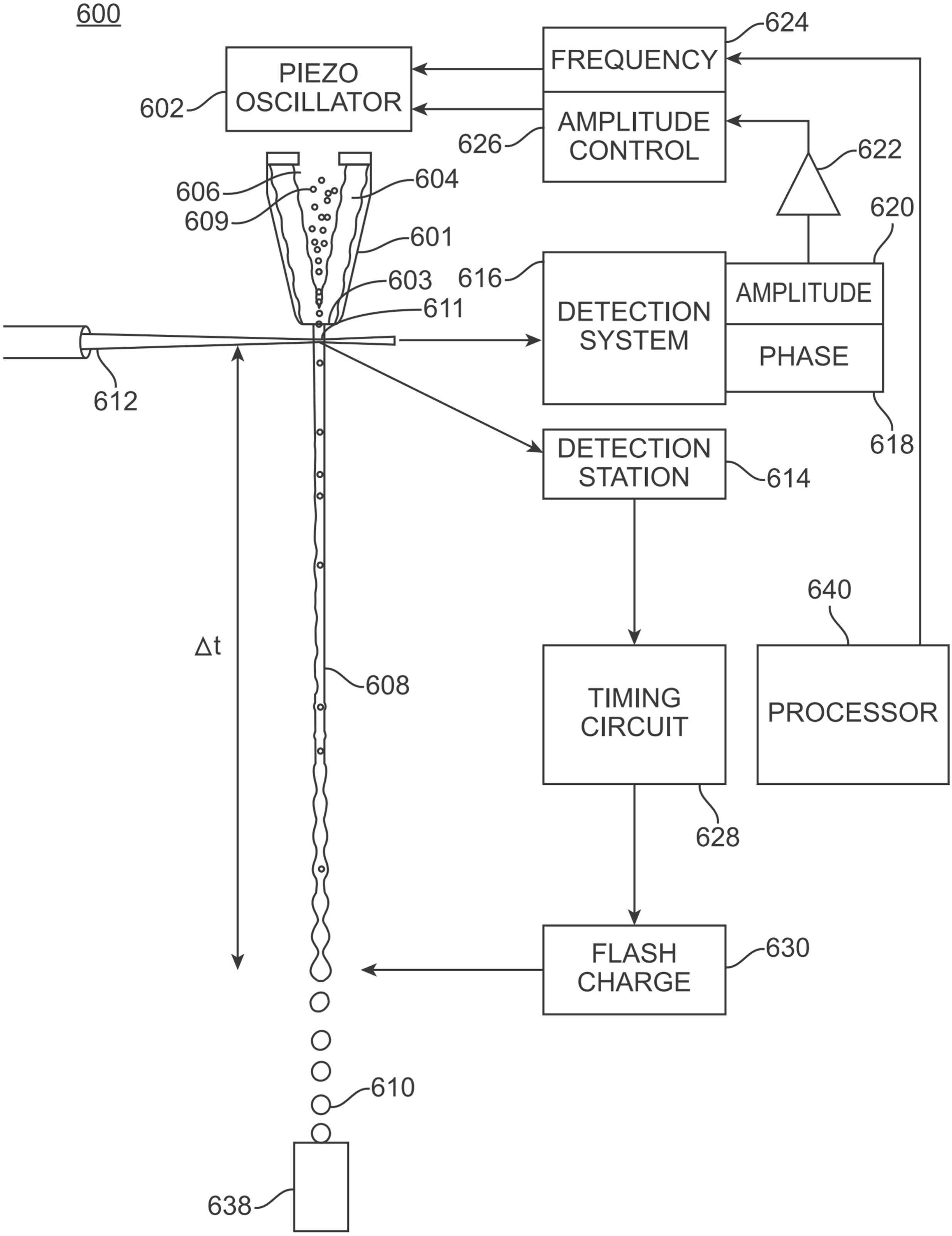
600
PIEZO OSCILLATOR
602
FREQUENCY
624
AMPLITUDE CONTROL
626
622
620
606
609
604
601
603
611
616
DETECTION SYSTEM
AMPLITUDE
PHASE
612
618
DETECTION STATION
614
640
Δt
608
TIMING CIRCUIT
PROCESSOR
628
FLASH CHARGE
630
610
638

FIG. 6A

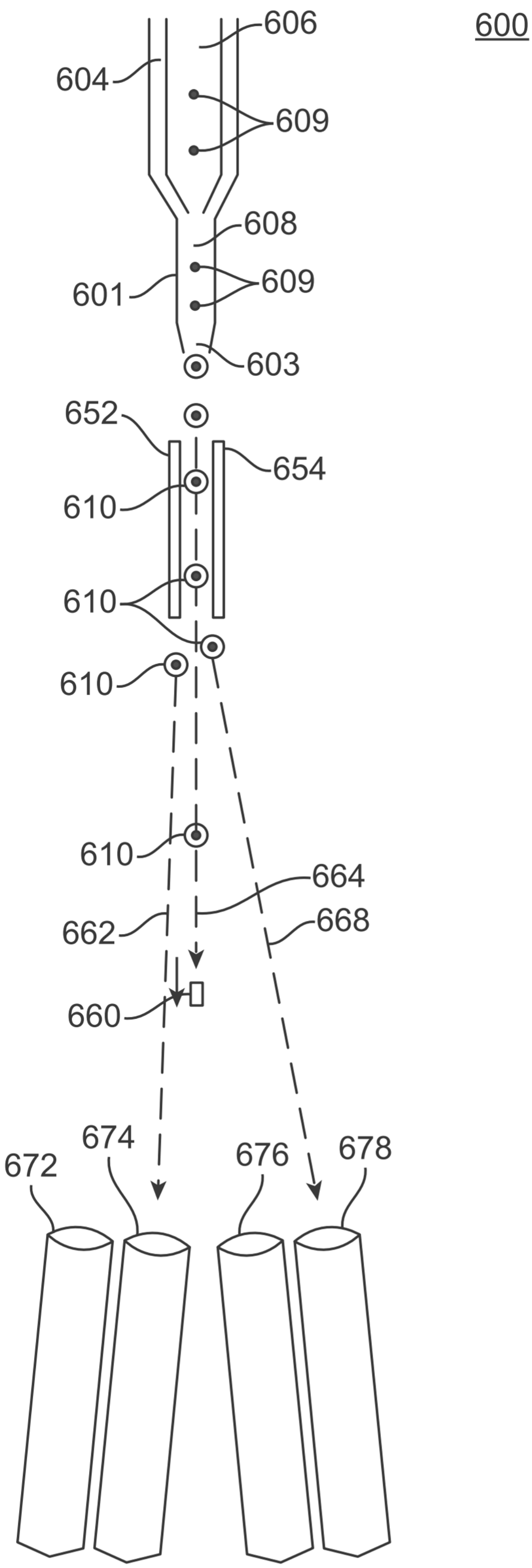
600
606
604
609
608
601
609
603
652
654
610
610
610
610
664
662
668
660
672
674
676
678

FIG. 6B

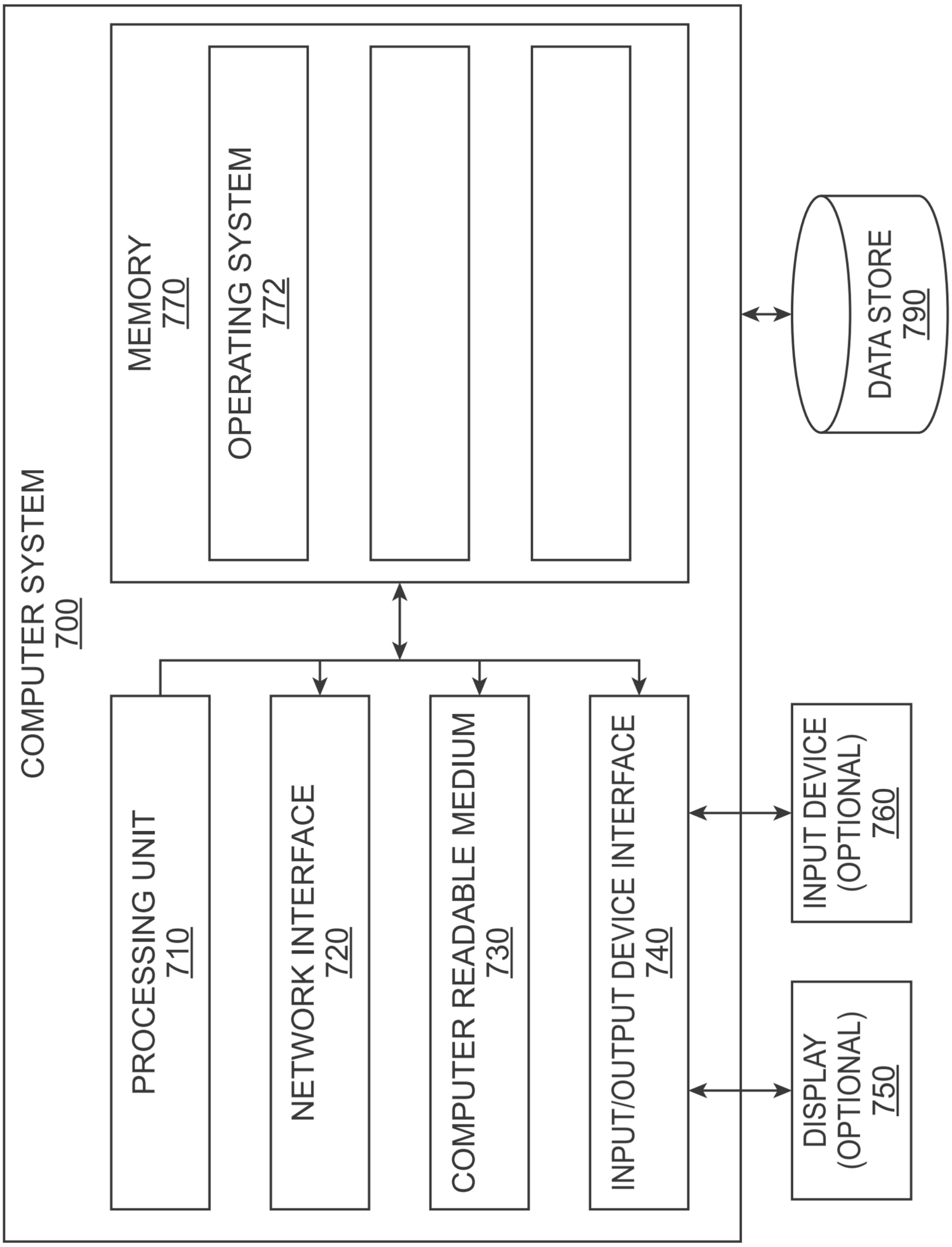
COMPUTER SYSTEM
700
MEMORY
770
OPERATING SYSTEM
772
PROCESSING UNIT
710
NETWORK INTERFACE
720
COMPUTER READABLE MEDIUM
730
INPUT/OUTPUT DEVICE INTERFACE
740
DATA STORE
790
INPUT DEVICE
(OPTIONAL)
760
DISPLAY
(OPTIONAL)
750

FIG. 7

Europäisches Patentamt
European Patent Office
Office européen des brevets

# EUROPEAN SEARCH REPORT

Application Number
EP 25 20 9872

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/235203 A1 (BECTON DICKINSON CO [US]) 7 December 2023 (2023-12-07)<br>* page 12, lines 18-31; figures 2-6,9 *<br>----- | 1-15 | INV.<br>G01N15/1429<br>G01N15/14 |
| X | US 2023/243735 A1 (MAGE PETER [US] ET AL) 3 August 2023 (2023-08-03)<br>* paragraphs [0038], [0043]; figures 1-4 *<br>----- | 1-15 | |
| X | WO 2023/276254 A1 (SONY GROUP CORP [JP]) 5 January 2023 (2023-01-05)<br>* figure 5 *<br>* paragraphs [0061], [0085] - [0086] *<br>----- | 1-15 | |

TECHNICAL FIELDS SEARCHED (IPC)

G01N

The present search report has been drawn up for all claims

1

| Place of search | Date of completion of the search | Examiner |
|---|---|---|
| The Hague | 17 March 2026 | Giráldez Sánchez, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 25 20 9872

This annex lists the patent family members relating to the patent documents cited in the above-mentioned European search report. The members are as contained in the European Patent Office EDP file on
The European Patent Office is in no way liable for these particulars which are merely given for the purpose of information.

17-03-2026

| Patent document cited in search report | Publication date | Patent family member(s) | Publication date |
|---|---|---|---|
| WO 2023235203 A1 | 07-12-2023 | CN 119422203 A | 11-02-2025 |
| | | EP 4533465 A1 | 09-04-2025 |
| | | JP 2025523754 A | 25-07-2025 |
| | | US 2023393049 A1 | 07-12-2023 |
| | | WO 2023235203 A1 | 07-12-2023 |
| US 2023243735 A1 | 03-08-2023 | CN 118805075 A | 18-10-2024 |
| | | EP 4473289 A1 | 11-12-2024 |
| | | JP 2025508346 A | 26-03-2025 |
| | | KR 20240150455 A | 15-10-2024 |
| | | US 2023243735 A1 | 03-08-2023 |
| | | US 20260002863 A1 | 01-01-2026 |
| | | WO 2023146658 A1 | 03-08-2023 |
| WO 2023276254 A1 | 05-01-2023 | DE 112022003308 T5 | 18-04-2024 |
| | | JP WO2023276254 A1 | 05-01-2023 |
| | | US 2024361245 A1 | 31-10-2024 |
| | | WO 2023276254 A1 | 05-01-2023 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 63712319
- US 9423353 B
- US 9784661 B
- US 9983132 B
- US 10006852 B
- US 10036699 B
- US 10078045 B
- US 10222316 B
- US 10288546 B
- US 10324019 B
- US 10408758 B
- US 10451538 B
- US 10620111 B
- US 10684211 B
- US 10845295 B
- US 10935482 B
- US 10935485 B
- US 11105728 B
- US 11280718 B
- US 11327016 B
- US 11366052 B
- US 11371937 B
- US 11692926 B
- US 11630053 B
- US 11774343 B
- US 11940369 B
- US 11946851 B
- US 20040142344 A, Gaylord
- US 20080293164 A
- US 20080064042 A
- US 20100136702 A
- US 20110256549 A
- US 20120028828 A
- US 20120252986 A
- US 20130190193 A
- US 20160025735 A
- US 7065286 B
- US 9575162 B
- US 20230243735 A
- US 20220341838
- US 10663476 B
- US 10613017 B
- US 10605713 B
- US 10585031 B
- US 10578542 B
- US 10578469 B
- US 10481074 B
- US 10302545 B
- US 10145793 B
- US 10113967 B
- US 9952076 B
- US 9933341 B
- US 9726527 B
- US 9453789 B
- US 9200334 B
- US 9097640 B
- US 9095494 B
- US 9092034 B
- US 8975595 B
- US 8753573 B
- US 8233146 B
- US 8140300 B
- US 7544326 B
- US 7201875 B
- US 7129505 B
- US 6821740 B
- US 6813017 B
- US 6809804 B
- US 6372506 B
- US 5700692 A
- US 5643796 A
- US 5627040 A
- US 5620842 A
- US 5602039 A
- US 4987086 A
- US 4498766 A
- US 20170299493 A
- US 20200256781 A
- US 20210404943 A
- US 7679039 B

### Non-patent literature cited in the description


- **DIEBOLD et al.** *Nature Photonics*, 2013, vol. 7 (10), 806-810
- **GAYLORD et al.** *J. Am. Chem. Soc.*, 2001, vol. 123 (26), 6417-6418
- **FENG et al.** *Chem. Soc. Rev.*, 2010, vol. 39, 2411-2419
- **TRAINA et al.** *J. Am. Chem. Soc.*, 2011, vol. 133 (32), 12600-12607

- **HORN, R. A.** ; **JOHNSON, C. R.** *Matrix analysis*, 2012
- **GOLUB, G. H.** ; **VAN LOAN, C. F.** Matrix Computations. Johns Hopkins, 1996
- Flow Cytometry: A Practical Approach. Oxford Univ. Press, 1997
- Flow Cytometry Protocols. Methods in Molecular Biology. Humana Press, 1997
- Practical Flow Cytometry. Wiley-Liss, 1995
- **VIRGO et al.** *Ann Clin Biochem.*, January 2012, vol. 49 (1), 17-28
- **LINDEN**. *Semin Throm Hemost.*, October 2004, vol. 30 (5), 502-11
- **ALISON et al.** *J Pathol*, December 2010, vol. 222 (4), 335-344
- **HERBIG et al.** *Crit Rev Ther Drug Carrier Syst.*, 2007, vol. 24 (3), 203-255
- **SCHRAIVOGEL et al.** High-speed fluorescence image-enabled cell sorting. *Science*, 2022, vol. 375 (6578), 315-320